# EUROPÄISCHE PATENTANMELDUNG

(11) **EP 4 664 793 A2**
(43) Veröffentlichungstag der Anmeldung: **17.12.2025**
(21) Anmeldenummer: 25211638.9
(22) Anmeldetag: 25.10.2022
(51) Int. Cl.: H04B 10/70

(54) **AUTOMOBILER PROZESSOR MIT PQK VERSCHLÜSSELUNGSUNTERSTÜTZUNG**

(30) Priorität: 27.10.2021 DE 102021128005; 18.11.2021 DE 102021130107; 02.05.2022 DE 102022110713; 04.10.2022 DE 102022125574; 05.10.2022 DE 102022125617; 06.10.2022 DE 102022125768
(62) Teilanmeldung aus: 22809117.9
(71) Anmelder: Elmos Semiconductor SE, 51379 Leverkusen (DE)
(72) Erfinder: Laubrock, Jan, 46414 Rhede (DE); Rotter, Thomas, 91077 Neunkirchen am Brand (DE); Kölbel, Julia, 44137 Dortmund (DE); Lammers, Christian, 48249 Dülmen-Rorup (DE)
(74) Vertreter: dompatent

(57) **Zusammenfassung**

Die Erfindung betrifft einen sicheren Mikrocontroller (1) zur Steuerung von Vorrichtungen im Automobil mit einem Halbleitersubstrat, Speicherelementen, zumindest einem internen Bus (2), zumindest einem 8/16/32/64-Bit-Microkontrollerkern, einer oder mehreren Datenschnittstellen und mit zumindest einem quantenprozessbasierten Generator (15) für echte Zufallszahlen. Die Speicherelemente, die Datenschnittstelle, der quantenprozessbasierte Generator (15) und der der Mikrocontrollerkern (16) sind mit dem internen Bus (2) verbunden. Der quantenprozessbasierte Generator (15) erzeugt auf Anfrage des Mikrocontrollerkerns (16) eine Zufallszahl und stellt diese bereit. Der Mikrocontrollerkern (16) erzeugt mit Hilfe eines Programms aus einem oder mehreren seiner Speicherelemente und mit Hilfe der Zufallszahl einen Schlüssel. Der Mikrocontrollerkern (16) verschlüsselt und entschlüsselt mit Hilfe eines Programms aus einem oder mehreren seiner Speicherelemente und mit Hilfe des Schlüssels Daten, die er über die Datenschnittstelle mit Vorrichtungen außerhalb des sicheren Mikrocontrollers (1) austauscht. Das Halbleitersubstrat umfasst die hier aufgeführten Teilvorrichtungen des sicheren Mikrocontroller (1) einstückig.

## Beschreibung

### Anmeldungsverweis

Die vorliegende PCT-Anmeldung nimmt die Prioritäten der nationalen deutschen Patentanmeldungen 10 2021 128 005.2 vom 27. Oktober 2021, DE 10 2021 130 107.6 vom 18. November 2021, DE 10 2022 110 713.2 vom 2. Mai 2022, DE 10 2022 125 574.3 vom 4. Oktober 2022, DE 10 2022 125 617.0 vom 5. Oktober 2022 und DE 10 2022 125 768.1 vom 6. Oktober 2022 in Anspruch, deren Inhalte hiermit durch Bezugnahme zum Gegenstand der vorliegenden Anmeldung gehören.

### Feld der Erfindung

Die Erfindung betrifft einen Mikrocontroller, der unter anderem mindestens einen quantenprozessbasierten Generator für echte Zufallszahlen (Englisch: Quantum Random Number Generator: QRNG) als Zufallszahlengenerator insbesondere für die Verschlüsselung umfasst.

### Allgemeine Einleitung und Motivation

Die Automobilindustrie und andere Industriezweige sehen sich zunehmend verschiedensten Piraterieangriffen ausgesetzt. Die Fälscher kopieren die Ersatzteile und Produkte der betroffenen industriellen Produzenten und nutzen in der Regel deren Markennamen. Ein weiterer Gefahrenpunkt sind Hacker-Angriffe z.B. mit Auswirkung auf die Übertragung von Daten innerhalb der Produkte oder zum Produkt und von diesem zurück, wie z.B. bei der Car-to-Car- oder Car-to-X-Kommunikation oder bei der Datenkommunikation innerhalb von Komponenten eines Fahrzeugs, was insbesondere in autonom agierenden Systemen sowie bei der Datenkommunikation von extern mit derartigen autonomen Systemen und von diesen nach extern von besonderer Relevanz hinsichtlich des Schutzes gegen Hacker-Angriffe ist.

Die Eigenschaften der Entropie gegenwärtig eingesetzter Zufallszahlengeneratoren für die Datenverschlüsselung in derartigen Systemen sind zumeist unzureichend. Im Stand der Technik sind quantenprozessbasierte Generatoren für echte Zufallszahlen (Englisch: Quantum Random Number Generator: QRNG) bekannt, die jedoch nur schwer integrierbar sind oder eine schlechte Quantenausbeute zeigen.

Einzelheiten von Daten- und Signalverarbeitungseinheiten mit Mikrocontrollern und quantenprozessbasierten Generatoren für die Erzeugung von Zufallszahlen sind z.B. beschrieben in
- US-B-10 802 800
- Session key. In: Wikipedia, the free encyclopedia. Bearbeitungsstand: 01.10.2020. URL: https://en.wikipedia.org/w/index.php?title=Session key& oldid=981281879 [abgerufen am 31.05.2022];
- Integrated circuit. In: Wikipedia, the free encyclopedia. Bearbeitungsstand: 12.10.2021. URL: https://en.wikipedia.org/w/index.php?title=Integrated circuit& oldid=1049603915 [abgerufen am 31.05.2022];
- BIOS. In: Wikipedia, the free encyclopedia. Bearbeitungsstand: 24.10.2021. URL: https://en. wikipedia.org/w/index.php?title=BIOS&oldid=1051566527 [abgerufen am 31.05.2022];
- BURRI, S. [et al.]: SPADs for Quantum Random Number Generators and beyond. In: 19th Asia and South Pacific Design Automation Conference (ASP-DAC), 20-23 January 2014, Singapore, IEEE, S. 788-794. DOI: 10.1109/ASPDAC.2014.6742986;
- Fabio Acerbi, Nicola Massari, Leonardo Gasparini, Alessandro Tomasi, Nicola Zorzi, Giorgio Fontana, Lorenzo Pavesi, alberto Gola in "Structures and Methods for fullyintegrated Quantum Random Number Generators", IEEE Journal of selected topics in quantum electronics, Vol. 26, No. 3, May/June 2020.

### Aufgabe

Aufgabe der Erfindung ist es, eine Vorrichtung und ein Verfahren zur Erzeugung echter Zufallszahlen auf Basis von optischen Quantenprozessen anzugeben.

### Lösung der Aufgabe

Zur Lösung dieser Aufgabe wird mit der Erfindung ein Mikrocontroller zur Steuerung von Vorrichtungen im Automobil vorgeschlagen, wobei der Mikrocontroller versehen ist mit
- einem Halbleitersubstrat,
- Speicherelementen,
- mindestens einem internen Bus,
- mindestens Microkontrollerkern,
- einer oder mehreren Datenschnittstellen und
- mindestens einem quantenprozessbasierten Generator für echte Zufallszahlen
- wobei die Speicherelemente mit dem internen Bus verbunden sind,
- wobei die Datenschnittstelle mit dem internen Bus verbunden ist,
- wobei der quantenprozessbasierte Generator mit dem internen Bus verbunden ist und
- wobei der Mikrocontrollerkern mit dem internen Bus verbunden ist,
- wobei der quantenprozessbasierte Generator insbesondere auf Anfrage des Mikrocontrollerkerns eine Zufallszahl erzeugt,
- wobei der quantenprozessbasierte Generator diese Zufallszahl bereitstellt,
- wobei der Mikrocontrollerkern mit Hilfe eines Programms aus einem oder mehreren seiner Speicherelemente und mit Hilfe der Zufallszahl einen Schlüssel erzeugt,
- wobei der Mikrocontrollerkern mit Hilfe eines Programms aus einem oder mehreren seiner Speicherelemente und mit Hilfe des Schlüssels Daten verschlüsselt und entschlüsselt, die er über die Datenschnittstelle mit externen Vorrichtungen oder intern austauscht,
- wobei das Halbleitersubstrat die hier aufgeführten Teilvorrichtungen des sicheren Mikrocontroller einstückig umfasst,
- wobei der quantenprozessbasierte Generator mindestens eine erste SPAD-Diode als Lichtquelle für ein optisches Quantensignal umfasst,
- wobei der quantenprozessbasierte Generator die mindestens eine zweite SPAD-Diode als Fotodetektor für den Empfang des optischen Quantensignals umfasst,
- wobei der quantenprozessbasierte Generator die mindestens eine Verarbeitungsschaltung umfasst,
- wobei der quantenprozessbasierte Generator den mindestens einen optischen Lichtwellenleiter zur optischen Kopplung der mindestens einen ersten SPAD-Diode mit der mindestens einen zweiten SPA-Diode umfasst,
- wobei der quantenbasierte Generator eine Betriebsschaltung zur Versorgung der mindestens einen ersten SPAD-Diode mit elektrischer Energie zur Emission von Licht aufweist und
- wobei der quantenbasierte Generator eine Verarbeitungsschaltung zur Erfassung des Signals der mindestens einen zweiten SPAD-Diode und zur Bildung einer Zufallszahl aus dem Signal der mindestens einen zweiten SPAD-Diode sowie zur Bereitstellung der Zufallszahl für den Mikrocontrollerkern aufweist.

Ein für die Erfindung wesentliches Merkmal des Mikrocontrollers ist der quantenprozessbasierte Generator (quantenprozessbasierte Entropie-Quelle) für die Erzeugung von echten Zufallszahlen. Dieser Generator basiert auf einem optischen Quantenprozess, und zwar auf der Kombination stimulierter und spontaner Photonenemissionen in mindestens einer zweiten bzw. Empfänger-SPAD-Diode. Diese Empfänger-SPAD-Diode ist über einen optischen Wellenleiter mit mindestens einer ersten oder Sender-SPAD-Diode gekoppelt. Beide SPAD-Dioden werden im Geigermodus betrieben.

Ein Merkmal der Neuerung besteht in der Ausbildung des optischen Lichtwellenleiters als zumindest Teil bzw. Abschnitt einer oder mehrerer Dielektrikumsschichten, die als Isolationsschichten Bestandteil des Metallisierungsstapels ist bzw. sind, welcher seinerseits auf dem Halbleitermaterial ausgebildet ist, in dem die ersten und zweiten SPAD-Dioden integriert sind. Alternativ kann der optische Lichtwellenleiter auch zwei Halbleitersubstrate miteinander koppeln, in denen jeweils mindestens eine der ersten und mindestens eine der zweiten SPAD-Dioden ausgebildet sind. Bevorzugt allerdings ist die Ausgestaltung des Mikrocontrollers mit einem Halbleitersubstrat, in das sämtliche SPAD-Dioden integriert sind und auf dessen Oberfläche der Lichtwellenleiter angeordnet ist.

Auf Grund der Entstehung spontaner und stimulierter Photonenemissionen der zweiten SPAD-Diode weist deren Emissionssignal extrem schmale Pulse (nachfolgend mit Spikes bezeichnet) auf, die unterschiedliche Höhen aufweisen. Das Emissionssignal weist somit erste Spikes auf, die als Folge von Einzelphotonenemissionen entstehen. Zweite Spikes im Emissionssignal der zweiten SPAD-Diode, die höher sind als die ersten Spikes, treten dann auf, wenn eine spontane Photonenemission mit einer stimulierten Photonenemission zusammenfällt. Die Entstehung derartiger kombinierter Photonenemissionen ist höchst zufällig, also quantenprozessbasiert, weshalb sich nun die Auswertung der zeitlichen Abfolge des Entstehens zweiter Spikes eignet, um daraus eine echte Zufallszahl zu generieren.

Insoweit ist also in vorteilhafter Weiterbildung der Erfindung vorgesehen, dass das Emissionssignal der mindestens einen zweiten SPAD-Diode erste Spikes sowie zweite Spikes, die größer sind als die ersten Spikes, aufweist, wobei die ersten und die zweiten Spikes jeweils größer als ein vorgebbarer Referenzwert sind, wobei die ersten Spikes auf Grund einer spontanen Photonenemission der mindestens einen zweiten SPAD-Diode ohne gleichzeitig verursachte stimulierte Photonenemission der mindestens einen zweiten SPAD-Diode entstehen und die zweiten Spikes auf Grund des gleichzeitigen Auftretens einer spontanen und einer durch den Empfang eines Photons der mindestens einen ersten SPAD-Diode stimulierten Photonenemission der mindestens einen zweiten SPAD-Diode entstehen, und dass die Verarbeitungsschaltung des quantenprozessbasierten Generators anhand eines Vergleichs der zeitlichen Abstände von zweiten Spikes mit einem Schwellwert oder anhand eines Vergleichs der zeitlichen Abstände von zweiten Spikes untereinander einen ersten logischen Wert oder einen zweiten logischen Wert als Bit für die Erzeugung der Zufallszahl erzeugt.

Gemäß einer Variante der Erfindung wird bei der Erzeugung der echten Zufallszahl dergestalt vorgegangen, dass die Verarbeitungsschaltung den ersten logischen Wert oder den zweiten logischen Wert anhand eines Vergleichs des zeitlichen Abstands von zwei Spikes mit einem Schwellwert erzeugt und dass die Verarbeitungsschaltung den ersten logischen Wert als ein Bit der Zufallszahl ausgibt, wenn der zeitliche Abstand kleiner als der Schwellwert ist, und den zweiten logischen Wert als Bit der Zufallszahl ausgibt, wenn der zeitliche Abstand größer als der Schwellwert ist.

Gemäß einer zweiten Variante der Erzeugung der echten Zufallszahl kann so vorgegangen werden, dass die Verarbeitungsschaltung den ersten logischen Wert oder den zweiten logischen Wert anhand eines Vergleichs der zeitlichen Abstände der zweiten Spikes verschiedener Paare von zweiten Spikes erzeugt und dass die Verarbeitungsschaltung den ersten logischen Wert als ein Bit für die Erzeugung der Zufallszahl ausgibt, wenn der zeitliche Abstand des zuletzt aufgetretenen zweiten Spikes, kleiner als der zeitliche Abstand zwischen z.B. dem vorletzten zweiten Spike und dem vorvorletzten zweiten Spike oder einem anderen Paar von vorherigen zweiten Spikes ist, und den zweiten logischen Wert als ein Bit für die Erzeugung der Zufallszahl ausgibt, wenn der zeitliche Abstand des zuletzt aufgetretenen zweiten Spikes z.B. größer als der zeitliche Abstand zwischen z.B. dem vorletzten zweiten Spike und dem vorvorletzten zweiten Spike oder einem anderen Paar von vorherigen zweiten Spikes ist.

Für beide zuvor beschriebenen Varianten der Erzeugung der echten Zufallszahl gilt, dass dann, wenn beim Vergleich der zeitlichen Abstände mit dem Schwellwert (Variante 1) oder untereinander (Variante 2) auf Gleichheit erkannt wird, dieses Ergebnis für die Verwertung für die Zufallszahl verworfen wird. Alternativ könnte man auch die Ergebnisse der Vergleiche auf Gleichheit ausnutzen, müsste das aber dann rein zufällig als einerseits erster logischer Wert oder andererseits zweiter logischer Wert bewerten.

Der Vollständigkeit halber sei noch erwähnt, dass es in der zweiten bzw. Empfänger-SPAD-Diode auch zu dritten Spikes im Emissionssignal kommen kann, die im Wesentlichen die dreifache Höhe der ersten Spikes aufweisen. Zu derartigen Ereignissen kommt es dann, wenn eine Photonenemission, die durch den Empfang eines Photons der ersten SPAD-Diode stimuliert wird, mit einer spontanen und daraus wiederum stimulierten Photonenemission der zweiten SPAD-Diode zeitlich zusammenfällt. Vorteilhafterweise werden diese "Dreifach-Spikes" nicht verwendet. Insoweit wird also bei der Untersuchung des Emissionssignals jeder zweiten SPAD-Diode deren Signal mit einem vorgegebenen Referenzwertbereich verglichen, innerhalb dessen es liegen muss, um für die Erzeugung der echten Zufallszahl ausgewertet zu werden.

Für die Parallelisierung der Erzeugung der Einzelbits der echten Zufallszahl ist es von Vorteil, wenn mehrere Paare aus einer ersten SPAD-Diode und einer zweiten SPAD-Diode vorgesehen sind, wobei die Emissionssignale der zweiten SPAD-Dioden der Verarbeitungsschaltung zuführbar sind und die Verarbeitungsschaltung anhand des Emissionssignals jeder zweiten SPAD-Diode ein anderes der Bits für die Erzeugung der Zufallszahl ausgibt.

Für die sequentielle Erzeugung der einzelnen Bits der echten Zufallszahl ist grundsätzlich ein Paar aus einer ersten SPAD-Diode und einer zweiten SPAD-Diode ausreichend, wobei die Verarbeitungsschaltung die logischen Werte der Bits für die Erzeugung der Zufallszahl sequentiell ausgibt.

Eine weitere Variante der optischen Kopplung erster und zweiter SPAD-Dioden kann darin gesehen werden, dass eine einzige erste SPAD-Diode und mehrere zweite SPAD-Dioden vorgesehen sind, die optisch mit der einzigen SPAD-Diode gekoppelt sind, wobei die Emissionssignale der zweiten SPAD-Dioden der Verarbeitungsschaltung zuführbar sind und die Verarbeitungsschaltung anhand des Emissionssignals jeder zweiten SPAD-Diode ein anderes der Bits für die Erzeugung der Zufallszahl ausgibt.

Um Funktionsfehler feststellen zu können und um trotz eines Fehlerfalls dennoch eine Zufallszahl erzeugen zu können, können vorteilhafterweise eine Fehlerdetektionseinheit und ein Pseudozufallszahlengenerator vorgesehen sein, wobei die Verarbeitungsschaltung des quantenbasierten Generators von der anhand des Emissionssignals der mindestens einen zweiten SPAD-Diode erfolgenden Ausgabe von Bits für die Erzeugung der Zufallszahl auf die Ausgabe eines durch den Pseudozufallszahlengenerator generierten Bits für die Erzeugung einer Pseudozufallszahl umschaltet, wenn die Fehlerdetektionseinheit einen Fehler in der Funktion der für den optischen quantenbasierten Prozess verantwortlichen Komponenten des quantenprozessbasierten Generators oder einen Fehler von dessen Verarbeitungsschaltung erkennt. Zweckmäßig kann es hierbei sein, wenn die Fehlerdetektionseinheit bei Erkennung eines Fehlers einen insbesondere die Art und/oder den Grund des Fehlers repräsentierendes Fehlersignal ausgibt. Die Fehlerdetektionseinheit erkennt in vorteilhafter Weise nicht nur, dass ein Fehler existiert, sondern auch welche Art von Fehler aufgetreten ist. Die Reaktion des quantenbasierten Generators auf derartige Ereignisse ist applikationsabhängig und kann beispielsweise bedeuten, dass Selbsttests durchgeführt werden. Bevorzugt aber wird für den Fall, dass der quantenbasierte Generator fehlerhaft ist, auf einen Pseudozufallszahlengenerator umgeschaltet, der auf Basis beispielsweise der letzten Bits, die der quantenbasierte Generator vor Erkennung des Fehlers erzeugt hat, eine Pseudozufallszahl erzeugt.

Mögliche Fehlerquellen können sein:
- Störungen von Versorgungsspannungen für einzelne Komponenten des Mikrocontrollers,
- fehlerhafte Signalerzeugung der ersten und/oder zweiten SPAD-Dioden,
- Störungen im Lichtwellenleiter und/oder bei der Ankopplung der ersten SPAD-Dioden und/oder der zweiten SPAD-Dioden an den Lichtwellenleiter,
- Schaltungsausfälle im Analog- und/oder Digitalteil des Mikrocontrollers bzw. des Quantenzufallszahlengenerators,
- fehlerhafte Entropie der gelieferten Zufallszahlen, was durch Tests erfolgen kann, wie beispielhaft beschrieben in David Johnston, Random Number Generators - Principles and Practices, Kapitel 8 und 9, 2018, Walter De Gruyter GmbH, Berlin/Boston, ISBN 978-1-5015-1530-2.

Die zuvor beschriebene Variante des Mikrocontrollers mit Fehlerdetektionseinheit und Pseudozufallszahlengenerator kann auch mit Mikrocontrollern realisiert werden, die über einen anderen quantenbasierten Generator als den zuvor beschriebenen verfügen. Insoweit wird für den Gegenstand dieser Weiterbildung selbstständiger Schutz beansprucht.

In vorteilhafter Ausgestaltung der Erfindung kann vorgesehen sein, dass die Speicherelemente ein oder mehrere Schreib/Lese-Speicher RAM und/oder ein oder mehrere beschreibbare nicht flüchtige Speicher, insbesondere EEPROM-Speicher und/oder Flash-Speicher und/oder Einmalprogrammierbar (OTP-)Speicher, und/oder ein oder mehrere reine Lesespeicher und/oder ein oder mehrere nicht flüchtige Herstellerspeicher, insbesondere ein oder mehrere Hersteller-ROMs, und/oder ein oder mehrere Hersteller EEPROMs und/oder ein oder mehrere Hersteller-Flash-Speicher umfassen.

In zweckmäßiger Ausgestaltung der Erfindung kann vorgesehen sein, dass das Hersteller-ROM eine Boot-Software umfasst.

In weiterer zweckmäßiger Ausgestaltung der Erfindung kann vorgesehen sein, dass eine Herstellerspeicher-Firewall zwischen dem Herstellerspeicher und dem internen Bus vorgesehen ist.

In zweckmäßiger Weiterbildung der Erfindung kann der Mikrocontroller versehen sein mit
- einer Basistakterzeugung,
- einer Taktgeneratorschaltung und/oder
- einer Rücksetzschaltung und/oder
- einer Stromversorgungs- oder einer Vcc-Schaltung mit Spannungsreglern, die die Betriebsspannungen bereitstellen, und/oder
- einer Masseschaltung und/oder
- einer Eingangs-/Ausgangsschaltung und/oder
- einem oder mehreren Verarbeitungsmodulen,
- wobei die Verarbeitungsmodule mit dem internen Bus kommunizieren und
- wobei die Verarbeitungsmodule eines oder mehrere der folgenden Module umfassen:
   - ein CRC-Modul (Cyclic Redundancy Check),
   - ein Taktgeneratormodul,
   - mit einem DES-Beschleuniger und/oder einem AES-Beschleuniger,
   - ein oder mehrere Zeitgeber-Module,
   - eine Sicherheitsüberwachungs- und -steuerungsschaltung,
   - eine Datenschnittstelle, insbesondere einen Universellen Asynchronen Receiver Transmitter.

In weiterer vorteilhafter Ausgestaltung der Erfindung kann vorgesehen sein, dass
- das Halbleitersubstrat eine Oberfläche aufweist,
- das Halbleitersubstrat ein halbleitendes Material unterhalb seiner Oberfläche aufweist,
- die Oberfläche des Halbleitersubstrats einen Metallisierungsstapel aufweist,
- der Metallisierungsstapel eine typischerweise strukturierte und optisch transparente sowie elektrisch isolierende Schicht aufweist, die sich auf der Oberfläche des Halbleitersubstrats befindet,
- zumindest ein Teil dieser transparenten sowie elektrisch isolierenden Schicht den mindestens einen optischen Lichtwellenleiter bildet,
- die erste SPAD-Diode aus dem halbleitenden Material des Halbleitersubstrats heraus Photonen in den optischen Lichtwellenleiter (50 einstrahlt,
- der zumindest eine Lichtwellenleiter solche Photonen zur zweiten SPAD-Diode transportiert.

In zweckmäßiger Ausgestaltung der Erfindung kann vorgesehen sein, dass der optische Lichtwellenleiter die zweite SPAD-Diode so bestrahlt, dass das Licht von innerhalb des Lichtwellenleiters wieder in das halbleitende Material des Halbeleitersubstrats eindringt und dort Vorrichtungsteile der zweiten SPAD-Diode trifft.

In weiterer zweckmäßiger Ausgestaltung der Erfindung kann vorgesehen sein, dass
- die zumindest eine Betriebsschaltung die zumindest eine erste SPAD-Diode zumindest zeitweise mit elektrischer Energie versorgt,
- die zumindest eine erste SPAD-Diode bei Versorgung mit ausreichender elektrischer Energie Photonen in den zumindest einen optischen Lichtwellenleiter einspeist,
- der mindestens eine optische Lichtwellenleiter solche Photonen zur zweiten SPAD-Diode transportiert und
- der zumindest eine Lichtwellenleiter solche Photonen in die zweite SPAD-Diode einstrahlt.

In vorteilhafter Ausgestaltung der Erfindung kann vorgesehen sein, dass die eine Datenbusschnittstelle eine drahtgebundene automobile Datenbusschnittstelle ist oder dass eine oder mehrere Datenbusschnittstellen der mehreren Datenbusschnittstellen drahtgebundene automobile Datenbusschnittstellen sind.

In weiterer vorteilhafter Ausgestaltung der Erfindung kann vorgesehen sein, dass die eine oder die mehreren drahtgebundenen automobilen Datenbusschnittstellen als
- eine CAN-Datenbusschnittstelle und/oder
- eine CAN-FD-Datenbusschnittstelle und/oder
- eine Flexray-Datenbusschnittstelle und/oder
- eine PSI5-Datenbusschnittstelle und/oder
- eine DSI3-Datenbusschnittstelle und/oder
- eine LIN-Datenbusschnittstelle und/oder
- eine Ethernet-Datenbusschnittstelle und/oder
- eine LIN-Datenbusschnittstelle und/oder
- eine MELIBUS-Datenbusschnittstelle
ausgebildet sind.

In zweckmäßiger Weiterbildung der Erfindung kann vorgesehen sein, dass die eine Datenbusschnittstelle eine drahtlose Datenbusschnittstelle ist oder dass eine oder mehrere Datenbusschnittstellen der Datenschnittstellen drahtlose Datenbusschnittstellen sind.

In weiterer vorteilhafter Ausgestaltung der Erfindung kann vorgesehen sein, dass die eine oder die mehreren drahtlosen Datenbusschnittstellen als
- eine WLAN-Schnittstelle und/oder
- eine Mobilfunkschnittstelle und/oder
- eine Bluetooth-Schnittstelle
ausgebildet sind.

In zweckmäßiger Ausgestaltung der Erfindung kann vorgesehen sein, dass die eine Datenbusschnittstelle eine drahtgebundene Datenbusschnittstelle ist oder dass eine oder mehrere Datenbusschnittstellen der mehreren Datenschnittstellen drahtgebundene Datenbusschnittstelle sind.

In zweiterer zweckmäßiger Ausgestaltung der Erfindung kann vorgesehen sein, dass die eine oder die mehreren drahtgebundenen Datenbusschnittstellen als
- eine KNX-Datenbusschnittstelle und/oder
- eine EIB-Datenbusschnittstelle und/oder
- eine DALI-Datenbusschnittstelle und/oder
- eine PROFIBUS-Datenbusschnittstelle
ausgebildet sind.

Ein wesentlicher Vorteil der Erfindung besteht darin, für den Transport der Photonen nicht das Halbleitermaterial, in das die optisch gekoppelten SPAD-Dioden integriert sind, zu nutzen, sondern für den Transport vielmehr ein oder mehrere halbleitermaterialoberflächennahe Dielektrikums-, d.h. Isolationsschichten des Metallisierungsstapels zu verwenden. Damit erhöht sich die "Ausbeute" an die Empfänger-SPAD-Diode erreichenden Photonen massiv, was bedeutet, dass man in kürzerer Zeit mehr Events in der Empfänger-SPAD-Diode beobachten kann, die wiederum ausgenutzt werden können, um in kürzester Zeit längere quantenprozessbasierte Zufallszahlen bzw. kürzester Zeit eine Vielzahl von quantenprozessbasierten Zufallszahlen generieren zu können. Damit steigt die Effektivität der Erzeugung quantenprozessbasierter Zufallszahlen, die darüber hinaus im Hinblick auf die sogenannte Post-Quanten-Kryptografie (PQK) oder die Quantencomputer-resistente Kryptografie sicher sind.

Die Erfindung wird nachfolgend anhand verschiedener Ausführungsbeispiele sowie unter Bezugnahme auf die Zeichnung näher erläutert.
- Fig. 1: zeigt ein Blockdiagramm eines Beispiels für einen sicheren Mikrocontroller 1.
- Fig. 2: zeigt einen beispielhaften Ablauf für die Absicherung eines Produkts mittels eines ersten sicheren Mikrocontrollers (IC1) im Sinne der Erfindung und mittels eines zweiten sicheren Mikrocontrollers (IC2). Dabei tauschen der erste sichere Mikrocontroller (IC1) und der zweite sichere Mikrocontroller (IC2) Daten miteinander aus, die bevorzugt mit Hilfe eines oder mehrerer quantenprozessbasierten Generatoren 15 für echte Zufallszahlen erzeugten Zufallszahlen verschlüsselt sind.
- Fig. 3: zeigt die Integration einer SPAD-Diode in einem Halbleitermaterial.
- Fign. 4 und 5: zeigen die Kombination einer ersten SPAD-Diode mit einer zweiten SPAD-Diode, die beide in einem Halbleitermaterial integriert und durch einen auf das Halbleitermaterial als Teil des Metallisierungsstapels, nämlich als Teil bzw. Abschnitt von Isolationsschichten des Metallisierungsstapels, aufgebrachten optischen Wellenleiter optisch gekoppelt sind.
- Fig. 6: zeigt die Kombination einer quantenbasierten Entropie-Quelle aus mindestens einer Sender-SPAD-Diode und mindestens einer Empfänger-SPAD-Diode mit diese optisch koppelnden Lichtwellenleiter mit einer Auswerte- und Betriebsschaltung.
- Fig. 7: zeigt eine Anordnung ähnlich der der Fig. 6, jedoch ergänzt um einen Überwachungsschaltkreis.
- Fig. 8: zeigt ein Flussdiagramm für ein Entropie-Extraktionsverfahren gemäß einem Ausführungsbeispiel der Erfindung.
- Fig. 9: zeigt ein typisches Ausgangssignal einer Empfänger-SPAD-Diode.
- Fig. 10: zeigt schematisch die einzelnen Verfahrensschritte zur Erzeugung einer Quantenzufallszahl unter Verwendung des optischen quantenbasierten Prozesses nach der Erfindung.

Die Figuren zeigen beispielhaft vereinfacht wesentliche Teile der vorgeschlagenen Vorrichtungen und Verfahren. Zur Veranschaulichung werden nun bestimmte Beispiele, die gemäß den Lehren der Erfindung konstruiert wurden, unter Bezugnahme auf die beigefügten Zeichnungen beschrieben.

Die Ausführungsbeispiele der Erfindung in der folgenden Beschreibung und in der Zeichnung sollen als illustrativ betrachtet werden und sind nicht als einschränkend für das beschriebene spezifische Beispiel oder Element zu betrachten. Aus der folgenden Beschreibung und/oder den Zeichnungen können durch Abänderung, Kombination oder Variation bestimmter Elemente mehrere Beispiele abgeleitet werden. Darüber hinaus können Beispiele oder Elemente, die nicht wörtlich beschrieben sind, von einer fachkundigen Person aus der Beschreibung und den Zeichnungen abgeleitet werden.

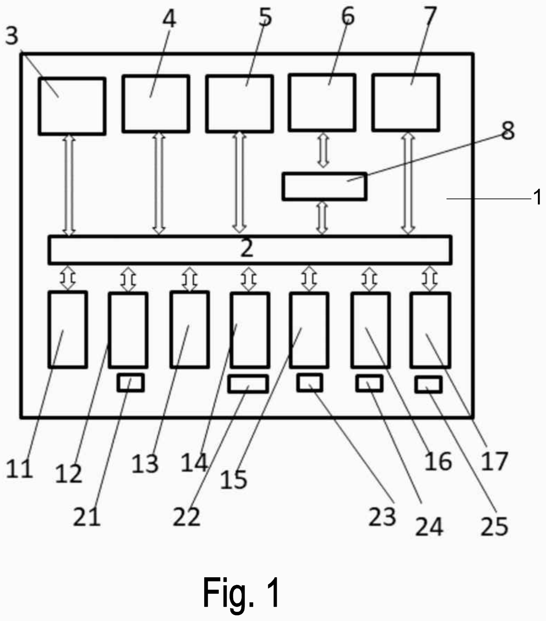

Der erfindungsgemäße integrierte Schaltkreis umfasst bevorzugt einen sicheren Mikrocontroller 1, d.h. einen Mikrocontroller mit sicherer Verschlüsselung von Daten. Fig. 1 zeigt auf Blockschaltbildebene ein Beispiel für einen sicheren Mikrocontroller 1. Der sichere Mikrocontroller 1 enthält beispielsweise Speicherelemente, die mit einem internen Bus 2 verbunden sind. Die Speicherelemente können beispielsweise ein oder mehrere Schreib/Lese-Speicher RAM 3 und/oder ein oder mehrere beschreibbare nicht flüchtige Speicher wie beispielsweise EEPROM-Speicher 4 und/oder Flash-Speicher 4 und/oder OTP-Speicher 4 umfassen. Des Weiteren umfasst der sichere Mikrocontroller 1 bevorzugt einen oder mehrere nicht flüchtige, reine Lese-Speicher 5, wie beispielsweise ein ROM. Außerdem umfasst der sichere Mikrocontroller 1 bevorzugt einen oder mehrere nicht flüchtige, beschreibbare und/oder nicht beschreibbare Herstellerspeicher 6, die typischerweise Referenzdaten enthalten, die für potentielle spätere Untersuchungen eines Mikrocontrollers oder eines anderen elektronischen Bausteins von Bedeutung sein können. Im Falle eines nicht beschreibbaren Herstellerspeichers 6 kann der Herstellerspeicher 6 ein Hersteller-ROM sein. Bevorzugt umfasst das Hersteller-ROM 6 die Boot-Software. Der sichere Mikrocontroller 1 umfasst beispielsweise einen oder mehrere Kryptografie-Beschleuniger 7, beispielsweise einen DES-Beschleuniger und/oder einen AES-Beschleuniger 7, der Kryptografie-Berechnungen beschleunigt und mit dem internen Bus 2 verbunden ist. Zum Beispiel ist bevorzugt mindestens eine Herstellerspeicher-Firewall 8 zwischen dem Herstellerspeicher 6 und dem internen Bus 2 vorgesehen. Der Mikrocontrollerkern 16 greift über den Datenbus 2 auf diese Speicher zu. Der sichere Mikrocontroller 1 umfasst beispielsweise Verarbeitungsmodule, die über den internen Bus 2 mit dem Mikrocontrollerkern 16 kommunizieren. Die Verarbeitungsmodule des Mikrocontrollers 1 umfassen bevorzugt mindestens eines der folgenden Module: ein CRC-Modul (Cyclic Redundancy Check) 11, ein Taktgeneratormodul 12, ein oder mehrere Zeitgeber-Module 13, eine Sicherheitsüberwachungs- und -steuerungsschaltung 14, einen oder mehrere quantenprozessbasierten Generatoren 15 für echte Zufallszahlen (Englisch: Quantum Random Number Generator: QRNG), einen 8/16/32/64-Bit-Microkontrollerkern 16 und eine oder mehrere Datenschnittstellen 17, insbesondere eine oder mehrere Universelle- Asynchrone-Receiver-Transmitter (UART) zur Unterstützung serieller Hochgeschwindigkeitsdaten. Zu den weiteren Schaltungsteilen des sicheren Mikrocontrollers 1 gehören beispielsweise eine oder mehrere Basistakterzeugungsschaltungen 21 (CLK) und/oder eine oder mehrere Taktgeneratormodule 12, eine Rücksetzschaltung 22, eine Stromversorgungs- oder Vcc-Schaltung 23 mit Spannungsreglern, die die Betriebsspannung bereitstellen, eine Masseschaltung 24 und eine Eingangs-/ Ausgangsschaltung 25.

Bevorzugt ist der sichere Mikrocontroller 1 so konfiguriert, dass er eine sichere Authentifizierung ermöglicht. So speichert der sichere Mikrocontroller 1 neben einem Authentifizierungscode weitere Daten, z. B. ein oder mehr Lebens- und Benutzungsdauerdaten und/oder z.B. logistische Daten und/oder z.B., kommerzielle Daten und/oder Websiteund Email-Adressen und/oder Bilddaten, einen Satz von Anweisungen für Steuergeräte des Kfz. mit denen der Mikrokontrollerkern 16 über eine Datenschnittstelle kommuniziert. Daneben kann der sichere Mikrocontroller 1 weitere Anwendungsdaten speichern. Bevorzugt umfasst der erste integrierte Schaltkreis beispielsweise einen sicheren Mikrocontroller 1, der so konfiguriert ist, dass er die sichere Authentifizierung eines Produkts erleichtert.

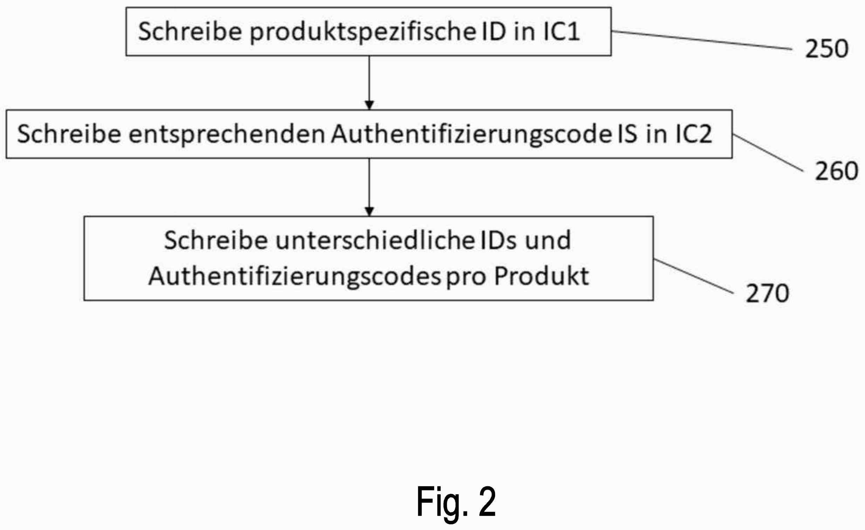

Fig. 2 zeigt ein Beispiel für ein Verfahren zur Herstellung einer Schaltung für ein Produkt, das den erfindungsgemäßen sicheren Mikrocontroller 1 aufweist. Das Verfahren umfasst zum Beispiel das Schreiben einer Produkt-ID auf eine zweite integrierte Schaltung des Produkts (Block 250). Die zweite integrierte Schaltung umfasst bevorzugt einen zweiten sicheren Mikrocontroller 1 im Sinne dieser Anmeldung. Das Verfahren umfasst zum Beispiel das Schreiben eines Authentifizierungscodes, der der Produkt-ID entspricht, in die Speicher der ersten integrierten Schaltung des ersten sicheren Mikrocontrollers 1 (Block 211). Die erste integrierte Schaltung des Produkts umfasst bevorzugt ebenfalls einen sicheren Mikrocontroller 1 im Sinne dieser Anmeldung. Das Verfahren umfasst beispielsweise das Schreiben verschiedener Produkt-IDs und verschiedener entsprechender Authentifizierungscodes in die Speicher der jeweiligen integrierten Schaltung des jeweiligen sicheren Mikrocontrollers 1. Auch kann das Schreiben verschiedener Produkt-IDs und verschiedener entsprechender Authentifizierungscodes in die Speicher der jeweiligen integrierten Schaltung des jeweiligen sicheren Mikrocontrollers 1 pro Produkt (Block 221) erfolgen, so dass jedes Produkt eine eindeutige Produkt-ID und einen eindeutigen Authentifizierungscode aufweist. Der letztgenannte Schritt sorgt beispielsweise für einen gesicherten und eindeutigen Authentifizierungscode pro Produkt.

Einige der in dieser Beschreibung beschriebenen Merkmale ermöglichen beispielsweise die sichere Authentifizierung einer Schaltung oder eines Produkts, während diese Merkmale gleichzeitig eine integrierte und kosteneffiziente Herstellung dieser Schaltung oder dieser Produkte ermöglichen. Zum Beispiel ist der zweite integrierte Schaltkreis bevorzugt so konfiguriert, dass er eine sichere Authentifizierung ermöglicht. In verschiedenen Beispielen sind verschiedene Host-Geräte in der Lage, den Schaltkreis oder das Produkt zu authentifizieren, z.B. ein Auto, ein Smartphone, ein Webserver, ein beliebiges Datenverarbeitungsgerät, usw. In einem Beispiel wird die Schnittstelle zwischen dem Host-Gerät und der Schaltung über den Steuerrechner des Autos hergestellt. In einem weiteren Beispiel ist ein erster integrierter Schaltkreis der Schaltung so konfiguriert, dass er weitere Daten wie produktbezogene Codes, Produkteinstellungsinformationen usw. speichert. Das Host-Gerät kann beispielsweise erst dann auf solche weiteren Daten zugreifen oder sie ändern oder verarbeiten, wenn die sichere Authentifizierung über den ersten integrierten Schaltkreis erfolgt ist. Der erste integrierte Schaltkreis ist beispielsweise so konfiguriert, dass er erst nach der Authentifizierung die oben genannten weiteren Daten bereitstellt oder den Zugriff auf sie ermöglicht. In einem Beispiel benötigt das Produkt nur wenige oder gar keine Anpassungen in Bezug auf den Einsatz in verschiedenen Kfz-Serien.

Der interne Datenbus 2 (siehe Fig. 1) kann mehrere Datenbusse 2 für mehrere Mikrocontrollerkerne 16 umfassen, so dass diese unabhängig voneinander zeitlich versetzt und/oder überlappend oder gleichzeitig auf verschiedene Teilvorrichtungen des sicheren Mikrocontrollers 1 zugreifen können. In der Regel umfasst der sichere Mikrocontroller 1 aber nur einen internen Datenbus 2 und nur einen Mikrocontrollerkern 16. Der Mikrocontrollerkern 16 ist bevorzugt eine Advanced Risk Maschine (AMR) Prozessor oder dergleichen. Bevorzugt handelt es sich um einen 8-Bit- oder einen 16-Bit- oder einen 32 Bit- oder einen 64-Bit-Mikrocontroller Rechnerkern.

Bevorzugt umfasst der sichere Mikrocontroller 1 ein oder mehrere Schreib/Lese-Speicher RAM 3. Hierbei kann es sich beispielsweise um SRAMs und/oder MRAMs und/oder FRAMS oder dergleichen handeln. Auch kann es sich um dynamische Schreib/Lesespeicher wie beispielsweise DRAMs handeln, die in regelmäßigen Zeitabständen in einem Refresh-Zyklus gelesen und wieder neu beschrieben werden müssen. Für den Zugriff auf seinen Speicher kann der erfindungsgemäße sichere Mikrocontroller 1 eine Zugriffslogik aufweisen, die den Refresh-Vorgang regelmäßig ausführt. Allerdings eröffnet ein DRAM typischerweise Möglichkeiten für einen Angriff und ist typischerweise eine potentielle Schwachstelle. Auf diese Schreib/Lese-Speicher RAM 3 kann der Mikrocontrollerkern 16 bevorzugt mittels des internen Datenbusses 2 zugreifen.

Bevorzugt umfasst der sichere Mikrocontroller 1 ein oder mehrere beschreibbare und nicht flüchtige Speicher 4. Auf diese beschreibbaren und nicht flüchtigen Speicher 4 kann der Mikrocontrollerkern 16 bevorzugt mittels des internen Datenbusses 2 zugreifen. Diese nichtflüchtigen Speicher können beispielsweise EEPROM-Speicher 4 oder Flash-Speicher 4 oder OTP-Speicher 4 umfassen. Hierbei steht OTP für Englisch "One Time Programmable".

Eine Angriffsmöglichkeit kann das Löschen der nicht flüchtigen Speicher 4 mittels Strahlung, beispielsweise Röntgenstrahlung und/oder ionisierender Strahlung und/oder die Erhitzung von Speicherzellen sein. Hierzu weist der sichere Mikrocontroller 1 bevorzugt eine oder mehrere Sicherheitsüberwachungs- und -steuerungsschaltungen 14 auf, die die Datenintegrität der Speicherzellen der löschbaren Speicher 4 überwacht. Bevorzugt weisen die Speicherzellen eine Redundanz in der Art auf, dass mindestens zwei Prüf-Bits für ein Datenwort, das bevorzugt ein Datenwort von 8 Bit Länge, also ein Byte, ist, vorgesehen sind und dass stets mindestens ein Prüf-Bit den Inhalt 1 aufweisen muss und ein anderes den Inhalt 0. Beispielsweise kann das erste Prüf-Bit ein Parity-Bit des Bytes sein und das zweite Prüf-Bit das inverse Bit des Parity-Bits. Erfolgt nun ein Angriff mit ionisierender Strahlung oder dergleichen, so setzt der Angriff beide Prüf-Bits auf den gleichen Wert zurück. Die eine oder mehrere Sicherheitsüberwachungs- und -steuerungsschaltungen 14 detektieren diese Abweichung und sperren den sicheren Mikrocontroller 1 für weitere Zugriffe.

Bevorzugt ist jedes Bit der Speicher des sicheren Mikrocontrollers 1 doppelt ausgelegt, so dass jedes logische Datenbit als Paar aus einem ersten physikalischen Datenbit mit einem ersten internen logischen Wert und einem zweiten physikalischen Datenbit mit einem zweiten internen logischen Wert realisiert ist. Dabei ist typischerweise der zweite interne logische Wert das logische Inverse des ersten internen logischen Werts. Dass dies stets gegeben ist, überwachen wieder bevorzugt die eine oder mehrere Sicherheitsüberwachungs- und -steuerungsschaltungen 14. Die eine oder mehrere Sicherheitsüberwachungs- und -steuerungsschaltungen 14 detektieren Abweichungen und sperren beispielsweise bevorzugt ggf. die weitere Ausführung von Programmen oder bestimmten Programmteilen durch den Mikrocontrollerkern 16 und/oder sperren den Zugriff auf Daten im Falle von Abweichungen.

Bevorzugt umfasst der sichere Mikrocontroller 1 eine oder mehrere Rücksetzschaltungen 22 (siehe Fig. 1). Die Rücksetzschaltungen 22 setzen jeweils den sicheren Mikrocontroller 1 und/oder Teilvorrichtungen des sicheren Mikrocontrollers 1 in vordefinierte Zustände zurück, wenn vorbestimmte oder bestimmbare Rücksetzbedingungen und/oder Kombinationen und/oder zeitliche Abfolgen solcher Rücksetzbedingungen vorliegen. Beispielsweise können diese Bedingungen Signalisierungen der einen oder mehreren Sicherheitsüberwachungs- und -steuerungsschaltungen 14 sein. Auch können diese Bedingungen Änderungen und/oder Werte des Potenzials der Betriebsspannung des sicheren Mikrocontrollers sein. Des Weiteren können solche Bedingungen die Integrität des Gehäuses des sicheren Mikrocontrollers 1 betreffen.

Bevorzugt umfasst der sichere Mikrocontroller 1 einen Detektor für das Öffnen des Gehäuses des sicheren Mikrocontrollers 1. Beispielsweise kann es sich hierbei um eine einzelne Leitung handeln, die als beispielsweise textiles Netzwerk oder Gewebe den sicheren Mikrocontroller 1 umgibt oder bedeckt oder zumindest Teile des sicheren Mikrocontrollers 1 abdeckt. Auch kann es sich um ein Netzwerk von Leitungen handeln, die den sicheren Mikrocontroller 1 ausschließlich zur Detektion eines Angriffs bedecken. Beispielsweise kann der sichere Mikrocontroller 1 einen ersten Ein-/Ausgang aufweisen, mittels dessen er in eine solche Leitung einen elektrischen Strom einspeisen und diesen wieder an einem zweiten Ein-/Ausgang entnehmen kann. Wird der Stromfluss unterbrochen, ist dies ein Hinweis auf einen Angriff, den die eine oder die mehreren Sicherheitsüberwachungs- und -steuerungsschaltungen 14 erkennen und die daraufhin zum Beispiel dem Mikrocontrollerkern 16 des erfindungsgemäßen sicheren Mikrocontrollers 1 diesen Angriff signalisieren. Beispielsweise können in einem solchen Fall des vermuteten Verletzens der Integrität des Gehäuses eine oder mehrere der einen oder mehreren Sicherheitsüberwachungs- und -steuerungsschaltungen 14 den schreibenden und/oder lesenden Zugriff auf Speicherinhalte der Speicher des sicheren Mikrocontrollers 1 sperren oder solche Inhalte löschen oder diese Inhalte auf vordefinierte Werte setzen oder mit unsinnigen Daten überschreiben oder in sonstiger Weise manipulieren. Die Speicher des sicheren Mikrocontrollers 1 umfassen bevorzugt ein oder mehrere nicht flüchtige, reine Lese-Speicher 5, wie beispielsweise ein ROM. In dem ROM 6 des sicheren Mikrocontrollers 1 befinden sich bevorzugt konstruktionsseitig festgelegte Daten und/oder Programmbefehle.

Bevorzugt weist der sichere Mikrocontroller 1 (siehe z.B. Fig. 1) einen oder mehrere nicht flüchtige, beschreibbare und/oder nicht beschreibbare Herstellerspeicher 6 auf, in die der Halbleiterhersteller oder ein anderer Zulieferer Produktions- und Sicherheitsdaten, wie beispielsweise Seriennummern etc. ablegen kann. Bevorzugt sperrt der Halbleiterhersteller nach Ausführung des letzten Produktionstests den Zugriff auf diesen beschreibbare und/oder nicht beschreibbaren nicht flüchtigen Herstellerspeicher 6. Bevorzugt ist der Zugriff auf den beschreibbare und/oder nicht beschreibbare Herstellerspeicher 6 mittels eines Herstellerpassworts möglich. In manchen Fällen ist ein Doppelschlüsselverfahren sinnvoll. In einem solchen Fall speichert ein (dem Halbleiterhersteller nachfolgender) Kunde in einem ebenfalls für den Zugriff mit einem Kennwort sperrbaren Kundensperrregister ein Kundenkennwort. Bevorzugt kann der Halbeiterhersteller nur mit dem Kundenkennwort und dem Herstellerkennwort auf alle Speicherbereiche des sicheren Mikrocontrollers 1 zugreifen. Bevorzugt sieht der Halbleiterhersteller ein Analysekennwort vor, mittels dessen er eine oder mehrere der einen oder mehreren Sicherheitsüberwachungs- und -steuerungsschaltungen 14 veranlassen kann, typischerweise unter Zuhilfenahme der Rücksetzschaltung 22 die Kundeninhalte zu löschen und dann alle Speicherbereiche des sicheren Mikrocontrollers 1 für die Analyse von Fehlern zugänglich zu machen. Im Falle eines nicht beschreibbaren Herstellerspeichers kann der Herstellerspeicher 6 beispielsweise ein Hersteller-ROM sein, dessen Inhalt beispielsweise bei der Fertigung des Halbleiterschaltkreises des sicheren Mikrocontrollers festgelegt wird.

Der sichere Mikrocontroller ist typischerweise dazu bestimmt, mittels kryptografischer Verfahren, die in seinen Speichern abgelegt sind und die der Mikrocontrollerkern 16 ausführt, Daten und/oder Programmcodeteile und/oder Befehle verschlüsselt zu empfangen und/oder zu versenden. Diese Verfahren benötigen zum Teil erhebliche Rechenleistungen. Es hat sich daher bewährt, dass der Mikrocontrollerkern 16 bestimmte Programmteile dieser Kryptografieverfahren in Form von Teilschritten dieser Kryptografieverfahren nicht ausführt, sondern dass ein oder mehrere spezielle Hardware-Beschleuniger vorzugsweise in Form eines oder mehrerer Kryptografie-Beschleuniger 7 diese Programmteile statt des Mikrocontrollerkerns 16 mit einer speziell synthetisierten Hardware-Logik beschleunigt ausführen. Zu diesem Zweck verfügt der sichere Mikrocontroller 1 bevorzugt beispielsweise über einen DES-Beschleuniger für den Data Encryption Standard (DES)-Algorithmus und/oder einen AES-Beschleuniger 7 für die Ausführung des Advanced Encryption Standard (AES)-Algorithmus. Der Mikrocontrollerkern 16 spricht diese Hardware-Beschleuniger 7 typischerweise über den internen Datenbus 2 an. Bevorzugt verfügt der Mikrocontrollerkern 16 über ein redundantes Taktsystem, um Zugriffe auf das Taktsystem erkennen zu können. Eine oder mehrere der einen oder mehreren Sicherheitsüberwachungs- und -steuerungsschaltungen 14 überwachen die Konsistenz der logischen Inhalte dieser bevorzugten Mehrzahl von redundanten Taktsystemen und können so Angriffe und Fehler erkennen. Den Zugriff des Mikrocontrollerkerns 16 und der Testlogik des sicheren Mikrocontrollers 1 auf die Herstellerspeicher verhindern bevorzugt ein oder mehrere Herstellerspeicher-Firewalls 8. Diese können bevorzugt, wie beschrieben, durch ein Herstellerpasswort entsperrt werden. Bevorzugt ist die Anzahl der Fehleingaben sehr beschränkt, um die Wahrscheinlichkeit eines erfolgreichen Angriffs zu minimieren.

Bevorzugt umfasst der sichere Mikrocontroller ein oder mehrere CRC-Module (Cyclic Redundancy Check) 11, um für eine serielle Datenkommunikation die CRC Daten, die in den meisten Datenprotokollen zur Erkennung fehlerhafter Datenübertragungen eingesetzt werden, zum einen im Falle eines Sendevorgangs erzeugen und zum anderen bei einem Empfang den korrekten Empfang der Datenbotschaft überprüfen zu können. Bevorzugt umfasst der sichere Mikrocontroller 1 ein oder mehrere Taktgeneratormodule 12 (Englisch Clock Driver, CLK), die einen oder mehrere Takte zum Betreiben der Schaltungen des sicheren Mikrocontrollers zu erzeugen. Bevorzugt erzeugen die ein oder mehrere Taktgeneratormodule (Englisch Clock Driver, CLK) 12 redundante Takte, die einen Angriff auf das Taktsystem erkennen lassen. Typischerweise umfasst der sichere Mikrocontroller 1 ein oder mehrere Zeitgeber-Module 13, wie sie beispielsweise für die Erkennung von Time-Outs benötigt werden. Bevorzugt umfasst der sichere Mikrocontroller 1 einen oder mehrere Watchdog-Timer, die die Abarbeitung der verschiedenen Programmteile überwachen. Diese Watchdog-Timer können Teil der einen oder mehreren Sicherheitsüberwachungs- und -steuerungsschaltungen 14 sein.

Erfindungsgemäß (siehe z.B. Fig. 1) umfasst der sichere Mikrocontroller 1 mindestens einen quantenprozessbasierten Generator 15. Quantenbasierte Prozesse haben den Vorteil, dass sie auf einem echten Zufall beruhen. In den 70er Jahren des vorigen Jahrhunderts bewies der Physiker Bell, dass die Theorie der "hidden parameters" falsch sei. D.h. es existieren keine verdeckten Ursachen für die Zufälligkeit quantenmechanischer Ereignisse, wie beispielsweise der Aussendung von Photonen. Der Mikrocontrollerkern 16 kann beispielsweise ein 8-Bit-Mikrocontrollerkern oder ein 16-Bit-Mikrocontrollerkern oder ein 32-Bit-Mikrocontrollerkern oder ein 64-Bit-Mikrocontrollerkern oder ein 128-Bit-Mikrocontrollerkern oder dergleichen sein. Der sichere Mikrocontroller 1 kann ein oder mehrere 8/16/32/64/128-Bit-Mikrokontrollerkerne 16 aufweisen, die bevorzugt über ein oder mehrere interne Datenbusse 2 auf die anderen Teilvorrichtungen zugreifen können. Bevorzugt umfasst der sichere Mikrocontroller 1 ein oder mehrere Datenschnittstellen 17. Solche Datenschnittstellen können beispielsweise eine oder mehrere Universelle Asynchrone Receiver Transmitter (UART) zur Unterstützung serieller Hochgeschwindigkeitsdaten sein. Bevorzugt weist der sichere Mikrocontroller 1 ein oder mehrere Basistakterzeugungen 21 (CLK) auf, die bevorzugt einem oder mehreren Taktgeneratormodulen (Englisch Clock Driver, CLK) jeweils einen Basistakt 12 zur Verfügung stellen. Bevorzugt handelt es sich bei den Basistakterzeugungen 21 (CLK) um Oszillatoren. Bevorzugt umfasst der sichere Mikrocontroller 1 auch ein oder mehrere Stromversorgungs- oder Vcc-Schaltungen 23 mit Spannungsreglern, die die Betriebsspannungen für den sicheren Mikrocontroller 1 bereitstellen. Bevorzugt umfasst der sichere Mikrocontroller 1 auch ein oder mehrere Masseschaltungen 24 (d.h., eine in die Masseleitung eingefügte Schaltung oder eine Schaltung "nach Masse", im einfachsten Fall eine Leitung), die beispielsweise einen Verpolungsschutz und Schutzschaltungen gegen die Manipulation des elektrischen Potenzials des Halbleitersubstrats umfassen. Beispielsweise ist es sinnvoll, wenn ein oder mehrere der Masseschaltungen 24 einen Verpolungsschutz aufweisen. Beispielsweise ist es sinnvoll, wenn ein oder mehrere der Masseschaltungen 24 und/oder ein oder mehrere der Stromversorgungs- oder Vcc-Schaltungen 23 so zusammenwirken, dass die Modulation des Stromverbrauchs und/oder des Innenwiderstands und/oder des Spannungsabfalls zwischen den Versorgungsspannungsanschlüssen des sicheren Mikrocontrollers keine Rückschlüsse auf die Betriebsabläufe und/oder Zustände des sicheren Mikrocontrollers zumindest zeitweise zulässt.

Für die Steuerung anderer Vorrichtungen und/oder für die Kommunikation mit anderen Vorrichtungen und/oder für die Überwachung anderer Vorrichtungen ist es in der Regel sinnvoll, wenn der sichere Mikrocontroller ein oder mehrere Eingangs-/Ausgangsschaltungen 25 aufweist, die in der Regel als digitale Eingänge und/oder als digitale Ausgänge ausgeführt sind, die bevorzugt auch einen Tri-State-Zustand einnehmen können. Der sichere Mikrocontroller 1 kann einen Analog-zu-Digital-Wandler aufweisen, der es dem sicheren Mikrocontroller 1 erlaubt, interne analoge Werte, wie z.B. die Betriebsspannung und externe analoge Werte zu überwachen. Ggf. kann der sichere Mikrocontroller 1 mit einer Treiberstufe versehen sein, um beispielsweise Aktoren antreiben zu können. Bei diesen Aktoren kann es sich um Motoren und/oder andere ohmsche und/oder induktive und/oder kapazitive Lasten o.dgl. handeln. Eine solche Treiberstufe kann beispielsweise eine Halbbrücke und/oder eine H-Brücke o.dgl. sein. Auch ist es denkbar, dass es sich um Leistungsstromquellen beispielsweise für Leuchtmittel wie LEDs handeln kann.

Die Erfindung (siehe z.B. Fig. 1) schlägt somit einen sicheren Mikrocontroller 1 zur Steuerung von Vorrichtungen im Automobil vor, der ein Halbleitersubstrat umfasst. Bevorzugt ist der sichere Mikrocontroller 1 in einer CMOS-Schaltungstechnik oder einer bipolaren Schaltungstechnik oder einer BiCMOS-Schaltungstechnik gefertigt. Der sichere Mikrocontroller umfasst bevorzugt Speicherelemente, einen oder mehrere internen Datenbusse 2, einen oder mehrere 8/16/32/64-Bit-Mikrokontrollerkerne 16, eine oder mehrere Datenschnittstellen und einen oder mehrere quantenprozessbasierte Generatoren 15. Diese einen oder mehreren quantenprozessbasierten Generatoren 15 unterscheiden den hier vorgeschlagenen sicheren Mikrocontroller 1 vom Stand der Technik, der auf sogenannten True Random Number Generatoren basiert, die eine schlechtere von-Neumann-Entropie der erzeugten Zufallszahlen zeigen, die demgemäß "weniger zufällig" sind.

Der interne Datenbus 2 kann mehrere Datenbusse umfassen. Die Speicherelemente des sicheren Mikrocontrollers 1 sind typischerweise mit dem internen Datenbus 2 verbunden. Die Datenschnittstellen sind ebenfalls typischerweise mit dem internen Datenbus 2 verbunden. Die einen oder mehreren quantenprozessbasierten Generatoren 15 sind ebenfalls bevorzugt mit dem internen Datenbus 2 verbunden. Die einen oder mehreren Mikrocontrollerkerne 16 sind bevorzugt ebenfalls mit dem internen Datenbus 2 verbunden. Die einen oder mehreren quantenprozessbasierten Generatoren 15 erzeugen bevorzugt und typischerweise auf Anfrage des Mikrocontrollerkerns 16 eine oder mehrere Zufallszahlen. Diese zeichnen sich im Gegensatz zu den Zufallszahlen der True Random Number Generatoren aus dem Stand der Technik durch eine besonders vorteilhafte Entropie aus. Bevorzugt erzeugen ein oder mehrere der Mikrocontrollerkerne 16 mit Hilfe eines jeweiligen Programms aus einem oder mehreren ihrer Speicherelemente und mit Hilfe einer oder mehrerer der erzeugten Zufallszahlen einen oder mehrere Schlüssel. Typischerweise verschlüsseln und/oder entschlüsseln die ein oder mehrere Mikrocontrollerkerne 16 mit Hilfe eines jeweiligen Programms des betreffenden Mikrocontrollerkerns 16, das jeweils aus einem oder mehreren ihrer Speicherelemente stammt, mit Hilfe eines jeweiligen Schlüssels der ggf. mehreren Schlüssel Daten, die diese Mikrocontrollerkerne 16 typischerweise über eine oder mehrere Datenschnittstellen mit Vorrichtungen außerhalb des sicheren Mikrocontrollers austauschen. Typischerweise umfasst der Halbleitersubstrat im Wesentlichen alle Teilvorrichtungen des sicheren Mikrocontrollers 1 einstückig.

In einer ersten Weiterbildung des sicheren Mikrocontrollers 1 (siehe Fig. 1) umfassen die Speicherelemente des sicheren Mikrocontrollers 1 ein oder mehrere Schreib/Lese-Speicher RAM 3 und/oder ein oder mehrere beschreibbare nicht flüchtige Speicher 4, insbesondere EEPROM-Speicher 4, und/oder Flash-Speicher 4 und/oder OTP-Speicher 4 und/oder ein oder mehrere reine Lesespeicher und/oder ein oder mehrere nicht flüchtige Herstellerspeicher. Die ein oder mehrere Herstellerspeicher können beispielsweise ein oder mehrere Hersteller-ROMs 6 und/oder ein oder mehrere Hersteller EEPROMs und/oder ein oder mehrere Hersteller-Flash-Speicher umfassen.

In einer zweiten Weiterbildung umfasst der Herstellerspeicher, und zwar insbesondere ein Hersteller-ROM 6, die Boot-Software, um den sicheren Mikrocontroller sicher zu starten.

In einer dritten Weiterbildung (siehe Fig. 1) weist der sicherere Mikrocontroller 1 eine Herstellerspeicher-Firewall 8 zwischen dem Herstellerspeicher 6 und dem internen Bus 2 auf, die den Zugriff auf den Herstellerspeicher ohne Authentifizierung verhindert.

In einer vierten Weiterbildung (siehe Fig. 1) weist der sichere Mikrocontroller 1 eine oder mehrere der folgenden Komponenten auf: eine Basistakterzeugung 21 (CLK), eine Taktgeneratorschaltung 12, eine Rücksetzschaltung 22, eine Stromversorgungs- oder eine Vcc-Schaltung 23 mit Spannungsreglern, die verschiedene Betriebsspannungen bereitstellen, eine Masseschaltung 24, eine Eingangs-/Ausgangsschaltung 25, und ein oder mehrere Verarbeitungsmodule. Dabei kommunizieren die Verarbeitungsmodule mit dem internen Datenbus 2 und damit typischerweise mit einem Mikrocontrollerkern 16. Bevorzugt umfassen die Verarbeitungsmodule eines oder mehrere der folgenden Komponenten: Ein CRC-Modul (Cyclic Redundancy Check) 11, ein Taktgeneratormodul 12, einen Kryptobeschleuniger, insbesondere einen DES-Beschleuniger und/oder einen AES-Beschleuniger 7, ein oder mehrere Zeitgeber-Module 13, ein oder mehrere Sicherheitsüberwachungs- und -steuerungsschaltungen 14, ein oder mehrere Datenschnittstellen, insbesondere einen oder mehrere Universal-Asynchrone-Receiver-Transmitter (UART) 17 (siehe Fig. 1).

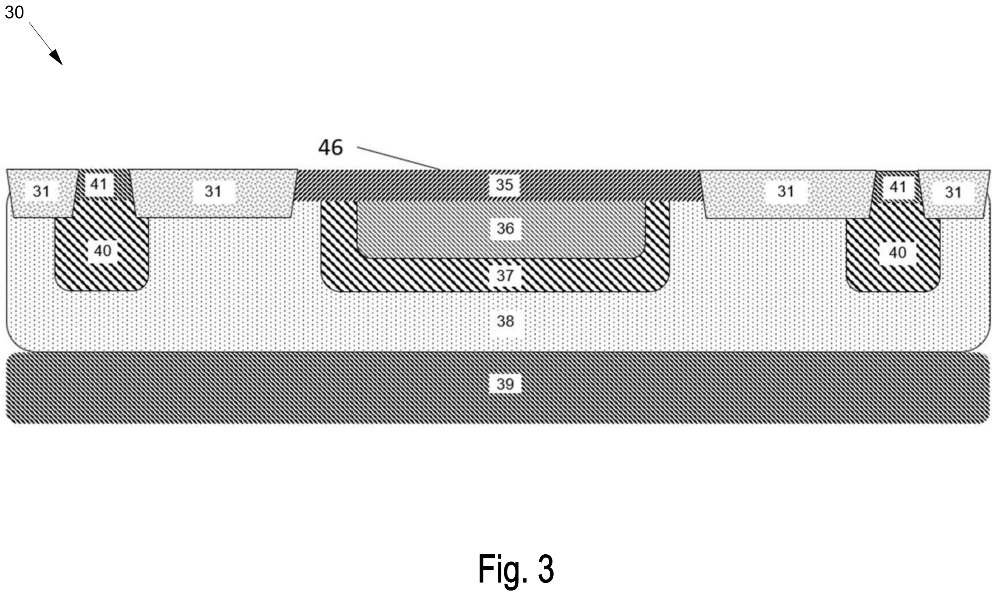

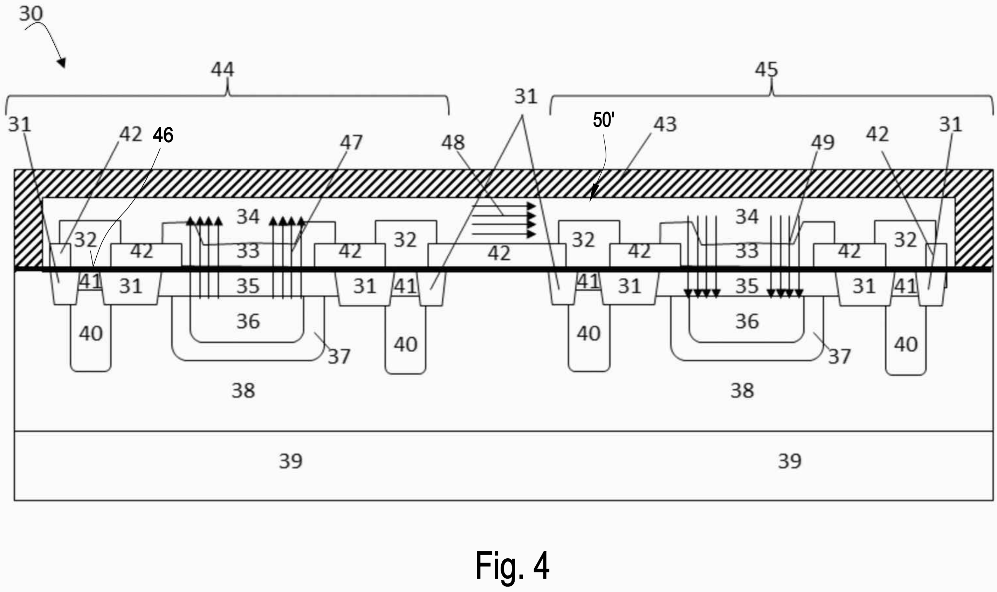

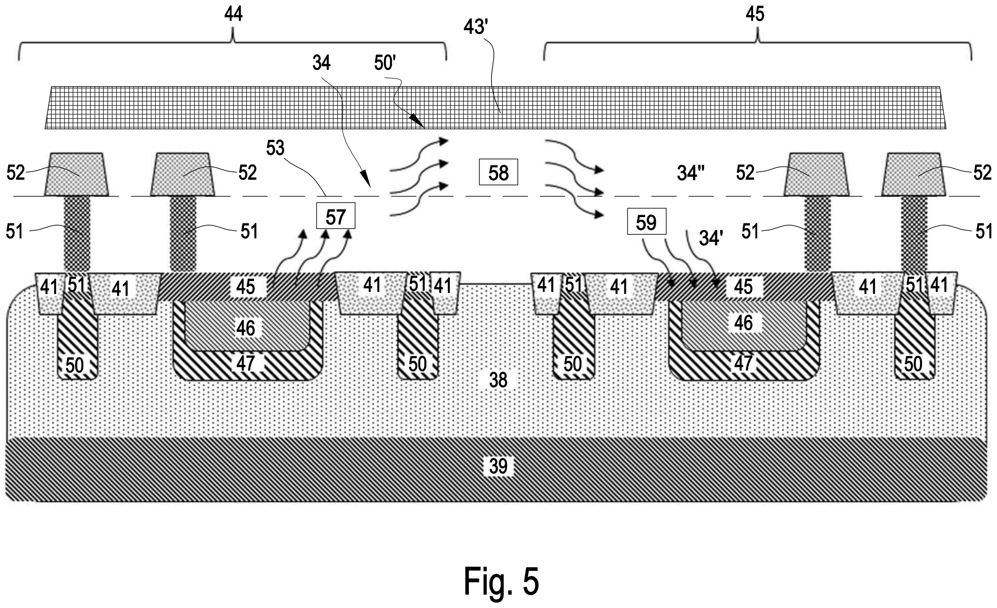

In einer vierten Weiterbildung des sicheren Mikrocontrollers 1 (siehe Fign. 4 und 5) weist dieser mindestens eine erste SPAD-Diode 44 und mindestens eine zweite SPAD-Diode 45, mindestens einen optischen Lichtwellenleiter 50, mindestens eine Verarbeitungsschaltung und mindestens eine Betriebsschaltung auf. Die schaltungstechnische Integration einer SPAD-Diode (z.B. der SPAD-Diode 44 oder 45) ist nochmals in Fig. 3 gezeigt. Der quantenprozessbasierte Generator 15 (siehe Fig. 1) umfasst in dieser vierten Weiterbildung gemäß Fig. 4 zumindest die erste SPAD-Diode 44 als Quelle für das optische Quantensignal und die zweite SPAD-Diode 45 als Fotodetektor für das optische Quantensignal. Des Weiteren umfasst der quantenprozessbasierte Generator 15 in dieser vierten Weiterbildung zumindest die Verarbeitungsschaltung und den optische Lichtwellenleiter 50. In dieser vierten Weiterbildung koppelt der mindestens eine optische Lichtwellenleiter 50 die mindestens eine erste SPAD-Diode 44 optisch mit der mindestens einen zweiten SPAD-Diode 45. Die Betriebsschaltung versorgt die erste SPAD-Diode 44 in der Art mit elektrischer Energie, dass die erste SPAD-Diode 44 Photonen emittiert. Dies ist bei einer ausreichenden elektrischen Vorspannung der ersten SPAD-Diode 44 der Fall. Die Verarbeitungsschaltung erfasst in dieser vierten Weiterbildung das (Ausgangs-)Signal der zweiten SPAD-Diode 45 und bildet daraus die Zufallszahl.

Während beim Ausführungsbeispiel der Fig. 4 davon ausgegangen wird, dass der optische Lichtwellenleiter 50 durch die eine auf der Oberfläche 46 des Halbleitersubstrats aufgebrachte elektrische Isolationsschicht gebildet wird, ist in Fig. 5 ein Ausführungsbeispiel gezeigt, bei dem beispielsweise zwei optisch transparente und elektrisch isolierende Isolationsschichten 34', 34" den optischen Lichtwellenleiter 50 bilden.

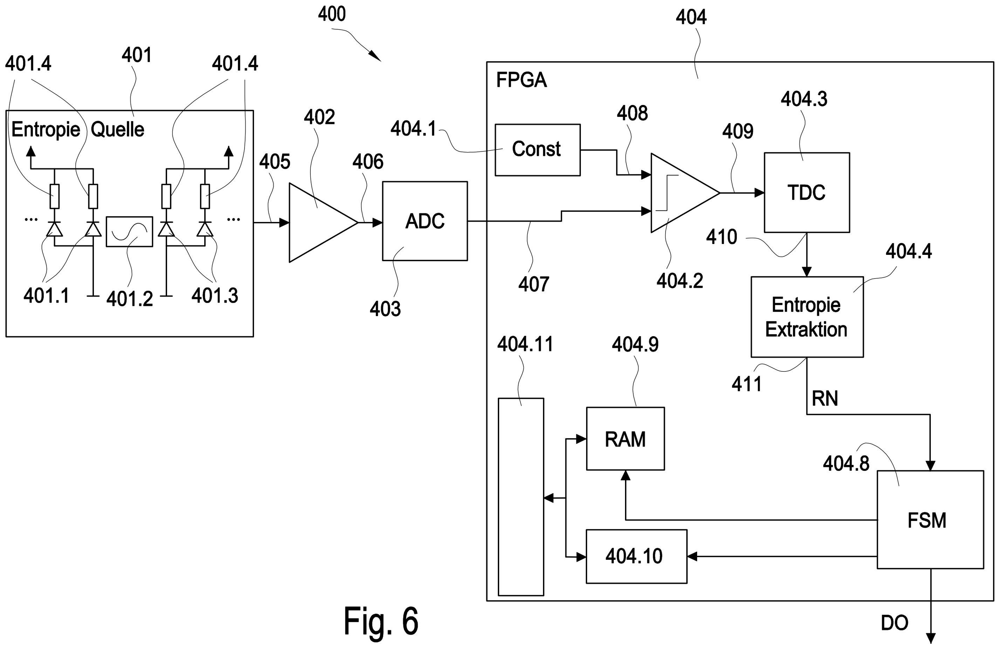

Die Verarbeitungsschaltung stellt dann bevorzugt die so gebildete Zufallszahl über den internen Datenbus 2 einem oder mehreren der einen oder mehreren Mikrocontrollerkerne 16 zur Verfügung (Fig. 1). Auf die Ausgestaltungen dieser Verarbeitungsschaltung wird weiter unten noch im Zusammenhang mit den Fign. 6 bis 9 eingegangen.

In einer sechsten Weiterbildung der Erfindung (siehe die Fign. 4 und 5) weist das Halbleitersubstrat eine Oberfläche 46 auf. Typischerweise weist das Halbleitersubstrat ein halbleitendes Material unterhalb seiner Oberfläche 46 auf. Insbesondere bei der Anwendung konventioneller Herstellungsprozesse für Halbleiterschaltungen, wie CMOS-Prozessen, Bipolarprozessen und BiCMOS-Prozessen, befindet sich auf der Oberfläche 46 des Halbleitersubstrats typischerweise ein Metallisierungsstapel aus strukturierten Metallschichten und diese elektrisch isolierende Isolationsschichten auf, wobei mindestens eine dieser Isolationsschichten 34 zumindest teil- oder abschnittsweise den Lichtwellenleiter 50 bildet. Die strukturierten Metallschichten bilden dabei typischerweise Leiterbahnen, die durch die Isolationsschichten voneinander elektrisch getrennt sind. Somit weist der Metallisierungsstapel eine typischerweise strukturierte und optisch transparente und elektrisch isolierende Isolationsschicht 34 aus z.B. Siliziumoxid auf, die sich auf der Oberfläche 46 des Halbleitersubstrats befindet. Zumindest ein Teil dieser Isolationsschicht 34 (d.h. ein Teilnehmer der Isolationsschicht in lateraler und/oder vertikaler Ausdehnung) auf der Oberfläche 46 des Halbleitersubstrats bildet bevorzugt den optischen Lichtwellenleiter 50. Der sich oberhalb dieser Isolationsschicht 34 befindende Teil des Metallisierungsstapels ist in den Fign. 4 und 5 schematisch gezeigt. Die erste SPAD-Diode 44 strahlt typischerweise aus dem halbleitenden Material des Halbleitersubstrats Licht 47 in diesen optischen Lichtwellenleiter 50 ein. D.h. in der Regel strahlt die erste SPAD-Diode 44 im Gegensatz zum Stand der Technik senkrecht zur Oberfläche 46 nach oben und nicht lateral in das Halbleitersubstrat hinein, das eine hohe Dämpfung aufweist. Hierdurch kann die Vorrichtung mehr Photonen der ersten SPAD-Diode 44 direkt mit der zweiten SPAD-Diode 45 koppeln. Der optische Lichtwellenleiter 50 transportiert diese Photonen 48 der ersten SPAD-Diode 44 im Lichtwellenleiter 50 im Vergleich zum Stand der Technik praktisch verlustfrei zur zweiten SPAD-Diode 45. Dabei dient die unterste Ebene des Metallisierungsstapels 43 der Reflektion von Licht (Photonen). Der Lichtwellenleiter 50 bestrahlt mit den Photonen 48 der ersten SPAD-Diode 44 die zweite SPAD-Diode 45 in der Art, dass das Licht 49 von innerhalb des Lichtwellenleiters 50 wieder in das halbleitende Material des Halbeleitersubstrats von der Oberfläche 46 aus eindringt und dort Vorrichtungsteile der zweiten SPAD-Diode 44 trifft. Die zweite SPAD-Diode 45 erzeugt dann in Abhängigkeit von der Bestrahlung mit den Photonen 48 (des Lichts 49) ein Ausgangssignal, aus dem die quantenprozessbasierte Zufallszahl erzeugt wird, was weiter unten noch beschrieben wird.

Typischerweise versorgt mindestens eine Betriebsschaltung die mindestens eine erste SPAD-Diode 44 zumindest zeitweise mit elektrischer Energie. Die mindestens eine erste SPAD-Diode 44 speist dann bei Versorgung mit ausreichender elektrischer Energie Photonen 47 in den mindestens einen Lichtwellenleiter 50 ein. Der Lichtwellenleiter 50 transportiert diese Photonen 48 dann weiter. Der mindestens eine Lichtwellenleiter 50 strahlt dann die Photonen 48 als Photonen 49 im Wesentlichen "von oben" in die zweite SPAD-Diode 45 ein. Da dieser Transport der Photonen von der ersten SPAD-Diode 44 zur zweiten SPAD-Diode 45 aufgrund der geringen Dämpfung im Lichtwellenleiter 50 wesentlich weniger Photonen verliert als in der Konstruktion aus dem Stand der Technik, die das stark absorbierende Halbleitersubstrat benutzt, ist der Quantenwirkungsgrad massiv höher. Daher reicht bei der hier vorgestellten Konstruktion bereits ein Paar aus einer einzigen ersten SPAD-Diode 44 und einer einzigen zweiten SPAD-Diode 45 aus (, obwohl nichtsdestotrotz erfindungsgemäß auch mehrere Paare von SPAD-Dioden eingesetzt werden können). Der Stand der Technik verwendet sowohl sender- als auch empfängerseitig immer mehrere SPAD-Dioden.

In Fig. 5 ist gezeigt, dass gegebenenfalls zwei oder mehr Dielektrikumsschichten, d.h. optisch transparente Isolationsschichten 34', 34", die zumindest bereichsweise direkt aneinandergrenzen, also in diesen Bereichen nicht durch Metallisierungsebenen getrennt sind, den Lichtwellenleiter 50' bilden. Die Kontaktierungen 51 und 52 der SPAD-Dioden 44 und 45 sind in diesem Ausführungsbeispiel derart positioniert, dass sie paarweise beidseitig eines Mittenbereichs des Lichtwellenleiters 50' angeordnet sind, so dass der Lichtwellenleiter in diesem Abschnitt der an einer Ebene 53 aneinandergrenzenden Isolationsschichten 34', 34" Photonen 47 der SPAD-Diode 44, wie bei 48 angedeutet, transportieren, und zwar nicht notwendigerweise nur in der oberen der beiden Isolationsschichten 34', 34", sondern auch vermittels beider, bis sie bei 49 auf die SPAD-Diode 45 treffen. Die Kontakte 51, 52 dienen dabei vorteilhafterweise auch der Reflektion und damit der "Einleitung" der Photonen in die SPAD-Diode 45. Auch die Kontakte 51, 52 der SPAD-Diode 44 dienen insoweit der Reflektion und "Umleitung" der aus der SPAD-Diode 44 austretenden Photonen 47 in Richtung zur SPAD-Diode 45.

In einer weiteren Weiterbildung des erfindungsgemäßen sicheren Mikrocontrollers 1 ist mindestens eine Datenschnittstelle der einen oder mehreren Datenschnittstellen eine drahtgebundene automobile Datenbusschnittstelle. In dem Fall kann die drahtgebundene automobile Datenbusschnittstelle beispielsweise eine CAN-Datenbusschnittstelle oder eine CAN-FD-Datenbusschnittstelle oder eine Flexray-Datenbusschnittstelle oder eine PSI5-Datenbusschnittstelle oder eine DSI3-Datenbusschnittstelle oder eine LIN-Datenbusschnittstelle oder eine Ethernet-Datenbusschnittstelle oder eine LIN-Datenbusschnittstelle oder eine MELIBUS-Datenbusschnittstelle sein.

In einer weiteren Weiterbildung des erfindungsgemäßen sicheren Mikrocontrollers 1 ist mindestens eine Datenschnittstelle eine drahtlose Datenbusschnittstelle. Die drahtlose Datenbusschnittstelle kann beispielsweise eine WLAN-Schnittstelle oder eine Bluetooth-Schnittstelle sein.

In einer weiteren Weiterbildung des erfindungsgemäßen sicheren Mikrocontrollers 1 ist mindestens eine Datenschnittstelle der eine drahtgebundene Datenbusschnittstelle. Die drahtlose Datenbusschnittstelle kann beispielsweise eine KNX-Datenbusschnittstelle oder eine EIB-Datenbusschnittstelle oder eine DALI-Datenbusschnittstelle oder eine PROFIBUS-Datenbusschnittstelle sein.

Fig. 6 zeigt schematisch das vereinfachte Blockdiagram eines quantenbasierten Zufallsgenerators QRNG 400 gemäß einem Ausführungsbeispiel der Erfindung. Die digitalen Schaltungen der beispielhaft in der Fig. 6 dargestellten Vorrichtung werden bevorzugt mit einem bevorzugt gemeinsamen Takt getaktet. Der Aufbau beinhaltet eine auf einem Quantenprozess basierende Entropie-Quelle 401, einen vorzugsweise breitbandigen Hochfrequenzverstärkers 402, einen Analog-Digital Konverter 403 mit einer Auflösung von z.B. 14 Bit und einer Abtastrate von z.B. 125 MS/s und ein Field Programmable Gate Array (FPGA) 404.

Die Entropie-Quelle 401 weist ein 2D-Array aus Single Photon Avalanche Dioden (SPAD) 401.1 und 401.3 auf. Diese SPAD-Dioden werden im Geigermodus mit einer Versorgungsspannung über der Durchbruchsspannung betrieben. Zusätzlich ist mit jeder SPAD-Diode ein Quenching-Widerstand 401.4 in Reihe geschaltet. Der Quenching-Widerstand 401.4 verhindert eine thermische Zerstörung der Diode bei einer ausgelösten Ladungsträgerlawine. Das Stromsignal der SPAD-Dioden wird über einen Shunt-Widerstand, bei dem es sich um den Quenching-Widerstand oder einen zusätzlich zu diesem vorgesehenen Widerstand handeln kann, gemessen. Das Array aus SPAD-Dioden besteht in dem Beispiel der Fig. 6 aus beispielhaft vier (aktiven bzw. Sende)SPAD-Dioden 401.1 und zwölf (passiven bzw. Empfänger-)SPAD-Dioden 401.3, die über einen optischen Wellenleiter 401.2 mit den SPAD-Dioden 401.1 gekoppelt sind, wie es zuvor anhand der Fign. 4 und 5 für den Lichtwellenleiter 50 beschrieben ist. Die aktiven SPAD-Dioden 401.1 emittieren Licht. Sie entsprechen der ersten SPAD Diode 44 der Fign. 4 und 5. Die aktiven SPAD 401.1 befinden sich bevorzugt im Inneren des Arrays der SPAD-Dioden. Die vorschlagsgemäße Vorrichtung versorgt die aktiven SPAD-Dioden 401.1 mit einer erhöhten Versorgungsspannung und betreibt daher die aktiven SPAD-Dioden 401.1 weit oberhalb der Durchbruchspannung. Dies erhöht die Dunkelzählrate, was zu einer höheren Anzahl an spontan emittierten Photonen 47 führt. Der optische Wellenleiter 401.2 leitet einige dieser Photonen als Photonen 48 an die passiven SPAD-Dioden 401.3 weiter. Der optische Wellenleiter 401.2 entspricht z.B. dem Lichtwellenleiter 50 der Fign. 4 und 5. Jede der passiven SPAD-Dioden 401.3 entspricht z.B. der zweiten SPAD-Diode 45 der Fign. 4 und 5. Die vorschlagsgemäße Vorrichtung versorgt die passiven SPAD-Dioden 401.3 mit einer erhöhten Versorgungsspannung und betreibt die passiven SPAD-Dioden 401.3 geringfügig über der Durchbruchspannung. Bevorzugt sind die passiven SPAD-Dioden 401.3 als Ring um die aktiven SPAD-Dioden 401.2 angeordnet. Die passiven SPAD-Dioden 401.3 detektieren die über den Wellenleiter 401.2 ankommenden Photonen. Die passiven SPAD-Dioden 401.3 erzeugen in Abhängigkeit von den ankommenden Photonen einen Stromfluss durch z.B. einen Shunt-Widerstand und damit ein Spannungssignal.

Das Spannungssignal 405 der Entropie-Quelle 401 wird vorzugsweise auf einen breitbandigen z.B. 40 dB Hochfrequenzverstärker 402 gegeben. Der Hochfrequenzverstärker 402 besitzt bevorzugt einer Bandbreite von 30 bis 4000 MHz und bevorzugt einen 1-dB-Kompressionspunkt von 20 dBm. Der Spannungshub des Spannungssignals 405 der Entropie-Quelle 401 bewegt sich typischerweise im Sub-Millivoltbereich. Der Hochfrequenzverstärker 402 verstärkt den Spannungshub des Spannungssignals 405 der Entropie-Quelle 401 auf z.B. 50 bis 150 mV.

Das Verstärkerausgangssignal 406 des Hochfrequenzverstärkers 402 wird nach einer Analog-zu-Digital-Wandlung im ADC 403 an z.B. einen FPGA 404 weitergegeben. Andere diskrete oder ASIC basierte Lösungen sind selbstverständlich möglich. Insofern ist das FPGA nur eine von vielen verschiedenen Realisierungen der mit der in diesem Ausführungsbeispiel vorgestellten technischen Lehre. Das FPGA 404 umfasst bevorzugt einen Microcontroller. Bei dem FPGA 404 kann es sich z.B. um einen Zynq 7010 von der Firma Xilinx mit einem Dual-Core ARM Cortex-A9 MPCore handeln. Dieser ist Teil der SPAD-Auswerteschaltung dieses Ausführungsbeispiels, die ferner in den Beispielen der Fign. 4 und 5 über den z.B. 14 Bit aufweisenden ADC 403 mit einer beispielhaften Abtastrate von 125 Mega-Samples/s und einer beispielhaften Bandbreite von 50 Mhz verfügt. Das verstärkte Spannungssignal steht am Eingang des Hochfrequenzverstärkers 402 als das Verstärkerausgangssignal 406 zur Verfügung. Der ADC 403 tastet das Verstärkerausgangssignal 406 des Hochfrequenzverstärkers 402 ab. Der ADC 403 gibt beispielsweise die ermittelten Abtastwerte des Verstärkerausgangssignals 406 des Hochfrequenzverstärkers 402 digital mit einer Bitbreite von beispielsweise 14 Bit an den verbauten FPGA 404 des Messboards weiter.

Die als Blockschaltbild vereinfacht in Fig. 6 dargestellte Vorrichtung beinhaltet einen Komparator 404.2, einem Zeit-zu-Digital-Konverter (TDC=time to digital converter) 404.3, eine Entropie-Extraktionsvorrichtung 404.4 und eine Finite-State-Machine (endlichen Automaten) 404.8.

Der Komparator 404.2 vergleicht beispielsweise den digitalen 14 Bit Wert 407 des ADC 403 mit einem Referenzwert 404.1, der eine Schwelle repräsentiert, woraus ein zwei Takte langer 1 Bit Ausgangspuls als Ausgangssignal 409 des Komparators 404.2 resultiert, wenn der Wert am Ausgang des ADCs 403 größer ist als der Referenzwert 404.1. Das Ausgangssignal 409 des Komparators 404.2 wird dem Zeit-zu-Digital-Konverter 404.3 zugeführt. Der Zeit-zu-Digital-Konverter 404.3 weist bevorzugt beispielsweise einen 32 Bit Zähler auf, der im Takt der SPAD-Auswerteschaltung hochzählt. Die Bitbreite des Zählers kann je nach Anwendung abweichen. Dieser Takt kann beispielsweise eine Frequenz von 125 MHz haben. Das 1-Bit-Ausgangssignal des Komparators 404.2 setzt vorzugsweise den Zählerstand dieses Zählers zurück. Der Zeit-zu-Digital-Konverter 404.3 gibt den zu diesem Zeitpunkt vorliegenden, d.h. den unmittelbar vor dem Zurücksetzen vorliegenden Zählerstand an seinen Ausgang 410 weiter. Das Zählergebnis hat bei einem beispielhaften 125 MHz Takt eine Auflösung von 1/125 MHz=8 ns. Der Ausgang 410 des Zeit-zu-Digital-Wandlers (TDC) 404.3 gibt das beispielhafte 32 Bit Zählergebnis, auch Rohdaten RD genannt, des Zeit-zu-Digital-Wandlers 404.3 an die Entropie-Extraktionsvorrichtung 404.4 weiter. Die Entropie-Extraktionsvorrichtung 404.4 wandelt die bezüglich ihrer Zusammensetzung und Aufeinanderfolge zufälligen Rohdaten RD des TDC 404.3 des Signals des Ausgangs 410 des Zeit-zu-Digital-Wandlers (TDC) 404.3 in eine 1-Bit-Zufallszahl RN 411 am Ausgang der Entropie-Extraktionsvorrichtung 404.4 um. Der Ausgang 411 der Entropie-Extraktionsvorrichtung 404.4 ist mit dem Eingang einer Finite-State-Machine (FSM) 404.8 verbunden.

Die FSM 404.8 hat die Aufgabe, Daten von der Entropie-Extraktionsvorrichtung 404.4 entgegenzunehmen und daraus die QRNG-Zufallszahl zu generieren, die die FSM 404.8 in einem Speicher RAM 404.9 des FPGA 404 speichert. Nach erfolgreichem Schreibvorgang setzt die FSM 404.8 ein Finish Flag 404.10. Das Finish Flag 404.10 ist beim Systemstart nicht gesetzt. Ein Mikrocontroller 404.11, beispielsweise ein Dual-Core Arm Cortex-A9 MPCore, greift auf den Block RAM 404.9 zu und liest aus dem RAM 404.9 die Zufallszahl aus. Bei dem Mikrocontroller 404.11 handelt es sich also z.B. um den Mikrocontrollerkern gemäß der Erfindung.

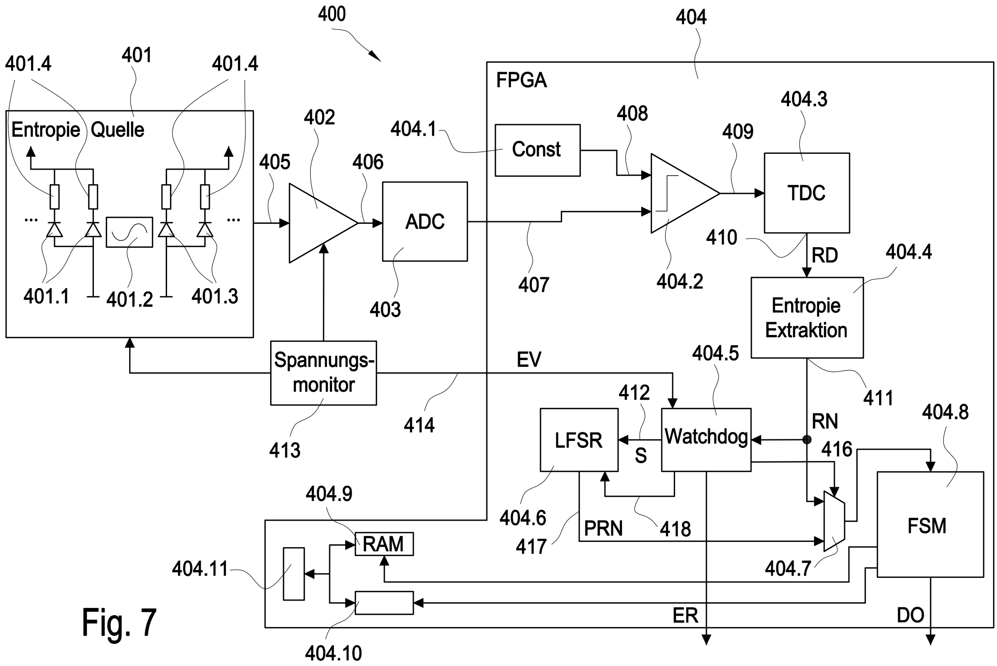

Fig. 7 zeigt das erweiterte beispielhafte FPGA-Design mit Überwachung des für die Zufallszahl RN zu verwendenden Signals am Ausgang 411 der Entropie-Extraktionsvorrichtung 404.4 und einem zusätzlichem Backup System für den Fall, dass bei der Erzeugung der QRNG-basierten Zufallszahl ein potentieller Fehler aufgetreten ist.

Die Erweiterung der Vorrichtung nach Fig. 7 betrifft einen zusätzlichen Watchdog 404.5, ein linear rückgekoppeltes Schieberegister 404.6 als ein Beispiel für einen PRN-Generator, einen Signal-Multiplexer 404.7 und einen Spannungsmotor 413. Der Mikrocontroller 404.11 kann mit diesen Komponenten auch extern aufgebaut werden.

Der Ausgang 411 der Entropie-Extraktionsvorrichtung 404.4 ist nun verbunden mit dem Watchdog 404.5 und dem Signal Multiplexer 404.7. Der Watchdog 404.5 überwacht die 1-Bit-Zufallszahl RN am Ausgang 411 der Entropie-Extraktionsvorrichtung 404.4 auf Validität. Der Watchdog 404.5 erfasst zumindest drei definierte Fehlerfälle. Der Watchdog 404.5 gibt dazu beispielsweise die letzten validen Zufallszahlen als Seed S Ausgangssignal 412 an das linear rückgekoppelte Schieberegister 404.6. Sofern ein Fehler auftritt, setzt der Watchdog Fehlerbits in einem nicht gezeichneten Fehler-Register ER des Microcontrollers 404.11 Welches Fehlerbit der Watchdog 404.5 im Fehler-Register des Microcontrollers 404.11 setzt, ist vorzugsweise abhängig von der Art des Fehlerfalls. Zusätzlich ist der Watchdog 404.5 über ein oder mehrere, vorzugsweise digitale Ein-Ausgabe-Signalleitungen 414 mit einem Spannungsmonitor 413 verbunden.

Der Spannungsmonitor 413 überwacht beispielsweise die Betriebsspannungen der Entropie-Quelle 401. Ist die Betriebsspannung einer der Verschaltungen der SPAD-Dioden 401.1 und 401.3 zu niedrig, also betragsmäßig unterhalb eines unteren SPAD-Betriebsspanungsschwellwerts, oder zu hoch, also betragsmäßig oberhalb eines oberen SPAD-Betriebsspanungsschwellwerts, so detektiert Spannungsmonitor 413 diese Spannungsabweichung. Im Fall einer solchen Spannungsabweichung signalisiert der Spannungsmonitor 413 diese an den Watchdog 404.5 oder direkt an den Mikrocontroller 404.11. Im Falle einer Signalisierung an den Watchdog 404.5 kann beispielsweise der Watchdog 404.5 ein Interrupt-Signal für den Mikrocontroller 404.11 erzeugen. Der Watchdog 404.5 kann beispielsweise einen solchen Interrupt des Microcontrollers 404.11 oder einer anderen Teilvorrichtung eines Anwendungssystems auslösen, wenn die Versorgungsspannung der Entropie-Quelle 401 oder des Hochfrequenzverstärkers 402 oder eines anderen Vorrichtungsteils des Quantenzufallszahlengenerators QRNG 400 fehlerhaft ist.

Hat der Watchdog 404.5 einen Fehler detektiert, so wechselt der Quantenzufallszahlengenerator 400 in einen Notlaufzustand. Hierzu setzt der Watchdog 404.5 das Selektionssignal 416 des Signal Multiplexers 404.7, so dass der Signal Multiplexers 404.7 statt des Ausgangs 411 der Entropie-Extraktionsvorrichtung 404.4 eine durch das linear rückgekoppelte Schieberegisters 404.6 erzeugte Pseudozufallszahl PRN in Form eines Stroms von Pseudozufallsbits über eine Pseudozufallssignalleitung 417 als Ersatz für die am Ausgang 411 der Entropie-Extraktionsvorrichtung 404.4 anstehende potenziell fehlerhafte 1-Bit-Zufallszahl RN an den Eingang der FSM 404.8 legt.

Das linear rückgekoppelte Schieberegister 404.6 ist mit dem Ausgang 412 des Watchdog 404.5 verbunden und erhält von diesem dessen Seed S Ausgangssignal 412. Der Watchdog 404.5 aktiviert im Fehlerfall das linear rückgekoppelte Schieberegister 404.6 (siehe die Verbindung 418). Das linear rückgekoppelte Schieberegister 404.6 generiert dann Pseudozufallszahlen PRN. Der Seed S des Watchdog-Ausgangssignals 412 weist bevorzugt die letzten beispielsweise 16 noch gültigen Zufallszahlen (z.B. jeweils 1 Bit) auf. Der Watchdog 404.5 legt bevorzugt diese letzten gültigen Zufallszahlen an den Eingang des linear rückgekoppelten Schieberegister 404.6. Der Seed S dient somit als zufälliger PQC sicherer Startwert für das Generatorpolynom der Rückkopplung des linear rückgekoppelten Schieberegisters 404.6 für die Generierung der Pseudozufallszahl PRN für die Pseudozufallssignalleitung 417. Das Generatorpolynom sowie der Grad des Generatorpolynoms sind dabei bevorzugt frei wählbar.

Das Signal des Ausgangs 411 der Entropie-Extraktionsvorrichtung 404.4 mit der 1 Bit Zufallszahl RN der Entropie-Extraktionsvorrichtung 404.4 bzw. das Signal der Pseudozufallssignalleitung 417 mit der Pseudozufallszahl PRN des linear rückgekoppelten Schieberegisters 404.6 sind mit den Eingängen des Signal-Multiplexers 404.7 verbunden. Der Signal-Multiplexer 404.7 leitet je nach dem Wert SEL des Selektionssignals 416 eines seiner beiden Eingangssignale an die FSM 404.8 weiter. Es ist denkbar, einen Multiplexer mit mehr als zwei Eingängen und komplexerem Ansteuersignal zu verwenden, wenn die Anwendung dies erfordert. Die Zahl der Eingänge der Signal-Multiplexers 404.7 ist daher typischerweise größer als oder gleich zwei.

Die FSM 404.8 hat wiederum die Aufgabe, vom Ausgang des Signal-Multiplexers 404.7 die Zufallsdaten RN oder die Pseudozufallszahl PRN entgegenzunehmen und in den Speicher RAM 404.9 des FPGA 404 zu schreiben. Ist der Schreibvorgang erfolgreich, setzt die FSM 404.8 wieder das Finish Flag 404.10. Daraufhin kann der Mikrocontroller 404.11 auf den Speicher 404.9 RAM zugreifen und die Zufallszahl auslesen und beispielsweise zur Verschlüsselung, Authentifizierung, zur Signierung usw. benutzen.

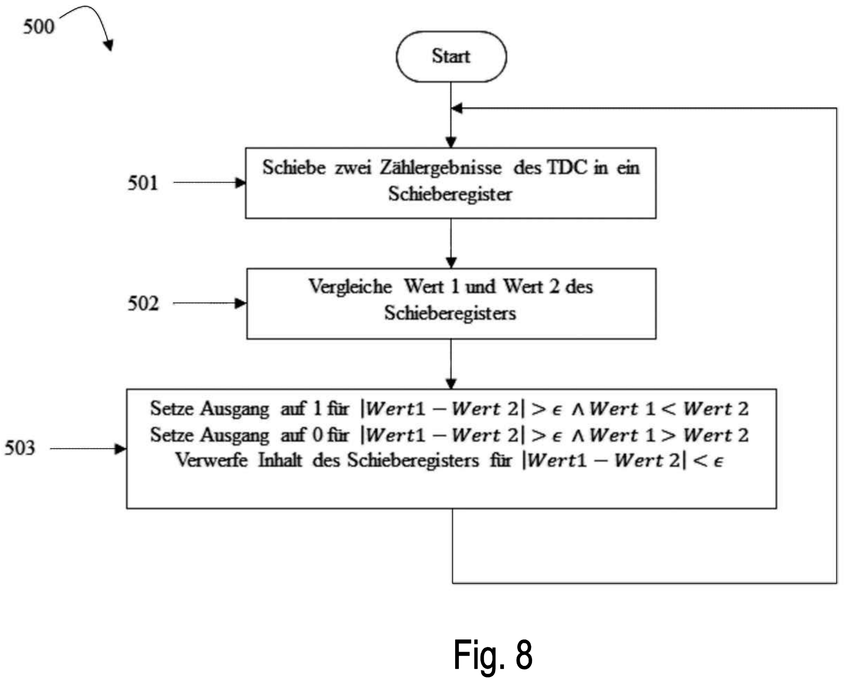

Fig. 8 zeigt ein Flussdiagramm 500 für ein Entropie-Extraktionsverfahren, das beispielsweise durch die Entropie-Extraktionsvorrichtung 404.4 des QRNG 400 der Fign. 6 und 7 ausgeführt wird. Das Verfahren sieht vor, zunächst in einem ersten Schritt 501 zwei Werte des Ausgangs 410 des Zeit-zu-Digital-Wandlers 404.3 zu ermitteln und in einem Schieberegister der Entropie-Extraktionsvorrichtung 404.4 zu speichern. Sind zwei Werte im Schieberegister der Entropie-Extraktionsvorrichtung 404.4 gespeichert, so vergleicht die Entropie-Extraktionsvorrichtung 404.4 diese beiden Werte in einem zweiten Schritt 502. Die beiden Werte im Schieberegister der Entropie-Extraktionsvorrichtung 404.4 umfassen also einen ersten Wert und einen zweiten Wert, die beide der Zeit-zu-Digital-Wandler 404 mittels zweier verschiedener Messungen des jeweiligen Zeitraums zwischen jeweils zwei Signalpulsen oberhalb des Referenzwerts 404.1 ermittelt hat. In einem dritten Schritt 503 bewertet die Entropie-Extraktionsvorrichtung 404.4 die beiden Werte. Ist der erste Wert kleiner als der zweite Wert und die Differenz zwischen Wert 1 und Wert 2 größer als eine Mindestdifferenz ε, so setzt die Entropie-Extraktionsvorrichtung 404.4 den Wert ihres Ausgangs 411 auf einen ersten logischen Wert. Ist der erste Wert größer als der zweite Wert und die Differenz zwischen dem ersten Wert und dem zweiten Wert größer als die Mindestdifferent ε, so setzt die Entropie-Extraktionsvorrichtung 404.4 ihren Ausgang auf einen zweiten logischen Wert, der vom ersten logischen Wert verschieden ist.

Ist die Differenz zwischen dem ersten Wert und dem zweiten Wert kleiner als die Mindestdifferenz ε, so verwirft die Entropie-Extraktion den ersten Wert und den zweiten Wert. Bevorzugt veranlasst das Entropie-Extraktionsverfahren den Watchdog (bei der Vorrichtung der Fig. 7) in einem solchen Fall, einen Fehlerzähler um eine erste Fehlerzählerschrittweite zu erhöhen. Die erste Fehlerzählerschrittweite kann negativ sein. Umgekehrt kann die Entropie-Extraktionsvorrichtung 404.4 den Fehlerzähler des Watchdogs um eine zweite Fehlerzählerschrittweite erniedrigen, wenn die Differenz zwischen dem ersten Wert und dem zweiten Wert größer als die Mindestdifferenz ε ist. Die zweite Fehlerzählerschrittweite kann gleich der ersten Fehlerzählerschrittweite sein. Typischerweise sind die Vorzeichen der ersten Fehlerzählerschrittweite und der zweiten Fehlerzählerschrittweite gleich. Bevorzugt kann der Mikrocontroller 404.11 die Fehlerzählerschrittweiten und den Startwert des Fehlerzählers und einen Fehlerzählerschwellwert setzen. Kreuzt der Zählerstand des Fehlerzählers den Fehlerzählerschwellwert, so signalisiert der Watchdog 404.5 vorzugsweise mittels eines Interrupts oder einer anderen Signalisierung an den Mikrocontroller das Vorliegen eines kritischen Fehlerzustands. Der Mikrocontroller 404.11 startet dann typischerweise ein Selbsttestprogramm, um die verschiedenen Teile des Quantenzufallszahlengenerators 400 nach Fig. 7 zu testen. Bevorzugt kann der Mikrocontroller hierzu beispielsweise den Analog-zu-Digital-Wandler 403 in einen Zustand versetzen, in dem der Mikrocontroller 404.11 ein Ausgangsregister des Analog-zu-Digital-Wandlers mit Testwerten beschreiben kann, die die nachfolgende Signalkette dann wie echte Abtastwerte weiterverarbeitet. Da die Testwerte vorbekannt sind, kann die korrekte Reaktion des Restsystems, beispielsweise das Hochzählen des Fehlerzählers im Watchdog 404.5 durch den Mikrocontroller 404.11 beobachtet und bewertet werden. Bevorzugt kann der Mikrocontroller 404.11 daher möglichst alle Speicherknoten des FPGAs 404 überwachen und deren logischen Zustand lesen.

Sofern ein Wert kleiner als ein Mindestwert ist, handelt es sich um einen Wert, der innerhalb der Totzeit der SPAD Dioden liegt. Ein solcher Wert wird vorzugsweise verworfen und der Fehlerzähler um die erste Fehlerschrittweite erhöht. In dem Fall wartet die Entropie-Extraktionsvorrichtung 404.4 die Ermittlung des nächsten Werts durch den Zeit-zu-Digital-Wandler 404.3 ab.

Ist das Zufallsbit auf diese Weise extrahiert, beginnt das Verfahren von vorne.

Sofern der Fehlerzähler den Fehlerzählerschwellwert kreuzt oder erreicht, kann beispielsweise ein Fehler vorliegen, bei dem der Zeit-zu-Digital-Wandler beispielsweise konstante Zahlen liefert.

Diese Vorrichtung ist somit in der Lage, einen Ausfall der Spannungsversorgung der Entropie-Quelle oder anderer Teile der Vorrichtung zu detektieren. Der Mikrocontroller 404.11 kann den ADC 403 auch zu Testzwecken und Spannungen und Ströme im Quantenzufallszahlengenerator 400 erfassen und die so ermittelten Werte mit Erwartungswertbereichen vergleichen, innerhalb der diese Werte liegen müssen. Auch kann der Mikrocontroller 404.11 digitale Werte innerhalb des Quantenzufallszahlengenerators 400 erfassen. Beispielsweise kann der Mikrocontroller 404.11 den Referenzwert 404.1 für Testzwecke so niedrig setzen, dass der Zeit-zu-Digital-Wandler 404.3 im Wesentlichen durch das Signalrauschen an seinem Eingang gesteuert wird. Die Werte des Zeit-zu-Digital-Wandlers 404.3 sollten dann einer erwarteten Statistik in einem Toleranzband genügen. Ist dies nicht der Fall, so liegt ein Fehler vor.

Der Watchdog 404.5 kann die Entropie der gelieferten Zufallszahlen überwachen. Sofern die mittlere Entropie der Bits über einen Entropie-Messzeitraum um mehr als ein erlaubter Entropie-Abweichungswert von z.B. 50% abweicht, schließt der Watchdog auf einen Fehler und inkrementiert den Fehlerzähler. Vorzugsweise stoppt der Watchdog dann die Verwendung dieser Zufallsbits am Ausgang 411 der Entropie-Extraktionsvorrichtung 404.4, um die Versendung von Klartext zu verhindern. Als "Klartext" wird eine Information bezeichnet, die von einem Dritten mit statistischen Methoden oder direkt verstanden werden kann, da die Information nur mangelhaft verschlüsselt ist. Es ist nämlich denkbar, das auch bei funktionierenden Teilvorrichtungen zufällig eine logische "Dauereins" oder eine logische "Dauernull" erzeugt wird. Es ist somit sinnvoll, wenn die maximale Länge einer Bitsequenz am Ausgang der Entropie Extraktionsvorrichtung auf einen durch den Mikrocontroller 404.11 programmierbaren Wert begrenzt wird.

Im Wesentlichen kann der vorbeschriebene Quantenzufallszahlengenerator 400 damit folgende Fehler erkennen und mit niedrigerem Sicherheitsniveau durch einen Notlauf mittels eines linear rückgekoppelten Schieberegisters 404.6 oder eines anderen PRN-Generators auffangen:
- Störung von Versorgungsspannungen,
- fehlerhafte Signalerzeugung der SPAD-Dioden 401.1 und 401.3,
- Störung des Lichtwellenleiters 401.2 und/oder der Ankoppelungen der SPAD-Dioden 401.1 und 401.3 an den Lichtwellenleiter 401.2,
- Schaltungsausfälle im FPGA 404, d.h. im Digitalteil des Quantenzufallszahlengenerators 400,
- fehlerhafte Entropie der gelieferten Zufallszahlen, was durch Testen der 1-Bit-Zufallszahl RN erfolgen kann, wie beschrieben in z.B. David Johnston, Random Number Generators - Principles and Practices, Kapitel 8 und 9, 2018, Walter De Gruyter GmbH, Berlin/Boston, ISBN 978-1-5015-1530-2.

Es ist denkbar, statt des linear rückgekoppelten Schieberegisters 404.6 einen zweiten kompletten Quantenzufallszahlengenerator 400 einzusetzen, dessen Signal am Ausgang von dessen Entropie-Extraktionsvorrichtung 404.4 dann anstelle des Signals der Pseudozufallssignalleitung 417 für den Notlauf verwendet wird.

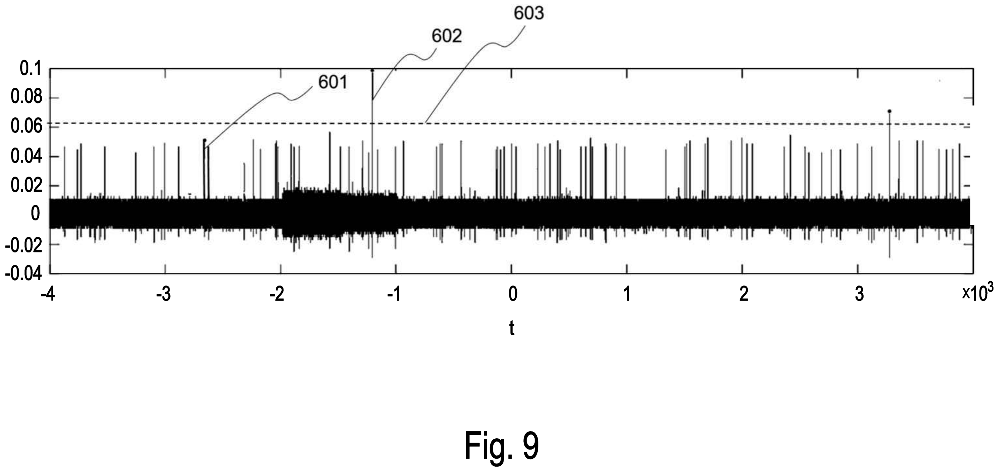

Fig. 9 zeigt ein beispielhaftes Oszillogramm des Spannungssignals 405 am Ausgang der Entropie-Quelle 401. Wie zu erkennen ist, treten erste Spikes mit einer ersten Höhenklasse 601 und zweite Spikes mit einer zweiten Höhenklasse 602 auf. Die Streuung der ersten Höhenklasse 601 der ersten Spikes und die Streuung der zweiten Höhenklasse der zweiten Spikes ist jeweils so gering, dass eine klare Trennung beider Höhenklassen 601, 602 mittels eines Schneidepegels 603 möglich ist. Der Schneidepegel 603 entspricht dem Wert, den der Mikrocontroller 404.11 als Referenzwert 404.1 einstellt. Zur Entstehung der ersten und zweiten Spikes infolge des gleichzeitigen Auftretens einer spontanen und einer stimulierten Photonenemission der zweiten SPAD-Diode oder einer der zweiten SPAD-Dioden (zweite Spikes) und infolge ausschließlich einer spontanen Photonenemission der zweiten SPAD-Diode oder einer der zweiten SPAD-Dioden (erste Spikes) wird auf die Erläuterung weiter oben im Test verwiesen.

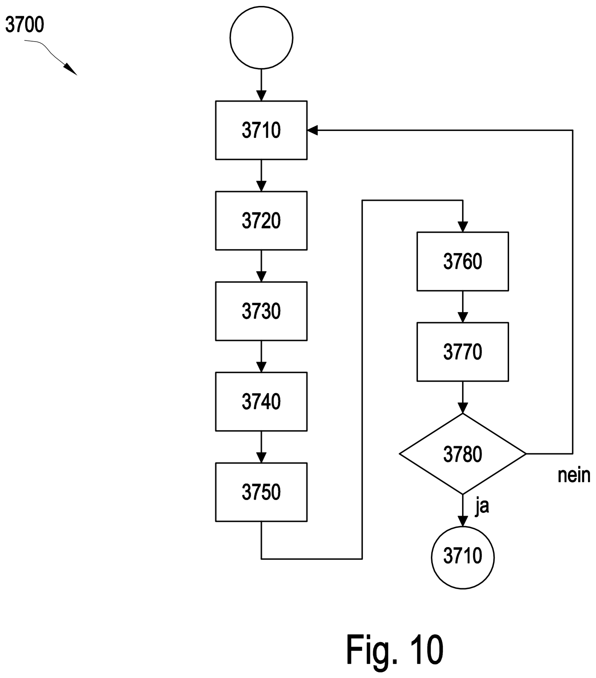

Fig. 10 zeigt schematisch das vorschlagsgemäße Verfahren 3700 zur Erzeugung einer Quantenzufallszahl. Das Verfahren 3700 beginnt mit der Erzeugung 3710 eines zufälligen Einzelphotonenstroms (47, 48, 49, 401.2) mittels einer oder mehrerer erster SPAD-Dioden (401.1, 44). Das Verfahren 3700 setzt sich fort mit der Übertragung 3720 des zufälligen Einzelphotonenstroms (47, 48, 49, 401.2) mittels eines vom Halbleitersubstrat (49, 48) verschiedenen Lichtwellenleiters (44, 401.2) an eine oder mehrere zweite SPAD-Dioden (401.3, 45). Es folgt die Wandlung 3730 des zufälligen Einzelphotonenstroms (47, 48, 49, 401.2) in ein Detektionssignal in Form eines Spannungssignal 405 der Entropie Quelle 401, die bevorzugt die ersten SPAD-Dioden 401.1 und den Lichtwellenleiter 401.2 und die zweiten SPAD-Dioden 401.3 umfasst. Dann folgt das Aufbereiten 3740, insbesondere ein Verstärken und/oder ein Filtern und/oder ein Analog-zu-Digital-Wandeln, des Detektionssignals in ein aufbereitetes Detektionssignal, insbesondere einen digitalen 14 Bit-Wert 407 des Analog-zu-Digital-Wandlers 403. Dann erfolgt das Abtrennen 3750 der durch Kopplungen der Emissionen einer ersten SPAD-Diode 401.1 und einer zweiten SPAD-Diode 401.3 entstandenen Pulse des aufbereiteten Detektionssignals von den ausschließlich durch spontane Emission entstandenen Pulsen des aufbereiteten Detektionssignals durch Vergleich des aufbereiteten Detektionssignals mit einem Schwellwert, insbesondere in einem Komparator (siehe 404.2 in den Fign. 6 und 7) und die Erzeugung eines entsprechenden Ausgangssignals 409, insbesondere des Komparators 404.2. So dann folgt die Ermittlung 3760 eines ersten zeitlichen Abstands zwischen dem ersten Puls und dem zweiten Puls eines ersten Paares aus zwei aufeinanderfolgenden Photonen, die durch Kopplungen der spontanen Photonenemission einer ersten SPAD-Diode 401.1 mit einer durch die Photonenemission stimulierte Photonenemission der zweiten SPAD-Diode 401.3 entstandenen sind und die Ermittlung eines zweiten zeitlichen Abstands zwischen einem dritten Puls und einem vierten Puls eines zweiten Paares aus zwei aufeinanderfolgenden, durch die gleiche Art von Kopplungen der Emissionen einer ersten SPAD-Diode 401.1 und einer zweiten SPAD-Diode 401.3 entstandenen Pulse des aufbereiteten Detektionssignals und, insbesondere zur Ermittlung des ersten Werts des Ausgangs 410 des Zeit-zu-Digital-Wandlers 404.3 und des zweiten Werts des Ausgangs 410 des Zeit-zu-Digital-Wandlers 404.3. Auf dieser Basis erfolgt dann die Ermittlung 3670 des Bitwerts eines Zufallsbits durch Vergleich des Werts des ersten zeitlichen Abstands und des Werts des zweiten zeitlichen Abstands. Im letzten Schritt 3680 wird überprüft, ob die Anzahl n der ermittelten Zufallsbits noch kleiner als die Anzahl m der Zufallsbits der gewünschten Quantenzufallszahl ist. Sofern dies nicht der Fall ist, werden die vorstehenden Schritte wiederholt. Ansonsten ist der Prozess zur Erzeugung einer Quantenzufallszahl beendet.

### Vorteil

Der hier vorgestellte sichere Mikrocontroller weist eine verbesserte Entropie seines mindestens einen Zufallszahlengenerators auf. Dadurch ist die mit dem Mikrocontroller erreichbare Verschlüsselung im Gegensatz zum Stand der Technik hinsichtlich ihrer Effektivität erhöht und darüber hinaus post quantum sicher. Die Vorteile der Erfindung sind hierauf aber nicht beschränkt.

Die obige Beschreibung erhebt keinen Anspruch auf Vollständigkeit und ist nicht auf die gezeigten Beispiele beschränkt. Andere Variationen zu den hier beschriebenen Beispielen können von denjenigen, die über gewöhnliche Fachkenntnisse auf dem Gebiet verfügen, anhand der Zeichnungen, der Beschreibung und der Ansprüche verstanden und ausgeführt werden. Die unbestimmten Singular-Artikel "ein" oder "eine" und deren Flexionen schließen den Plural nicht aus, während die Erwähnung einer bestimmten Anzahl von Elementen nicht die Möglichkeit ausschließt, dass mehr oder weniger Elemente vorhanden sind. Eine einzige Einheit kann die Funktionen mehrerer in der Beschreibung genannter Elemente erfüllen, und umgekehrt können mehrere Elemente die Funktion einer Einheit erfüllen. Zahlreiche Alternativen, Äquivalente, Variationen und Kombinationen sind möglich, ohne dass der Anwendungsbereich der vorliegenden Anmeldung verlassen wird.

Soweit nichts anders angegeben ist, können sämtliche Merkmale der vorliegenden Erfindung frei miteinander kombiniert werden. Dies betrifft die gesamte hier vorgelegte Anmeldung. Auch die in der Figurenbeschreibung beschriebenen Merkmale können, soweit nichts anderes angegeben ist, als Merkmale der Erfindung frei mit den übrigen Merkmalen kombiniert werden. Eine Beschränkung einzelner Merkmale der Ausführungsbeispiele auf die Kombination mit anderen Merkmalen der Ausführungsbeispiele ist dabei ausdrücklich nicht vorgesehen. Außerdem können gegenständliche Merkmale der Vorrichtung umformuliert auch als Verfahrensmerkmale Verwendung finden und Verfahrensmerkmale umformuliert als gegenständliche Merkmale der Vorrichtung. Eine solche Umformulierung ist somit automatisch mit offenbart.

In der vorausgehenden detaillierten Beschreibung wird auf die beigefügten Zeichnungen verwiesen. Die Beispiele in der Beschreibung und den Zeichnungen sollten als illustrativ betrachtet werden und sind nicht als einschränkend für das beschriebene spezifische Beispiel oder Element zu betrachten. Aus der vorausgehenden Beschreibung und/oder den Zeichnungen und/oder den Ansprüchen können durch Abänderung, Kombination oder Variation bestimmter Elemente mehrere Beispiele abgeleitet werden. Darüber hinaus können Beispiele oder Elemente, die nicht wörtlich beschrieben sind, von einer fachkundigen Person aus der Beschreibung und/oder den Zeichnungen abgeleitet werden.

Die Erfindung wurde vorstehend anhand eines Mikrocontrollers für automobile Anwendungen beschrieben. Für den Fachmann allerdings ist klar, dass der diesbezügliche Verwendungszweck basierend auf der Offenbarung sowohl in der bzw. den prioritätsbegründenden Patentanmeldungen als auch in der vorliegenden PCT-Anmeldung nicht einschränkt. Vielmehr kann der erfindungsgemäße Mikrocontroller in sämtlichen Vorrichtungen eingesetzt werden, bei denen es um die PQK-sichere Verschlüsselung und/oder die PQR-Signatur von Daten und die Be- und Verarbeitung sicherheitsrelevanter Daten geht. Eine PQR-Verschlüsselung kann bevorzugt durch eines der nachfolgenden Verfahren erfolgen:
BIKE1-L1-CPA, BIKE1-L3-CPA, BIKE1-L1-FO, BIKE1-L3-FO, Kyber512, Kyber768, Kyber1024, Kyber512-90s, Kyber768-90s, Kyber1024-90s, LEDAcryptKEM-LT12, LEDAcrypt-KEM-LT32, LEDAcryptKEM-LT52, NewHope-512-CCA, NewHope-1024-CCA, NTRU-HPS-2048-509, NTRU-HPS-2048-677, NTRU-HPS-4096-821, NTRU-HRSS-701, LightSaber-KEM, Saber-KEM, FireSaber-KEM, BabyBear, BabyBearEphem, Mama-Bear, MamaBearEphem, PapaBear, PapaBearEphem, FrodoKEM-640-AES, FrodoKEM-640-SHAKE, FrodoKEM-976-AES, FrodoKEM-976-SHAKE, FrodoKEM-1344-AES, FrodoKEM-1344-SHAKE, SIDH-p434, SIDH-p503, SIDH-p610, SIDH-p751, SIDH-p434-compressed, SIDH-p503-compressed, SIDH-p610-compressed, SIDH-p751-compressed, SIKE-p434', SIKE-p503, SIKE-p610', 'SIKE-p751, SIKE-p434-compressed, SIKE-p503-compressed, SIKE-p610-compressed, SIKE-p751-compressed.

Eine PQR-Signatur kann bevorzugt durch eines der nachfolgenden Verfahren erfolgen:
DILITHIUM_2, DILITHIUM_3, DILITHIUM_4, MQDSS-31-48, MQDSS-31-64, SPHINCS+-Haraka-128f-robust, SPHINCS+-Haraka-128f-simple, SPHINCS+-Haraka-128s-robust, SPHINCS+-Haraka-128s-simple, SPHINCS+-Haraka-192f-robust, SPHINCS+-Haraka-192f-simple, SPHINCS+-Haraka-192s-robust, SPHINCS+-Haraka-192s-simple, SPHINCS+-Haraka-256f-robust, SPHINCS+-Haraka-256f-simple, SPHINCS+-Haraka-256s-robust, 'SPHINCS+-Haraka-256s-simple, SPHINCS+-SHA256-128f-robust, SPHINCS+-SHA256-128f-simple, SPHINCS+-SHA256-128s-robust, SPHINCS+-SHA256-128s-simple, SPHINCS+-SHA256-192f-robust, SPHINCS+-SHA256-192f-simple, SPHINCS+-SHA256-192s-robust, SPHINCS+-SHA256-192s-simple, SPHINCS+-SHA256-256f-robust, SPHINCS+-SHA256-256f-simple, SPHINCS+-SHA256-256s-robust, SPHINCS+-SHA256-256s-simple, SPHINCS+-SHAKE256-128f-robust, SPHINCS+-SHAKE256-128f-simple, SPHINCS+-SHAKE256-128s-robust, SPHINCS+-SHAKE256-128s-simple, SPHINCS+-SHAKE256-192f-robust, SPHINCS+-SHAKE256-192fsimple, SPHINCS+-SHAKE256-192s-robust, SPHINCS+-SHAKE256-192s-simple, SPHINCS+-SHAKE256-256f-robust, SPHINCS+-SHAKE256-256fsimple, SPHINCS+-SHAKE256-256s-robust, SPHINCS+-SHAKE256-256s-simple, picnic_L1_FS, picnic_L1_UR, picnic_L3_FS, picnic_L3_UR, picnic_L5_FS, picnic_L5_UR, 'picnic2_L1_FS', picnic2_L3_FS, picnic2_L5_FS, qTesla-p-I, qTesla-p-III'.

Beispielsweise lässt sich das erfindungsgemäße Konzept einsetzen, um in einem Kommunikationsbussystem mit automatischer Adressierung der Teilnehmer durch den Bus-Master in diesem oder in den jeweils zu adressierenden Teilnehmern die Adressen zu erzeugen. Die Erfindung lässt sich also nicht nur für Verschlüsselungstechniken zur Erzeugung von PQK-sicheren Codes einsetzen. PQK steht für "Post-Quanten-Kryptografie" und bezeichnet ein Teilgebiet der Kryptografie, nämlich das Teilgebiet der Quantencomputer-resistenten Kryptografie, das sich mit kryptografischen Primitiven befasst, die im Gegensatz zu den meisten aktuell verwendeten asymmetrischen Kryptosystemen selbst unter Verwendung von Quantencomputern praktisch nicht zu entschlüsseln sind (siehe die Definition in Wikipedia). Auch können zur besseren Unterscheidung der von einem grundsätzlich beliebig gestalteten System ausgesendeten Signalen zur Trennung dieser Signale und zur Trennung dieser Signale gegenüber benachbarten signaltechnisch möglicherweise interferierenden Systemen zur Generierung von unterschiedlichen Codes eingesetzt werden. Wenn man beispielsweise einmal an eine Ultraschall-Messeinrichtung im Automotive-Bereich denkt, so kann es von Vorteil sein, die einzelnen empfangenen Signale hinsichtlich ihres Ursprungs, d.h. hinsichtlich ihres aussendenden Senders, von dem die Signale stammen, unterscheidbar machen zu wollen.

### Merkmale der Erfindung

Die nachfolgende Auflistung der Erfindung fassen die Merkmale der Erfindung und deren Weiterbildungen nochmals zusammen. Anwendungen der technischen Lehre können die Merkmale miteinander kombinieren, sofern diese Kombinationen nicht sachliche Widersprüche verursachen. Insofern stellen die hier vorgestellten Abhängigkeiten und Bezüge nur besonders bevorzugte, beispielhafte Ausführungsformen dar.
1) Sicherer Mikrocontroller 1 zur Steuerung von Vorrichtungen im Automobil
   - mit einem Halbleitersubstrat und
   - mit Speicherelementen und
   - mit mindestens einem internen Bus 2 und
   - mit mindestens einem 8/16/32/64-Bit-Microkontrollerkern 16 und
   - mit einer oder mehreren Datenschnittstellen und
   - mit mindestens einem quantenprozessbasierten Generator 15 und
   - wobei die Speicherelemente mit dem internen Bus 2 verbunden sind und
   - wobei die Datenschnittstelle mit dem internen Bus 2 verbunden ist und
   - wobei der quantenprozessbasierte Generator 15 mit dem internen Bus 2 verbunden ist und
   - wobei der Mikrocontrollerkern 16 mit dem internen Bus 2 verbunden ist und
   - wobei der quantenprozessbasierte Generator 15 auf Anfrage des Mikrocontrollerkerns 16 eine Zufallszahl erzeugt und
   - wobei der Mikrocontrollerkern 16 mit Hilfe eines Programms aus einem oder mehreren seiner Speicherelemente und mit Hilfe der Zufallszahl einen Schlüssel erzeugt und
   - wobei der Mikrocontrollerkern 16 mit Hilfe eines Programms aus einem oder mehreren seiner Speicherelemente und mit Hilfe des Schlüssels Daten verschlüsselt und entschlüsselt, die er über die Datenschnittstelle mit Vorrichtungen außerhalb des sicheren Mikrocontrollers austauscht und
   - wobei der Halbleitersubstrat diese Teilvorrichtungen des sicheren Mikrocontrollers 1 einstückig umfasst,
   - wobei diese Teilvorrichtungen des sicheren Mikrocontrollers 1 die Speicherelemente, den internen Bus 2, den mindestens einem 8/16/32/64-Bit-Microkontrollerkern 16, die Datenschnittstellen und den quantenprozessbasierten Generator 15.
2) Sicherer Mikrocontroller 1 nach Ziffer 1),
   - wobei die Speicherelemente ein oder mehrere Schreib/Lese-Speicher RAM 3 und/oder ein oder mehrere beschreibbare nicht flüchtige Speicher, insbesondere EEPROM-Speicher 4 und/oder Flash-Speicher 4 und/oder OTP-Speicher 4, und/oder ein oder mehrere reine Lesespeicher und/oder ein oder mehrere nicht flüchtige Herstellerspeicher insbesondere ein oder mehrere Hersteller-ROMs 6 und/oder ein oder mehrere Hersteller EEPROMs und/oder ein oder mehrere Hersteller-Flash-Speicher, umfassen.
3) Sicherer Mikrocontroller 1 nach Ziffer 2),
   - wobei das Hersteller-ROM 6 die Boot-Software umfasst.
4) Sicherer Mikrocontroller 1 nach Ziffern 2) oder 3),
   - wobei eine Herstellerspeicher Firewall 8 zwischen dem Herstellerspeicher 6 und dem internen Bus 2 vorgesehen ist.
5) Sicherer Mikrocontroller 1 nach einer oder mehreren der Ziffern 1) bis 4)
   - mit einer oder mehrerer der folgenden Komponenten:
      - einer Basistakterzeugung 21 (CLK)
      - einer Taktgeneratorschaltung 12 und/oder
      - einer Rücksetzschaltung 22 und/oder
      - einer Stromversorgungs- oder einer Vcc-Schaltung 23 mit Spannungsreglern, die die Betriebsspannungen bereitstellen, und/oder
      - einer Masseschaltung 24 und/oder
      - einer Eingangs-/Ausgangsschaltung 25 und/oder
      - einem oder mehreren Verarbeitungsmodulen,
   - wobei die Verarbeitungsmodule mit dem internen Bus 2 kommunizieren und
   - wobei die Verarbeitungsmodule eines oder mehrere der folgenden Module umfassen:
      - ein CRC-Modul (Cyclic Redundancy Check) 11,
      - ein Taktgeneratormodul 12,
      - mit einem DES-Beschleuniger und/oder einem AES-Beschleuniger 7
      - ein oder mehrere Zeitgeber-Module 13,
      - eine Sicherheitsüberwachungs- und -steuerungsschaltung 14,
      - eine Datenschnittstelle, insbesondere einen Universellen Asynchronen Receiver Transmitter (UART) 17.
6) Sicherer Mikrocontroller 1 nach einer oder mehreren der Ziffern 1) bis 5),
   - mit mindestens einer ersten SPAD-Diode 44 und
   - mit mindestens einer zweiten SPAD-Diode 45 und
   - mit mindestens einem optischen Lichtwellenleiter 50 und
   - mit mindestens einer Verarbeitungsschaltung und
   - mit mindestens einer Betriebsschaltung,
   - wobei der quantenprozessbasierte Generator 15 zumindest die erste SPAD-Diode 44 als Lichtquelle für das optische Quantensignal umfasst und
   - wobei der quantenprozessbasierte Generator 15 zumindest die zweite SPAD-Diode 45 als Fotodetektor für das optische Quantensignal umfasst und
   - wobei der quantenprozessbasierte Generator 15 zumindest die Verarbeitungsschaltung umfasst und
   - wobei der quantenprozessbasierte Generator 15 zumindest den optischen Lichtwellenleiter umfasst und
   - wobei der mindestens eine optische Lichtwellenleiter 50 die mindestens eines erste SPAD-Diode 44 mit der mindestens einen zweiten SPAD-Diode 45 optisch koppelt und
   - wobei die Betriebsschaltung die erste SPAD-Diode 44 so mit elektrischer Energie versorgt, dass die erste SPAD-Diode Licht 44 emittiert und
   - wobei die Verarbeitungsschaltung das Signal der zweiten SPAD-Diode 45 erfasst und daraus die Zufallszahl bildet und dem Mikrocontrollerkern 16 zur Verfügung stellt.
7) Sicherer Mikrocontroller 1 nach Ziffer 6),
   - wobei das Halbleitersubstrat eine Oberfläche 46 aufweist und
   - wobei das Halbleitersubstrat ein halbleitendes Material unterhalb seiner Oberfläche 46 aufweist und
   - wobei die Oberfläche 46 des Halbleitersubstrats einen Metallisierungsstapel aufweist und
   - wobei der Metallisierungsstapel eine typischerweise strukturierte und optisch transparente und elektrisch isolierendem Schicht 34 aufweist und
   - wobei zumindest ein Teil dieser typischerweise strukturierten, transparenten und elektrisch isolierenden Schicht der Oberfläche 46 den optischen Lichtwellenleiter 50 bildet und
   - wobei die erste SPAD-Diode 44 aus dem halbleitenden Material des Halbleitersubstrats in diesen optischen Lichtwellenleiter 50 einstrahlt und
   - wobei der optische Lichtwellenleiter die zweite SPAD-Diode 44 so bestrahlt, dass das Licht von innerhalb des Lichtwellenleiters 50 wieder in das halbleitende Material des Halbeleitersubstrats von der Oberfläche aus eindringt und dort Vorrichtungsteile der zweiten SPAD-Diode 44 trifft.
8) Sicherer Mikrocontroller 1 nach Ziffer 6) und/oder 7),
   - wobei die mindestens eine Betriebsschaltung die mindestens t eine erste SPAD-Diode 44 zumindest zeitweise mit elektrischer Energie versorgt und
   - wobei die mindestens eine erste SPAD-Diode 44 bei Versorgung mit ausreichender elektrischer Energie Photonen in den mindestens einen Lichtwellenleiter 50 einspeist und
   - wobei der mindestens eine Lichtwellenleiter 50 solche Photonen in die zweite SPAD-Diode 45 einstrahlt.
9) Sicherer Mikrocontroller 1 nach einer oder mehreren der vorausgehenden Ziffern,
   - wobei eine Datenschnittstelle der eine oder mehreren Datenschnittstellen eine drahtgebundene automobile Datenbusschnittstelle ist und
   - wobei die drahtgebundene automobile Datenbusschnittstelle insbesondere
      - eine CAN-Datenbusschnittstelle und/oder
      - eine CAN-FD-Datenbusschnittstelle und/oder
      - eine Flexray-Datenbusschnittstelle und/oder
      - eine PSI5-Datenbusschnittstelle und/oder
      - eine DSI3-Datenbusschnittstelle und/oder
      - eine LIN-Datenbusschnittstelle und/oder
      - eine Ethernet-Datenbusschnittstelle und/oder
      - eine LIN-Datenbusschnittstelle und/oder
      - eine MELIBUS-Datenbusschnittstelle umfasst.
10) Sicherer Mikrocontroller 1 nach einer oder mehreren der vorausgehenden Ziffern,
   - wobei eine Datenschnittstelle der eine oder mehreren Datenschnittstellen eine drahtlose Datenbusschnittstelle ist und
   - wobei die drahtlose Datenbusschnittstelle insbesondere
      - eine WLAN-Schnittstelle und/oder
      - eine Bluetooth-Schnittstelle
         umfasst.
11) Sicherer Mikrocontroller 1 nach einer oder mehreren der vorausgehenden Ziffern,
   - wobei eine Datenschnittstelle der eine oder mehreren Datenschnittstellen eine drahtgebundene Datenbusschnittstelle ist und
   - wobei die drahtlose Datenbusschnittstelle insbesondere
      - eine KNX-Datenbusschnittstelle und/oder
      - eine EIB-Datenbusschnittstelle und/oder
      - eine DALI-Datenbusschnittstelle und/oder
      - eine PROFIBUS-Datenbusschnittstelle
         ist.
12) Eine Vorrichtung
   - wobei die Vorrichtung eine integrierte Schaltung 4 mit einem ersten Prozessor 10-1 und einem nichtflüchtigen Speicher 16 aufweist und
   - wobei die Vorrichtung einen ersten Speicher aufweist,
   - wobei der nicht flüchtige Speicher zumindest mindestens einen Sicherheitscode speichert;
   - wobei der erste Speicher Daten speichert und
   - wobei die Daten in dem ersten Speicher in einem ersten Format kryptografisch geschützt sind und
   - wobei die integrierte Schaltung dazu eingerichtet ist, während einer Übertragung von Daten aus dem ersten Speicher die aus dem ersten Speicher gelesenen Daten zu validieren und,
   - wobei die Vorrichtung einen Quantenzufallszahlengenerator **28** aufweist und
   - wobei die integrierte Schaltung und der Quantenzufallszahlengenerator 28 in einem Halbleiterkristall gefertigt sind und
   - wobei der Halbleiterkristall eine Oberfläche 46 aufweist und
   - wobei der Halbleiterkristall ein halbleitendes Material unterhalb seiner Oberfläche 46 aufweist und
   - wobei die Oberfläche 46 des Halbleiterkristalls einen Metallisierungsstapel aufweist und
   - wobei der Metallisierungsstapel eine typischerweise strukturierte und optisch transparente und elektrisch isolierende Schicht 34 aufweist und
   - wobei zumindest ein Teil dieser typischerweise strukturierten, transparenten und elektrisch isolierenden Schicht 34 der Oberfläche 46 den optischen Lichtwellenleiter 50 bildet und
   - wobei die erste SPAD-Diode 44 aus dem halbleitenden Material des Halbleitersubstrats heraus Photonen 47 in diesen optischen Lichtwellenleiter 50 einstrahlt und
   - wobei der zumindest eine optische Lichtwellenleiter 50 solche Photonen 48 zur zweiten SPAD-Diode 45 transportiert und
   - wobei der optische Lichtwellenleiter 50 die zweite SPAD-Diode 45 so bestrahlt, dass das Licht 49 von innerhalb des Lichtwellenleiters 50 wieder in das halbleitende Material des Halbeleitersubstrats von der Oberfläche 46 aus eindringt und dort Vorrichtungsteile der zweiten SPAD-Diode 45 trifft und
   - wobei die erste SPAD-Diode 44 und die zweite SPAD-Diode 45 und der Lichtwellenleiter 50 Teil des Quantenzufallszahlengenerators 28 sind.
13) Vorrichtung nach Ziffer 12),
   - wobei die Vorrichtung zumindest eine Betriebsschaltung aufweist und
   - wobei die zumindest eine Betriebsschaltung die zumindest eine erste SPAD-Diode 44 zumindest zeitweise mit elektrischer Energie versorgt und
   - wobei die zumindest eine erste SPAD-Diode 44 bei Versorgung mit ausreichender elektrischer Energie Photonen 47 in den zumindest einen Lichtwellenleiter 50 einspeist und
   - wobei der zumindest eine Lichtwellenleiter 50 solche Photonen 48 zur zweiten SPAD-Diode 45 transportiert und
   - wobei der zumindest eine Lichtwellenleiter 50 solche Photonen 49 in die zweite SPAD-Diode 45 einstrahlt.
14) Vorrichtung nach Ziffer 13),
   - wobei der Quantenzufallszahlengenerator 28 zumindest die erste SPAD-Diode 44 als Lichtquelle für das optische Quantensignal umfasst und
   - wobei der Quantenzufallszahlengenerator 28 zumindest die zweite SPAD-Diode 45 als Fotodetektor für das optische Quantensignal umfasst und
   - wobei der Quantenzufallszahlengenerator 28 zumindest eine Verarbeitungsschaltung umfasst und
   - wobei der Quantenzufallszahlengenerator 28 zumindest den optischen Lichtwellenleiter 50 umfasst und
   - wobei der zumindest eine optische Lichtwellenleiter 50, die zumindest eines erste SPAD-Diode 44 mit der zumindest einen zweiten SPAD-Diode 45 optisch koppelt und
   - wobei die Betriebsschaltung die erste SPAD-Diode 44 so mit elektrischer Energieversorgt, dass die erste SPAD-Diode Licht 44 emittiert und
   - wobei die Verarbeitungsschaltung das Signal der zweiten SPAD-Diode 45 erfasst und daraus die Zufallszahl bildet und dem Datenprozessor **10** oder einem anderen Vorrichtungsteil zur Verfügung stellt.
15) Vorrichtung nach einer der Ziffern 12) bis 14),
   - wobei sich der erste Speicher außerhalb der integrierten Schaltung befindet und
   - wobei die Vorrichtung einen zweiten Speicher zum Speichern von Daten aufweist
   - und wobei sich der zweite Speicher außerhalb der integrierten Schaltung; befindet;
   - wobei die Vorrichtung so eingerichtet ist,
   - dass sie Daten vom ersten Speicher über die integrierte Schaltung zum zweiten Speicher überträgt, damit der Datenprozessor vom zweiten Speicher aus darauf zugreifen kann, und
   - wobei die integrierte Schaltung dazu eingerichtet ist,
   - während einer Übertragung von Daten aus dem ersten Speicher in den zweiten Speicher die aus dem ersten Speicher gelesenen Daten unter Verwendung eines in dem nichtflüchtigen Speicher gespeicherten Sicherheitscodes zu validieren und,
   - falls die Daten validiert werden, einen kryptographischen Schutz in einem zweiten Format auf die validierten Daten unter Verwendung eines in dem nichtflüchtigen Speicher gespeicherten Sicherheitscodes anzuwenden, und
   - die im zweiten Format geschützten Daten im zweiten Speicher zu speichern.
16) Vorrichtung nach einer der Ziffern 12) bis 15), wobei der erste Speicher einen Festwertspeicher aufweist.
17) Vorrichtung nach einer der Ziffern 15) und 16), wobei der zweite Speicher einen Direktzugriffsspeicher aufweist.
18) Vorrichtung nach einer der Ziffern 15) bis 17), wobei der kryptografische Schutz, der auf die Daten im ersten Speicher angewendet wird, sich von dem kryptografischen Schutz unterscheidet, der auf die Daten im zweiten Speicher angewendet wird.
19) Vorrichtung nach einer der Ziffern 12) bis 18),
   - wobei die integrierte Schaltung einen Speicher zum Speichern von Daten enthält, die von dem Datenprozessor verarbeitet werden sollen, und
   - wobei das Gerät so eingerichtet ist, dass es einige Daten des validierten Datensatzes im Speicher und den Rest im zweiten Speicher speichert.
20) Vorrichtung nach einer der Ziffern 15) bis 19), wobei der erste Speicher Daten in einem ersten Datenformat speichert und der zweite Speicher so angeordnet ist, dass er Daten in einem zweiten, anderen Datenformat speichert.
21) Vorrichtung nach Ziffer 20),
   - wobei die im ersten Speicher gespeicherten Daten durch eine erste Authentifizierungstechnik geschützt sind und
   - wobei die Vorrichtung so eingerichtet ist, dass sie die Daten im zweiten Speicher durch eine zweite, andere Authentifizierungstechnik schützt.
22) Vorrichtung nach einer der Ziffern 15) bis 21),
   - wobei die Daten in dem ersten Speicher in mindestens einem Datensatz gespeichert sind und der oder jeder Datensatz als Satz kryptografisch geschützt ist und
   - wobei die Vorrichtung so eingerichtet ist, dass sie in dem zweiten Speicher Wörter oder Wortgruppen eines validierten Datensatzes speichert, wobei jedes Wort oder jede Wortgruppe separat kryptografisch geschützt ist.
23) Vorrichtung nach Ziffer 22), die so beschaffen ist,
   - dass sie die Wörter oder Wortgruppen aus dem zweiten Speicher liest, und
   - dass sie die gelesenen Wörter oder Wortgruppen unter Verwendung eines in dem nichtflüchtigen Speicher gespeicherten Sicherheitscodes validiert und
   - dass sie die gelesenen und validierten Wörter oder Wortgruppen in dem Datenprozessor verarbeitet.
24) Vorrichtung nach Ziffer 23),
   - wobei die integrierte Schaltung einen Hash-Rechner aufweist, und
   - wobei der Datenprozessor und der Hash-Rechner so angeordnet sind,
   - dass a) für jedes Wort oder jede Gruppe von Wörtern eine Hash-Funktion in Abhängigkeit von einem in dem nichtflüchtigen Speicher gespeicherten Sicherheitscode berechnen und den Hash in Verbindung mit dem Wort oder der Gruppe in dem zweiten Speicher speichern,
   - b) Abrufen eines gespeicherten Worts oder einer Gruppe aus dem zweiten Speicher, Neuberechnen einer Hash-Funktion für das abgerufene Wort oder die abgerufene Gruppe unter Verwendung des Sicherheitscodes und Vergleichen des neu berechneten Hashs mit dem gespeicherten Hash, und
   - c) die Verarbeitung des abgerufenen Worts oder der abgerufenen Gruppe durch die Datenverarbeitungsanlage nur dann zulassen, wenn die neu berechneten und gespeicherten Hashes in einem bestimmten Verhältnis zueinanderstehen.
25) Vorrichtung nach Ziffer 24), wobei der Hash-Rechner eine Schaltung in der integrierten Schaltung ist.
26) Vorrichtung nach einer der Ziffern 12) bis 25), wobei der nichtflüchtige Speicher der integrierten Schaltung ein einmalig programmierbarer Speicher ist.
27) Vorrichtung nach einer der Ziffern 12) bis 26) wobei der oder jeder im ersten Speicher gespeicherte Datensatz durch eine entsprechende digitale Signatur kryptographisch geschützt ist.
28) Vorrichtung nach einer der Ziffern 12) bis 28), wobei der oder jeder im ersten Speicher gespeicherte Datensatz durch eine entsprechende digitale Signatur kryptographisch unter Zuhilfenahme zumindest einer Zufallszahl des Quantenzufallszahlengenerators geschützt ist.
29) Vorrichtung nach Ziffer 27) oder 28), wobei in dem nichtflüchtigen Speicher der integrierten Schaltung ein Sicherheitscode gespeichert ist, den die Vorrichtung zumindest teilweise mittels zumindest einer Zufallszahl des Quantenzufallszahlgenerators (28) erzeugt hat.
30) Vorrichtung nach einer der Ziffern 27) bis 29), wobei die Vorrichtung so eingerichtet ist, dass sie eine digitale Signatur des Datensatzes unter Bezugnahme auf einen oder unter Bezugnahme auf den in dem nichtflüchtigen Speicher der integrierten Schaltung gespeicherten Sicherheitscode validiert.
31) Ein Datenverarbeitungsgerät,
   - wobei das Datenverarbeitungsgerät eine integrierte Schaltung aufweist und
   - wobei die integrierte Schaltung einen Datenprozessor aufweist und
   - wobei die integrierte Schaltung einen nichtflüchtigen Speicher und
   - wobei der nichtflüchtige Speicher mindestens einen Sicherheitscode speichert und
   - wobei die integrierte Schaltung einen Hash-Rechner aufweist und
   - wobei die integrierte Schaltung eine Schnittstelle an der Grenze der integrierten Schaltung aufweist und
   - wobei die integrierte Schaltung einen Quantenzufallszahlengenerator aufweist und
   - wobei die integrierte Schaltung und der Quantenzufallszahlengenerator in einem Halbleiterkristall gefertigt sind und
   - wobei der Halbleiterkristall eine Oberfläche 46 aufweist und
   - wobei der Halbleiterkristall ein halbleitendes Material unterhalb seiner Oberfläche 46 aufweist und
   - wobei die Oberfläche 46 des Halbleiterkristalls einen Metallisierungsstapel aufweist und
   - wobei der Metallisierungsstapel eine typischerweise strukturierte und optisch transparente und elektrisch isolierende Schicht 34 aufweist und
   - wobei zumindest ein Teil dieser typischerweise strukturierten, transparenten und elektrisch isolierenden Schicht 34 der Oberfläche 36 den optischen Lichtwellenleiter 50 bildet und
   - wobei die erste SPAD-Diode 44 aus dem halbleitenden Material des Halbleitersubstrats heraus Photonen 47 in diesen optischen Lichtwellenleiter 50 einstrahlt und
   - wobei der zumindest eine Lichtwellenleiter 50 solche Photonen 48 zur zweiten SPAD-Diode 45 transportiert und
   - wobei der optische Lichtwellenleiter 50 die zweite SPAD-Diode 45 so bestrahlt, dass das Licht 49 von innerhalb des Lichtwellenleiters 50 wieder in das halbleitende Material des Halbeleitersubstrats von der Oberfläche 46 aus eindringt und dort Vorrichtungsteile der zweiten SPAD-Diode 45 trifft und
   - wobei die erste SPAD-Diode 44 und die zweite SPAD-Diode 45 und der Lichtwellenleiter 50 Teil des Quantenzufallszahlengenerators 28 sind.
32) Datenverarbeitungsgerät nach Ziffer 31), wobei der Datenprozessor und/oder ein anderer Vorrichtungsteil des Datenverarbeitungsgeräts Daten unter Zuhilfenahme zumindest einer Zufallszahl des Quantenzufallszahlengenerators verschlüsselt oder entschlüsselt.
33) Datenverarbeitungsgerät nach Ziffer 31) oder 32),
   - wobei das Datenverarbeitungsgerät einen Speicher aufweist und
   - wobei der Speicher zum Speichern von Daten bei Verwendung durch den Prozessor dient und;
   - wobei der Speicher mit dem Datenprozessor gekoppelt ist, um Wörter vom Datenprozessor zu empfangen und Wörter an den Datenprozessor zu liefern.
34) Datenverarbeitungsgerät nach einer der Ziffern 31) bis 33),
   - wobei der Speicher extern von der integrierten Schaltung ist und
   - wobei der Speicher über die Schnittstelle an der Grenze der integrierten Schaltung mit dem Datenprozessor gekoppelt ist, um Wörter vom Datenprozessor zu empfangen und Wörter an den Datenprozessor zu liefern.
35) Datenverarbeitungsgerät nach einer der Ziffern 31) bis 34),
   - wobei der Datenprozessor und der Hash-Rechner sind so angeordnet, dass sie
      a) für jedes Wort eine Hash-Funktion in Abhängigkeit von einem in dem nichtflüchtigen Speicher gespeicherten Sicherheitscode berechnen und den Hash in Verbindung mit dem Wort speichern,
      b) Abrufen gespeicherter Wörter aus dem Speicher, Neuberechnen einer Hash-Funktion für jedes abgerufene Wort unter Verwendung des Sicherheitscodes und Vergleichen des neu berechneten Hash-Wertes mit dem gespeicherten Hash-Wert, und
      c) die Verarbeitung des abgerufenen Wortes durch die Datenverarbeitungsanlage nur dann zuzulassen, wenn die neu berechneten und gespeicherten Hashes eine vorher festgelegte Beziehung aufweisen.
36) Eine Vorrichtung, die Folgendes umfasst
   - eine integrierte Schaltung, die ein Datenverarbeitungsmittel und ein nichtflüchtiges Speichermittel enthält, das mindestens einen Sicherheitscode speichert;
   - ein erstes Mittel, das Daten speichert, wobei die Daten in einem ersten Format zumindest durch einen Authentifizierungscode kryptografisch geschützt sind; und
   - einen Quantenzufallszahlengenerator 28 als Teil der integrierten Schaltung,
   - wobei der Quantenzufallszahlengenerator eine erste SPAD-Diode 44 und eine zweite SPAD-Diode 45 umfasst, die über einen Lichtwellenleiter 50, der außerhalb des Halbleitersubstrats der integrierten Schaltung auf der Oberfläche der integrierten Schaltung gefertigt ist, miteinander gekoppelt sind oder gekoppelt werden können und
   - wobei die Vorrichtung zumindest eine Zufallszahl des Quantenzufallszahlengenerators 28 für eine Verschlüsselung oder Entschlüsselung eines Datums oder des Authentifizierungscodes zumindest zeitweise nutzt.
37) Vorrichtung nach Ziffer 36),
   - wobei die Vorrichtung eine zweite Einrichtung, insbesondere außerhalb des integrierten Schaltkreises, zur Speicherung von Daten aufweist und
   - wobei die Vorrichtung Mittel zum Übertragen von Daten vom ersten Speicher über die integrierte Schaltung zum zweiten Speicher aufweist, damit der Datenprozessor vom zweiten Speicher aus darauf zugreifen kann, und
   - wobei die Vorrichtung Mittel zur Validierung der aus dem ersten Speicher gelesenen Daten während der Übertragung unter Verwendung eines in dem nichtflüchtigen Speicher gespeicherten Sicherheitscodes aufweist und
   - wobei die Vorrichtung Mittel zum Anwenden eines kryptografischen Schutzes, der mindestens einen Authentifizierungscode umfasst, auf die validierten Daten in einem zweiten Format unter Verwendung eines in dem nichtflüchtigen Speicher gespeicherten Sicherheitscodes, wenn die Daten validiert werden, aufweist und
   - wobei die Vorrichtung Mittel zum Speichern der geschützten Daten im zweiten Speicher im zweiten Format ausweist.
38) Vorrichtung, insbesondere nach einer der Ziffern 12) bis 37),
   - wobei die Vorrichtung einen Quantenzufallszahlengenerator 400 umfasst und
   - wobei der Quantenzufallszahlengenerator folgende Vorrichtungsteile umfasst:
   - eine erste SPAD-Diode 404.1,
   - eine zweite SPAD-Diode 404.3,
   - einen Lichtwellenleiter 404.2, der die erste SPAD-Diode 404.1 und die zweite SPAD-Diode 404.3 optisch miteinander koppelt,
   - einen Verstärker 403 und/oder Filter,
   - einen Analog-zu-Digital-Wandler 403,
   - einen Komparator 404.2,
   - einen Zeit-zu-Digital-Wandler 404.3,
   - eine Entropie-Extraktionsvorrichtung 404.4, die Ausgangswerte des Zeit-zu-Digital-Wandlers 403 in erste und zweite Werte wandelt und daraus Zufallsbits erzeugt.
39) Vorrichtung nach Ziffer 27), wobei die Vorrichtung einen Watchdog 404.5 umfasst, der Vorrichtungsteile des Quantenzufallszahlengenerators 400 überwacht.
40) Vorrichtung nach einer der Ziffern 38) und 39), wobei die Vorrichtung einen Spannungsmonitor 413 aufweist, der analoge Werte analoger Signale erfasst und überwacht.
41) Vorrichtung nach einer der Ziffern 38) bis 40), wobei die Vorrichtung einen Pseudozufallszahlengenerator 404.6, insbesondere in Form eines linear rückgekoppelten Schieberegisters 404.6, umfasst.
42) Vorrichtung nach einer der Ziffern 38) bis 41), wobei die Vorrichtung einen Signalmultiplexer aufweist, der im Falle eines Fehlers von dem Signal des Ausgangs 411 der Entropie-Extraktionsvorrichtung auf ein Signal eines Ersatzzufallszahlengenerators oder eines Ersatzpseudozufallszahlengenerators 404.6 umschaltet.
43) Vorrichtung nach einer der Ziffern 38) bis 42), wobei der Startwert des Pseudozufallszahlengenerators 404.6 im Fehlerfall von zuvor korrekt erzeugten Zufallsbits des Quantenzufallszahlengenerators 400 abhängt.
44) Verfahren zur Erzeugung eines Zufallsbits mit den Schritten
   - Erzeugen einer Pulsfolge mit zufälligen Abständen mittels zumindest zweier SPAD-Dioden,
   - wobei die Pulsfolge Pulse einer ersten Höhenkasse 601 und einer zweiten Höhenklasse 602 umfasst;
   - Trennen der Pulse der ersten Höhenklasse 601 von den Pulsen der zweiten Höhenklasse 602 mittels eines Schneidepegels 603, 404.1;
   - Erfassen 501 ersten Werts des zeitlichen Abstands zwischen einem ersten Puls der zweiten Höhenklasse 602 und einem zweiten Puls der zweiten Höhenklasse 602, der vom ersten Puls verschieden ist;
   - Erfassen 501 zweiten Werts des zeitlichen Abstands zwischen einem dritten Puls der zweiten Höhenklasse 602, der vom ersten Puls verschieden ist, und einem vierten Puls der zweiten Höhenklasse 602, der vom ersten Puls und vom zweiten Puls und vom dritten Puls verschieden ist,
   - Vergleichen 502 des ersten Werts mit dem zweiten Wert und
   - Ausgeben 503 eines ersten logischen Werts als ein Zufallsbit, wenn der erste Wert größer als der zweite Wert ist, und
   - Ausgeben 503 eines zweiten logischen Werts, der vom ersten logischen Wert verschieden ist, als das Zufallsbit, wenn der erste Wert kleiner als der zweite Wert ist.
45) Verfahren 3700 zur Erzeugung einer Quantenzufallszahl QZ mit m Zufallsbits mit den Schritten
   - Erzeugung 3710 eines zufälligen Einzelphotonenstroms 47, 48, 49, 401.2 aus Einzelphotonen mittels einer oder mehrerer erster SPAD-Dioden 401.1, 44;
   - Übertragung 3720 des zufälligen Einzelphotonenstroms 47, 48, 49, 401.2 mittels eines vom Halbleitersubstrat 39, 38 verschiedenen Lichtwellenleiters 50, 401.2 an eine oder mehrere zweite SPAD-Dioden 401.3, 45;
   - Wandlung 3730 des zufälligen Einzelphotonenstroms 47, 48, 49, 401.2 in ein Detektionssignal mittels der einen oder der mehreren zweiten SPAD-Dioden 401.3, 45;
   - Aufbereiten 3740 des Detektionssignals in ein aufbereitetes Detektionssignal;
   - Abtrennen 3750 der durch Kopplungen der Emissionen einer ersten SPAD-Diode 401.1 der einen oder der mehreren ersten SPAD-Dioden 401.1, 44 und einer zweiten SPAD-Diode 401.3, 45 der einen oder der mehreren zweiten SPAD-Dioden 401.3, 45 entstandenen Pulse des aufbereiteten Detektionssignals von den durch spontane Emission der zweiten SPAD-Diode 401.3, 45 entstandenen Pulsen des aufbereiteten Detektionssignals durch Vergleich des aufbereiteten Detektionssignals mit einem Schwellwert 404.1;
   - Ermittlung 3760 eines ersten zeitlichen Abstands zwischen dem ersten Puls und dem zweiten Puls eines ersten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals und Ermittlung eines zweiten zeitlichen Abstands zwischen einem dritten Puls und einem vierten Puls eines zweiten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals;
   - Ermittlung 3670 des Bitwerts eines Zufallsbits durch Vergleich des Werts des ersten zeitlichen Abstands und des Werts des zweiten zeitlichen Abstands;
   - Sofern die Anzahl 3680 n der ermittelten Zufallsbits kleiner als die gewünschte Zahl m der Zufallsbits der zu erzeugenden Quantenzufallszahl QZ ist, Wiederholung der vorstehenden Schritte 3710 bis 3770 und Beenden des Prozesses zur Erzeugung einer Quantenzufallszahl sofern die Anzahl 3680 n der ermittelten Zufallsbits größer oder gleich der gewünschten Zahl m der Zufallsbits der zu erzeugenden Quantenzufallszahl QZ ist.
46) Eine Vorrichtung, die Folgendes umfasst:
   - eine integrierte Schaltung, die ein Datenverarbeitungsmittel und ein nichtflüchtiges Speichermittel enthält, das mindestens einen Sicherheitscode speichert;
   - ein erstes Mittel, das Daten speichert, wobei die Daten in einem ersten Format zumindest durch einen Authentifizierungscode kryptografisch geschützt sind; und
   - einen Quantenzufallszahlengenerator 28 als Teil der integrierten Schaltung,
   - wobei der Quantenzufallszahlengenerator eine erste SPAD-Diode 44 und eine zweite SPAD-Diode 45 umfasst, die über einen Lichtwellenleiter 50, der außerhalb des Halbleitersubstrats der integrierten Schaltung auf der Oberfläche der integrierten Schaltung gefertigt ist, miteinander gekoppelt sind oder gekoppelt werden können und
   - wobei die Vorrichtung zumindest eine Zufallszahl des Quantenzufallszahlengenerators 28 für eine Verschlüsselung oder Entschlüsselung eines Datums oder des Authentifizierungscodes zumindest zeitweise nutzt.
47) Vorrichtung nach Ziffer 46,
   - wobei die Vorrichtung eine zweite Einrichtung, insbesondere außerhalb des integrierten Schaltkreises, zur Speicherung von Daten aufweist und
   - wobei die Vorrichtung Mittel zum Übertragen von Daten vom ersten Speicher über die integrierte Schaltung zum zweiten Speicher aufweist, damit der Datenprozessor vom zweiten Speicher aus darauf zugreifen kann, und
   - wobei die Vorrichtung Mittel zur Validierung der aus dem ersten Speicher gelesenen Daten während der Übertragung unter Verwendung eines in dem nichtflüchtigen Speicher gespeicherten Sicherheitscodes aufweist und
   - wobei die Vorrichtung Mittel zum Anwenden eines kryptografischen Schutzes, der mindestens einen Authentifizierungscode umfasst, auf die validierten Daten in einem zweiten Format unter Verwendung eines in dem nichtflüchtigen Speicher gespeicherten Sicherheitscodes, wenn die Daten validiert werden, aufweist und
   - wobei die Vorrichtung Mittel zum Speichern der geschützten Daten im zweiten Speicher im zweiten Format ausweist.
48) Vorrichtung nach Ziffer 46) oder 47),
   - wobei die Vorrichtung einen Quantenzufallszahlengenerator 400 umfasst und
   - wobei der Quantenzufallszahlengenerator folgende Vorrichtungsteile umfasst:
   - eine erste SPAD-Diode 404.1,
   - eine zweite SPAD-Diode 404.3,
   - einen Lichtwellenleiter 404.2, der die erste SPAD-Diode 404.1 und die zweite SPAD-Diode 404.3 optisch miteinander koppelt,
   - einen Verstärker 403 und/oder Filter,
   - einen Analog-zu-Digital-Wandler 403,
   - einen Komparator 404.2,
   - einen Zeit-zu-Digital-Wandler 404.3,
   - eine Entropie-Extraktionsvorrichtung 404.4, die Ausgangswerte des Zeit-zu-Digital-Wandlers 403 in erste und zweite Werte wandelt und daraus Zufallsbits für die Zufallszahl erzeugt.
49) Vorrichtung nach Ziffer 48), wobei die Vorrichtung einen Watchdog 404.5 umfasst, der Vorrichtungsteile des Quantenzufallszahlengenerators 400 überwacht.
50) Vorrichtung nach Ziffer 48) und 49), wobei die Vorrichtung einen Spannungsmonitor 413 aufweist, der analoge Werte analoger Signale erfasst und überwacht.
51) Vorrichtung nach einer der Ziffern 48) bis 50) wobei die Vorrichtung einen Zufallszahlengenerator oder einen Pseudozufallszahlengenerator 404.6, insbesondere in Form eines linear rückgekoppelten Schieberegisters 404.6, umfasst.
52) Vorrichtung nach einer der Ziffern 48) bis 51), wobei die Vorrichtung einen Signalmultiplexer aufweist, der im Falle eines Fehlers von dem Signal des Ausgangs 411 der Entropie-Extraktionsvorrichtung auf ein Signal eines Ersatz-Zufallszahlengenerators oder eines Ersatzpseudozufallszahlengenerators 404.6 umschaltet.
53) Vorrichtung nach einer der Ziffern 48) bis 52), wobei der Startwert des Pseudozufallszahlengenerators 404.6 im Fehlerfall von zuvor korrekt erzeugten Zufallsbits des Quantenzufallszahlengenerators 400 abhängt.
54) Verfahren zur Erzeugung eines Zufallsbits mit den Schritten
   - Erzeugen einer Pulsfolge mit zufälligen Abständen mittels zumindest zweier SPAD-Dioden,
   - wobei die Pulsfolge Pulse einer ersten Höhenkasse 601 und einer zweiten Höhenklasse 602 umfasst;
   - Trennen der Pulse der ersten Höhenklasse 601 von den Pulsen der zweiten Höhenklasse 602 mittels eines Schneidepegels 603, 404.1;
   - Erfassen 501 eines ersten Werts für den zeitlichen Abstand zwischen einem ersten Puls der zweiten Höhenklasse 602 und einem von diesem verschiedenen zweiten Puls der zweiten Höhenklasse 602;
   - Erfassen 501 eines zweiten Werts für den zeitlichen Abstand zwischen einem dritten Puls der zweiten Höhenklasse 602, der vom ersten Puls verschieden ist, und einem vierten Puls der zweiten Höhenklasse 602, der von dem ersten Puls, von dem zweiten Puls und von dem dritten Puls verschieden ist;
   - Vergleichen 502 des ersten Werts mit dem zweiten Wert und
   - Ausgeben 503 eines ersten logischen Werts als Zufallsbit, wenn der erste Wert größer als der zweite Wert ist, und
   - Ausgeben 503 eines von dem ersten logischen Wert verschiedenen zweiten logischen Werts, als das Zufallsbit, wenn der erste Wert kleiner als der zweite Wert ist.
55) Verfahren 3700 zur Erzeugung einer Quantenzufallszahl QZ mit m Zufallsbits mit den Schritten;
   - Erzeugung 3710 eines zufälligen Einzelphotonenstroms 47, 48, 49, 401.2 aus Einzelphotonen mittels einer oder mehrerer erster SPAD-Dioden 401.1, 54;
   - Übertragung 3720 des zufälligen Einzelphotonenstroms 47, 48, 49, 401.2 mittels eines Lichtwellenleiters 50, 401.2 an eine oder mehrere zweite SPAD-Dioden 401.3, 45;
   - Wandlung 3730 des zufälligen Einzelphotonenstroms 47, 48, 49, 401.2 in ein Detektionssignal mittels der einen oder der mehreren zweiten SPAD-Dioden 401.3, 45;
   - Aufbereiten 3740 des Detektionssignals in ein aufbereitetes Detektionssignal;
   - Abtrennen 3750 der durch Kopplungen der Emissionen einer ersten SPAD-Diode 401.1 der einen oder der mehreren ersten SPAD-Dioden 401.1, 44 und einer zweiten SPAD-Diode 401.3, 45 der einen oder der mehreren zweiten SPAD-Dioden 401.3, 45 entstandenen Pulse des aufbereiteten Detektionssignals von den durch spontane Emission der zweiten SPAD-Diode 401.3, 45 entstandenen Pulsen des aufbereiteten Detektionssignals durch Vergleich des aufbereiteten Detektionssignals mit einem Schwellwert 404.1;
   - Ermittlung 3760 eines ersten zeitlichen Abstands zwischen dem ersten Puls und dem zweiten Puls eines ersten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals und Ermittlung eines zweiten zeitlichen Abstands zwischen einem dritten Puls und einem vierten Puls eines zweiten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals;
   - Ermittlung 3670 des Bitwerts eines Zufallsbits durch Vergleich des Werts des ersten zeitlichen Abstands und des Werts des zweiten zeitlichen Abstands;
   - Sofern die Anzahl 3680 n der ermittelten Zufallsbits kleiner als die gewünschte Zahl m der Zufallsbits der zu erzeugenden Quantenzufallszahl QZ ist, Wiederholung der vorstehenden Schritte 3710 bis 3770 und Beenden des Prozesses zur Erzeugung einer Quantenzufallszahl sofern die Anzahl 3680 n der ermittelten Zufallsbits größer oder gleich der gewünschten Zahl m der Zufallsbits der zu erzeugenden Quantenzufallszahl QZ ist.
56) Vorrichtung zur Erzeugung einer Quantenzufallszahl QZ,
   - mit einer oder mehreren ersten SPAD-Dioden 401.1, 44, die einen optisch quantenprozessbasiert zufälligen Einzelphotonenstroms 47, 48, 49, 401.2 aus Einzelphotonen erzeugen 3710 und
   - mit einer oder mehreren zweiten SPAD-Dioden 401.3, 45 und
   - mit einem vom Halbleitersubstrat 39, 38 verschiedenen Lichtwellenleiter 50, 401.2, der den zufälligen Einzelphotonenstrom 47, 48, 49, 401.2 an eine oder mehrere zweite SPAD-Dioden 401.3, 45 überträgt 3720, und
   - wobei die eine oder die mehreren zweiten SPAD-Dioden 401.3, 45 den zufälligen Einzelphotonenstrom 47, 48, 49, 401.2 in ein Detektionssignal wandeln 3730 und
   - wobei eine Signalverarbeitungsvorrichtung, insbesondere ein Verstärker 402, das Detektionssignals in ein aufbereitetes Detektionssignal aufbereitet 3740 und
   - wobei ein Komparator 404.02 oder eine funktionsäquivalente Vorrichtung die durch Kopplungen der Emissionen einer ersten SPAD-Diode 401.1 der einen oder der mehreren ersten SPAD-Dioden 401.1, 44 und einer zweiten SPAD-Diode 401.3, 45 der einen oder der mehreren zweiten SPAD-Dioden 401.3, 45 entstandenen Pulse des aufbereiteten Detektionssignals von den durch spontane Emission der zweiten SPAD-Diode 401.3, 45 entstandenen Pulsen des aufbereiteten Detektionssignals durch Vergleich des aufbereiteten Detektionssignals mit einem Schwellwert 404.1 abtrennt 3750 und
   - wobei ein Zeit-zu-Digital-Konverter 404.3 einen ersten zeitlichen Abstand zwischen dem ersten Puls und dem zweiten Puls eines ersten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals ermittelt 3760 und einen zweiten zeitlichen Abstands zwischen einem dritten Puls und einem vierten Puls eines zweiten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals ermittelt und
   - wobei eine Entropie-Extraktions-Vorrichtung 404.4 den Bitwerts eines Zufallsbits durch Vergleich des Werts des ersten zeitlichen Abstands und des Werts des zweiten zeitlichen Abstands ermittelt 3670 und
   - wobei eine Finite-State-Machine 404.8 aus dem Bitdatenstrom der Zufallsbits 411 eine Quantenzufallszahl QZ 417 erzeugt.
57) Mikrocontroller zur Steuerung von Vorrichtungen im Automobil, mit
   - einem Halbleitersubstrat,
   - Speicherelementen,
   - mindestens einem internen Bus 2,
   - mindestens Microkontrollerkern 16,
   - einer oder mehreren Datenschnittstellen und
   - mindestens einem quantenprozessbasierten Generator 15 für echte Zufallszahlen
   - wobei die Speicherelemente mit dem internen Bus 2 verbunden sind,
   - wobei die Datenschnittstelle mit dem internen Bus 2 verbunden ist,
   - wobei der quantenprozessbasierte Generator 15 mit dem internen Bus 2 verbunden ist und
   - wobei der Mikrocontrollerkern 16 mit dem internen Bus 2 verbunden ist,
   - wobei der quantenprozessbasierte Generator 15 insbesondere auf Anfrage des Mikrocontrollerkerns 16 eine Zufallszahl erzeugt,
   - wobei der quantenprozessbasierte Generator 15 diese Zufallszahl bereitstellt,
   - wobei der Mikrocontrollerkern 16 mit Hilfe eines Programms aus einem oder mehreren seiner Speicherelemente und mit Hilfe der Zufallszahl einen Schlüssel erzeugt,
   - wobei der Mikrocontrollerkern 16 mit Hilfe eines Programms aus einem oder mehreren seiner Speicherelemente und mit Hilfe des Schlüssels Daten verschlüsselt und entschlüsselt, die er über die Datenschnittstelle mit externen Vorrichtungen oder intern austauscht,
   - wobei das Halbleitersubstrat die hier aufgeführten Teilvorrichtungen des sicheren Mikrocontroller 1 einstückig umfasst,
   - wobei der quantenprozessbasierte Generator 15 mindestens eine erste SPAD-Diode 44 als Lichtquelle für ein optisches Quantensignal umfasst,
   - wobei der quantenprozessbasierte Generator 15 die mindestens eine zweite SPAD-Diode 45 als Fotodetektor für den Empfang des optischen Quantensignals umfasst,
   - wobei der quantenprozessbasierte Generator 15 die mindestens eine Verarbeitungsschaltung umfasst,
   - wobei der quantenprozessbasierte Generator 15 den mindestens einen optischen Lichtwellenleiter 50 zur optischen Kopplung der mindestens einen ersten SPAD-Diode 44 mit der mindestens einen zweiten SPA-Diode 45 umfasst,
   - wobei der quantenbasierte Generator 15 eine Betriebsschaltung zur Versorgung der mindestens einen ersten SPAD-Diode 44 mit elektrischer Energie zur Emission von Licht 44 aufweist und
   - wobei der quantenbasierte Generator 15 eine Verarbeitungsschaltung zur Erfassung des Signals der mindestens einen zweiten SPAD-Diode 45 und zur Bildung einer Zufallszahl aus dem Signal der mindestens einen zweiten SPAD-Diode 45 sowie zur Bereitstellung der Zufallszahl für den Mikrocontrollerkern 16 aufweist.
58) Mikrocontroller nach Ziffer 57), wobei das Emissionssignal der mindestens einen zweiten SPAD-Diode 45 erste Spikes 601 sowie zweite Spikes 602, die größer sind als die ersten Spikes 601, aufweist, wobei die ersten und die zweiten Spikes 601, 602 jeweils größer als ein vorgebbarer Referenzwert 404.1, 603 sind, wobei die ersten Spikes 601 auf Grund einer spontanen Photonenemission der mindestens einen zweiten SPAD-Diode 45 ohne gleichzeitig verursachte stimulierte Photonenemission der mindestens einen zweiten SPAD-Diode 45 entstehen und die zweiten Spikes 602 auf Grund des gleichzeitigen Auftretens einer spontanen und einer durch den Empfang eines Photons der mindestens einen ersten SPAD-Diode 44 stimulierten Photonenemission der mindestens einen zweiten SPAD-Diode 45 entstehen, und wobei die Verarbeitungsschaltung des quantenprozessbasierten Generators 15 anhand eines Vergleichs der zeitlichen Abstände von zweiten Spikes 602 mit einem Schwellwert oder anhand eines Vergleichs der zeitlichen Abstände von zweiten Spikes 602 untereinander einen ersten logischen Wert oder einen zweiten logischen Wert als Bit für die Erzeugung der Zufallszahl erzeugt.
59) Mikrocontroller nach Ziffer 58), wobei die Verarbeitungsschaltung den ersten logischen Wert oder den zweiten logischen Wert anhand eines Vergleichs des zeitlichen Abstands von zwei Spikes 602 mit einem Schwellwert erzeugt und wobei die Verarbeitungsschaltung den ersten logischen Wert als ein Bit der Zufallszahl ausgibt, wenn der zeitliche Abstand kleiner als der Schwellwert ist, und den zweiten logischen Wert als Bit der Zufallszahl ausgibt, wenn der zeitliche Abstand größer als der Schwellwert ist.
60) Mikrocontroller nach Ziffer 58), wobei die Verarbeitungsschaltung den ersten logischen Wert oder den zweiten logischen Wert anhand eines Vergleichs der zeitlichen Abstände der zweiten Spikes 602 verschiedener Paare von zweiten Spikes 602 erzeugt und wobei die Verarbeitungsschaltung den ersten logischen Wert als ein Bit für die Erzeugung der Zufallszahl ausgibt, wenn der zeitliche Abstand des zuletzt aufgetretenen zweiten Spikes 602, kleiner als der zeitliche Abstand zwischen z.B. dem vorletzten zweiten Spike 602 und dem vorvorletzten zweiten Spike 602 oder einem anderen Paar von vorherigen zweiten Spikes 602 ist, und den zweiten logischen Wert als ein Bit für die Erzeugung der Zufallszahl ausgibt, wenn der zeitliche Abstand des zuletzt aufgetretenen zweiten Spikes 602, z.B. größer als der zeitliche Abstand zwischen z.B. dem vorletzten zweiten Spike 602 und dem vorvorletzten zweiten Spike 602 oder einem anderen Paar von vorherigen zweiten Spikes 60 ist.
61) Mikrocontroller nach einer der Ziffern 57) bis 60), mit mehreren Paaren aus einer ersten SPAD-Diode 44 und einer zweiten SPAD-Diode 45, wobei die Emissionssignale der zweiten SPAD-Dioden 45 der Verarbeitungsschaltung zuführbar sind und die Verarbeitungsschaltung anhand des Emissionssignals jeder zweiten SPAD-Diode 45 ein anderes der Bits für die Erzeugung der Zufallszahl ausgibt.
62) Mikrocontroller nach einer der Ziffern 57) bis 60), mit einem Paar aus einer ersten SPAD-Diode (44) und einer zweiten SPAD-Diode (45), wobei die Verarbeitungsschaltung die logischen Werte der Bits für die Erzeugung der Zufallszahl sequentiell ausgibt.
63) Mikrocontroller nach einer der Ziffern 57) bis 60), mit einer einzigen ersten SPAD-Diode 44 und mehreren zweiten SPAD-Dioden 45, die optisch mit der einzigen SPAD-Diode 44 gekoppelt sind, wobei die Emissionssignale der zweiten SPAD-Dioden 45 der Verarbeitungsschaltung zuführbar sind und die Verarbeitungsschaltung anhand des Emissionssignals jeder zweiten SPAD-Diode 45 ein anderes der Bits für die Erzeugung der Zufallszahl ausgibt.
64) Mikrocontroller nach einer der Ziffern 57) bis 63), mit einer Fehlerdetektionseinheit und einem Pseudozufallszahlengenerator, wobei die Verarbeitungsschaltung des quantenbasierten Generators 15 von der anhand des Emissionssignals der mindestens einen zweiten SPAD-Diode 45 erfolgenden Ausgabe von Bits für die Erzeugung der Zufallszahl auf die Ausgabe eines durch den Pseudozufallszahlengenerator generierten Bits für die Erzeugung einer Pseudozufallszahl umschaltet, wenn die Fehlerdetektionseinheit einen Fehler in der Funktion der für den optischen quantenbasierten Prozess verantwortlichen Komponenten des quantenprozessbasierten Generators 15 oder einen Fehler von dessen Verarbeitungsschaltung erkennt.
65) Mikrocontroller nach Ziffer 64), wobei die Fehlerdetektionseinheit bei Erkennung eines Fehlers einen insbesondere die Art und/oder den Grund des Fehlers repräsentierendes Fehlersignal ausgibt.
66) Mikrocontroller nach einer der Ziffern 57) bis 65), wobei die Speicherelemente ein oder mehrere Schreib/Lese-Speicher RAM 3 und/oder ein oder mehrere beschreibbare nicht flüchtige Speicher, insbesondere EEPROM-Speicher 4 und/oder Flash-Speicher 4 und/oder Einmalprogrammierbar (OTP-)Speicher 4, und/oder ein oder mehrere reine Lesespeicher und/oder ein oder mehrere nicht flüchtige Herstellerspeicher, insbesondere ein oder mehrere Hersteller-ROMs 6, und/oder ein oder mehrere Hersteller EEPROMs und/oder ein oder mehrere Hersteller-Flash-Speicher umfassen.
67) Mikrocontroller nach Ziffer 66), wobei das Hersteller-ROM 6 eine Boot-Software umfasst.
68) Mikrocontroller nach einer der Ziffern 57) bis 67), wobei eine Herstellerspeicher-Firewall 8 zwischen dem Herstellerspeicher 6 und dem internen Bus 2 vorgesehen ist.
69) Mikrocontroller nach einer der Ziffern 57) bis 68), mit einer oder mehreren der folgenden Komponenten:
   - einer Basistakterzeugung 21 (CLK),
   - einer Taktgeneratorschaltung 12 und/oder
   - einer Rücksetzschaltung 22 und/oder
   - einer Stromversorgungs- oder einer Vcc-Schaltung 23 mit Spannungsreglern, die die Betriebsspannungen bereitstellen, und/oder
   - einer Masseschaltung 24 und/oder
   - einer Eingangs-/Ausgangsschaltung 25 und/oder
   - einem oder mehreren Verarbeitungsmodulen,
   - wobei die Verarbeitungsmodule mit dem internen Bus 2 kommunizieren und
   - wobei die Verarbeitungsmodule eines oder mehrere der folgenden Module umfassen:
      - ein CRC-Modul (Cyclic Redundancy Check) 11,
      - ein Taktgeneratormodul 12,
      - mit einem DES-Beschleuniger und/oder einem AES-Beschleuniger 7,
      - ein oder mehrere Zeitgeber-Module 13,
      - eine Sicherheitsüberwachungs- und -steuerungsschaltung 14,
      - eine Datenschnittstelle, insbesondere einen Universellen Asynchronen Receiver Transmitter (UART) 17.
70) Mikrocontroller nach einer der Ziffern 57) bis 69), wobei
   - das Halbleitersubstrat eine Oberfläche 46 aufweist,
   - das Halbleitersubstrat ein halbleitendes Material unterhalb seiner Oberfläche 46 aufweist,
   - die Oberfläche 46 des Halbleitersubstrats einen Metallisierungsstapel aufweist,
   - der Metallisierungsstapel eine typischerweise strukturierte und optisch transparente sowie elektrisch isolierende Schicht 34 aufweist, die sich auf der Oberfläche 46 des Halbleitersubstrats befindet,
   - zumindest ein Teil dieser transparenten sowie elektrisch isolierenden Schicht 34 den mindestens einen optischen Lichtwellenleiter 50 bildet,
   - die erste SPAD-Diode 44 aus dem halbleitenden Material des Halbleitersubstrats heraus Photonen 47 in den optischen Lichtwellenleiter 50 einstrahlt,
   - der zumindest eine Lichtwellenleiter 50 solche Photonen 48 zur zweiten SPAD-Diode 45 transportiert.
71) Mikrocontroller nach Ziffer 70), wobei der optische Lichtwellenleiter 50 die zweite SPAD-Diode 45 so bestrahlt, dass das Licht 49 von innerhalb des Lichtwellenleiters 50 wieder in das halbleitende Material des Halbeleitersubstrats eindringt und dort Vorrichtungsteile der zweiten SPAD-Diode 45 trifft.
72) Mikrocontroller nach einer der Ziffern 57) bis 71), wobei
   - die zumindest eine Betriebsschaltung die zumindest eine erste SPAD-Diode 44 zumindest zeitweise mit elektrischer Energie versorgt,
   - die zumindest eine erste SPAD-Diode 44 bei Versorgung mit ausreichender elektrischer Energie Photonen 47 in den zumindest einen optischen Lichtwellenleiter 50 einspeist,
   - der mindestens eine optische Lichtwellenleiter 50 solche Photonen 48 zur zweiten SPAD-Diode 45 transportiert und
   - der zumindest eine Lichtwellenleiter 50 solche Photonen 48 in die zweite SPAD-Diode 45 einstrahlt.
73) Mikrocontroller nach einer der Ziffern 57) bis 72), wobei die eine Datenbusschnittstelle eine drahtgebundene automobile Datenbusschnittstelle ist oder wobei eine oder mehrere Datenbusschnittstellen der mehreren Datenbusschnittstellen drahtgebundene automobile Datenbusschnittstellen sind.
74) Mikrocontroller nach Ziffer 73), wobei die eine oder die mehreren drahtgebundenen automobilen Datenbusschnittstellen als
   - eine CAN-Datenbusschnittstelle und/oder
   - eine CAN-FD-Datenbusschnittstelle und/oder
   - eine Flexray-Datenbusschnittstelle und/oder
   - eine PSI5-Datenbusschnittstelle und/oder
   - eine DSI3-Datenbusschnittstelle und/oder
   - eine LIN-Datenbusschnittstelle und/oder
   - eine Ethernet-Datenbusschnittstelle und/oder
   - eine LIN-Datenbusschnittstelle und/oder
   - eine MELIBUS-Datenbusschnittstelle
      ausgebildet sind.
75) Mikrocontroller nach einer der Ziffern 57) bis 74), wobei die eine Datenbusschnittstelle eine drahtlose Datenbusschnittstelle ist oder wobei eine oder mehrere Datenbusschnittstellen der Datenschnittstellen drahtlose Datenbusschnittstellen sind.
76) Mikrocontroller nach Ziffer 75), wobei die eine oder die mehreren drahtlosen Datenbusschnittstellen als
   - eine WLAN-Schnittstelle und/oder
   - eine Mobilfunkschnittstelle und/oder
   - eine Bluetooth-Schnittstelle
      ausgebildet sind.
77) Mikrocontroller nach einer der Ziffern 57) bis 76), wobei die eine Datenbusschnittstelle eine drahtgebundene Datenbusschnittstelle ist oder wobei eine oder mehrere Datenbusschnittstellen der mehreren Datenschnittstellen drahtgebundene Datenbusschnittstelle sind.
78) Mikrocontroller nach Ziffer 77), wobei die eine oder die mehreren drahtgebundenen Datenbusschnittstellen als
   - eine KNX-Datenbusschnittstelle und/oder
   - eine EIB-Datenbusschnittstelle und/oder
   - eine DALI-Datenbusschnittstelle und/oder
   - eine PROFIBUS-Datenbusschnittstelle
      ausgebildet sind.

### BEZUGSZEICHENLISTE

- 1: sicherer Mikrocontroller
- 2: ein oder mehrere interne Datenbusse
- 3: ein oder mehrere Schreib/Lese-Speicher RAM
- 4: ein oder mehrere beschreibbare nicht flüchtige Speicher. Diese nichtflüchtigen Speicher können beispielsweise EEPROM-Speicher oder Flash-Speicher oder OTP-Speicher umfassen
- 5: ein oder mehrere nicht flüchtige, reine Lese-Speicher, wie beispielsweise ein ROM
- 6: einen oder mehrere nicht flüchtige, beschreibbare und/oder nicht beschreibbare Herstellerspeicher. Im Falle eines nicht beschreibbaren Herstellerspeichers kann der Herstellerspeicher beispielsweise ein Hersteller-ROM sein
- 7: ein oder mehrere Kryptografie-Beschleuniger, beispielsweise einen DES-Beschleuniger und/oder einen AES-Beschleuniger
- 8: ein oder mehrere Herstellerspeicher-Firewalls
- 11: ein oder mehrere CRC-Module (Cyclic Redundancy Check)
- 12: ein oder mehrere Taktgeneratormodule (Englisch Clock Driver, CLK)
- 13: Zeitgeber-Module
- 14: eine oder mehrere Sicherheitsüberwachungs- und -steuerungsschaltungen
- 15: quantenprozessbasierter Generator
- 16: Microkontrollerkern
- 17: Datenschnittstellen, insbesondere einer oder mehreren Universellen Asynchronen Receiver Transmittern (UART) zur Unterstützung serieller Hochgeschwindigkeitsdaten
- 21: ein oder mehrere Basistakterzeugungen (CLK)
- 22: ein oder mehrere Rücksetzschaltungen
- 23: ein oder mehrere Stromversorgungs- oder Vcc-Schaltungen mit Spannungsreglern, die die Betriebsspannungen für den sicheren Mikrocontroller bereitstellen
- 24: ein oder mehrere Masseschaltungen
- 25: ein oder mehrere Eingangs-/Ausgangsschaltungen
- 30: beispielhafte SPAD-Diode für den Einsatz als Sensorelement eines Einzelphotonendetektors
- 31: Shallow-Trench-Isolation STI der beispielhaften SPAD-Diode
- 32: Anodenkontakt der beispielhaften SPAD-Diode
- 33: Kathodenkontakt der beispielhaften SPAD-Diode. Der Kathodenkontakt der beispielhaften SPAD-Diode ist bevorzugt aus Indium-Zinn-Oxid (ITO) oder einem anderen transparenten und elektrisch leitendem Material gefertigt
- 34: Isolationsschicht
- 34': Isolationsschicht
- 34": Isolationsschicht
- 35: hoch dotiertes erstes Anschlussgebiet eines ersten Leitungstyps. In einer CMOS-Technologie mit einem p-dotiertem Wafer-Material kann es sich beispielsweise um ein n⁺-dotiertes Gebiet im halbleitenden Substratmaterial der SPAD-Diode handeln
- 36: erste dotierte Wanne eines zweiten Leitungstyps. In einer CMOS-Technologie mit einem p-dotiertem Wafer-Material kann es sich beispielsweise um ein schwächer dotiertes, also p⁻⁻-dotiertes Gebiet im halbleitenden Substratmaterial der SPAD-Diode 1820 handeln
- 37: zweite dotierte Wanne eines zweiten Leitungstyps. In einer CMOS-Technologie mit einem p-dotiertem Wafer-Material kann es sich beispielsweise um ein schwächer dotiertes, also p⁻-dotiertes Gebiet im halbleitenden Substratmaterial der SPAD-Diode handeln
- 38: epitaktische Schicht eines zweiten Leitungstyps. In einer CMOS-Technologie mit einem p-dotiertem Wafer-Material kann es sich beispielsweise um eine p-dotierte epitaktische Schicht im halbleitenden Substratmaterial der SPAD-Diode handeln
- 39: Basismaterial des halbleitenden einkristallinen Wafers, der einen zweiten Leitungstyp aufweist. In einer CMOS-Technologie mit einem p-dotiertem Wafer-Material handelt es sich beispielsweise um einen p-dotierten einkristallinen Halbleiter-Wafer
- 40: zweite dotierte Wanne eines zweiten Leitungstyps unterhalb des Anodenkontakts. In einer CMOS-Technologie mit einem p-dotiertem Wafer-Material kann es sich beispielsweise um ein p⁻-dotiertes Gebiet im halbleitenden Substratmaterial der SPAD-Diode handeln
- 41: hoch dotiertes zweites Anschlussgebiet eines zweiten Leitungstyps. In einer CMOS-Technologie mit einem p-dotiertem Wafer-Material kann es sich beispielsweise um ein p⁺-dotiertes Gebiet im halbleitenden Substratmaterial der SPAD-Diode 1820 handeln
- 42: Isolation, beispielsweise ein Oxid oder dergleichen
- 43: Metallabdeckung des Lichtwellenleiters
- 44: erste SPAD-Diode. Die erste SPAD-Diode dient zumindest zeitweise als Lichtquelle für die Bestrahlung der zweiten SPAD-Diode mit Photonen der ersten SPAD-Diode
- 45: zweite SPAD-Diode. Die zweite SPAD-Diode dient beispielsweise zumindest zeitweise als Fotodetektor für das Licht der ersten SPAD-Diode
- 46: Oberfläche des Wafers im Sinne der hier vorgelegten Anmeldung
- 47: vertikal nach oben in senkrechter Richtung zur Oberfläche emittiertes Licht der ersten SPAD-Diode
- 48: horizontal im Lichtwellenleiter transportiertes Licht, das ein Teil des vertikal von der ersten SPAD-Diode in den Lichtwellenleiter eingestrahlten Lichts ist
- 49: vertikal nach unten in senkrechter Richtung zur Oberfläche aus dem Lichtwellenleiter in die zweite SPAD-Diode eingestrahltes Licht der ersten SPAD-Diode, das von der ersten SPAD-Diode als senkrechtes Licht in den Lichtwellenleiter hinein emittiert wurde und dann vom Lichtwellenleiter horizontal zur zweiten SPAD-Diode transportiert wurde.
- 50: Lichtwellenleiter für den Transport der Photonen der ersten SPAD-Diode zur zweiten SPAD-Diode. Der Lichtwellenleiter ist aus einem Abdeckoxid oder einer anderweitigen optisch transparenten Isolierschicht auf der Schaltung der beispielhaften SPAD-Diode gebildet.
- 50': Lichtwellenleiter für den Transport der Photonen der ersten SPAD-Diode zur zweiten SPAD-Diode. Der Lichtwellenleiter ist aus einem Abdeckoxid oder einer anderweitigen optisch transparenten Isolierschicht auf der Schaltung der beispielhaften SPAD-Diode oder aus zwei aufeinander angeordneten optisch transparenten Isolationsschichten (z.B. des Metallisierungsstapels) gebildet.
- 51: Kontaktierung
- 52: Kontaktierung
- 53: Ebene zwischen zwei elektrisch isolierenden Isolationsschichten des Wellenleiters
- 400: Quantenzufallszahlengenerator QRNG
- 401: Entropie-Quelle
- 401.1: ein oder mehrere erste SPAD-Diode
- 401.2: Lichtwellenleiter
- 401.3: ein oder mehrere zweite SPAD-Dioden
- 402: Hochfrequenzverstärker;
- 403: Analog-Digital-Converter (ADC)
- 404: Messboard mit FPGA
- 404.1: Konstante
- 404.2: Komparator
- 404.3: Zeit-zu-Digital-Konverter
- 404.4: Entropie-Extraktions-Vorrichtung 404.4
- 404.5: Watchdog
- 404.6: linear rückgekoppeltes Schieberegister. Die Rückkopplung ist bevorzugt ein einfach primitives Polynom, um Pseudozufallsbittfolgen zu erzeugen.
- 404.7: Signal-Multiplexer
- 404.8: Finite State Machine (endlichen Automaten)
- 404.9: RAM
- 404.10: Finish Flag
- 404.11: Microcontroller
- 405: Spannungssignal der Entropie Quelle 401
- 406: Verstärkerausgangssignal 406 des Hochfrequenzverstärkers 402
- 407: digitaler 14 Bit Wert 407 des Analog-zu-Digital-Wandlers 403. Andere Bitbreiten sind denkbar
- 408: Signal der Konstanten 404.1
- 409: Ausgangssignal 409 des Komparators 404.2
- 410: Ausgang 410 des Zeit-zu-Digital-Wandlers 404.3
- 411: Ausgang der Entropie Extraktion 404.4
- 412: Seed S
- 413: Spannungsmonitor
- 414: Signalleitungen
- 416: Selektionssignal
- 417: Pseudozufallssignalleitung
- 418: Zufallsdatenwörter
- 419: interner Datenbus des Quantenzufallszahlengenerators 400. Bevorzugt handelt es sich um den internen Datenbus der Steuervorrichtung 4
- 420: Interrupt Signal des Watchdogs 404.5 des Quantenzufallszahlengenerators 400 bzw. der Steuervorrichtung 4 der Sicherung 1
- 500: Flussdiagramm 500 des Entropie Extraktionsverfahrens
- 501: erster Schritt 501 mit Ermittlung des ersten Werts des Ausgangs 410 des Zeit-zu-Digital-Wandlers 404.3 und des zweiten Werts des Ausgangs 410 des Zeit-zu-Digital-Wandlers 404.3 und Speicherung in einem Schieberegister der Entropie Extraktion 404.4
- 502: zweiter Schritt des Vergleichens des ersten Werts mit dem zweiten Wert
- 503: dritter Schritt der Bewertung des ersten Werts und des zweiten Werts und der Erzeugung des Zufallsbits
- 601: erste Spikes
- 602: zweite Spikes
- 603: Schneidepegel
- 3700: Verfahren zur Erzeugung einer Quantenzufallszahl QZ mit m Zufallsbits
- 3710: Erzeugung eines zufälligen Einzelphotonenstroms (57, 58, 59, 401.2) mittels einer oder mehrerer erster SPAD-Dioden (401.1, 54)
- 3720: Übertragung des zufälligen Einzelphotonenstroms (57, 58, 59, 401.2) mittels eines vom Halbleitersubstrat (49, 48) verschiedenen Lichtwellenleiters (44, 401.2) an eine oder mehrere zweite SPAD-Dioden (401.3, 55)
- 3730: Wandlung des zufälligen Einzelphotonenstroms (57, 58, 59, 401.2) in ein Detektionssignal in Form eines Spannungssignal 405 der Entropie Quelle 401, die bevorzugt die ersten SPAD-Dioden 401.1 und den Lichtwellenleiter 401.2 und die zweiten SPAD-Dioden 401.3 umfasst
- 3740: Aufbereiten, insbesondere Verstärken und/oder Filtern und/oder Analog-zu-Digital-Wandeln, des Detektionssignals in ein aufbereitetes Detektionssignal, insbesondere einen digitalen 14 Bit-Wert 407 des Analog-zu-Digital-Wandlers 403
- 3750: Abtrennen der durch Kopplungen der Emissionen einer ersten SPAD-Diode 401.1 und einer zweiten SPAD-Diode 401.3 entstandenen Pulse des aufbereiteten Detektionssignals von den durch spontane Emission entstandenen Pulsen des aufbereiteten Detektionssignals durch Vergleich des aufbereiteten Detektionssignals mit einem Schwellwert, insbesondere in einem Komparator 404.2 und Erzeugung eines entsprechenden Ausgangssignals 409, insbesondere des Komparators 404.2
- 3760: Ermittlung eines ersten zeitlichen Abstands zwischen dem ersten Puls und dem zweiten Puls eines ersten Paares aus zwei aufeinander folgenden, durch Kopplungen der Emissionen einer ersten SPAD-Diode 401.1 und einer zweiten SPAD-Diode 401.3 entstandenen Pulse des aufbereiteten Detektionssignals und Ermittlung eines zweiten zeitlichen Abstands zwischen einem dritten Puls und einem vierten Puls eines zweiten Paares aus zwei aufeinander folgenden, durch Kopplungen der Emissionen einer ersten SPAD-Diode 401.1 und einer zweiten SPAD-Diode 401.3 entstandenen Pulse des aufbereiteten Detektionssignals und insbesondere zur Ermittlung des ersten Werts des Ausgangs 410 des Zeit-zu-Digital-Wandlers 404.3 und des zweiten Werts des Ausgangs 410 des Zeit-zu-Digital-Wandlers 404.3
- 3670: Ermittlung des Bitwerts eines Zufallsbits durch Vergleich des Werts des ersten zeitlichen Abstands und des Werts des zweiten zeitlichen Abstands
- 3680: Sofern die Anzahl n der bis zu diesem Schritt ermittelten Zufallsbits kleiner als die gewünschte Zahl m der Zufallsbits der gewünschten Quantenzufallszahl ist, erfolgt die Wiederholung der vorstehenden Schritte. Ansonsten erfolgt das Beenden des Prozesses zur Erzeugung einer Quantenzufallszahl mit m Zufallsbits.

## Patentansprüche

1. Vorrichtung,
- wobei die Vorrichtung einen Quantenzufallszahlengenerator 400 umfasst und
- wobei der Quantenzufallszahlengenerator folgende Vorrichtungsteile umfasst:
- eine erste SPAD-Diode 404.1,
- eine zweite SPAD-Diode 404.3,
- einen Lichtwellenleiter 404.2, der die erste SPAD-Diode 404.1 und die zweite SPAD-Diode 404.3 optisch miteinander koppelt,
- einen Verstärker 403 und/oder Filter,
- einen Analog-zu-Digital-Wandler 403,
- einen Komparator 404.2,
- einen Zeit-zu-Digital-Wandler 404.3,
- eine Entropie-Extraktionsvorrichtung 404.4, die Ausgangswerte des Zeit-zu-Digital-Wandlers 403 in erste und zweite Werte wandelt und daraus Zufallsbits erzeugt.

2. Vorrichtung nach Anspruch 1, wobei die Vorrichtung einen Watchdog 404.5 umfasst, der Vorrichtungsteile des Quantenzufallszahlengenerators 400 überwacht.

3. Vorrichtung nach einem der Ansprüche 1 und 2, wobei die Vorrichtung einen Spannungsmonitor 413 aufweist, der analoge Werte analoger Signale erfasst und überwacht.

4. Vorrichtung nach einem der Ansprüche 1 bis 3, wobei die Vorrichtung einen Pseudozufallszahlengenerator 404.6, insbesondere in Form eines linear rückgekoppelten Schieberegisters 404.6, umfasst.

5. Vorrichtung nach einem der Ansprüche 1 bis 4, wobei die Vorrichtung einen Signalmultiplexer aufweist, der im Falle eines Fehlers von dem Signal des Ausgangs 411 der Entropie-Extraktionsvorrichtung auf ein Signal eines Ersatzzufallszahlengenerators oder eines Ersatzpseudozufallszahlengenerators 404.6 umschaltet.

6. Vorrichtung nach einem der Ansprüche 1 bis 5, wobei der Startwert des Pseudozufallszahlengenerators 404.6 im Fehlerfall von zuvor korrekt erzeugten Zufallsbits des Quantenzufallszahlengenerators 400 abhängt.

7. Verfahren zur Erzeugung eines Zufallsbits mit den Schritten
- Erzeugen einer Pulsfolge mit zufälligen Abständen mittels zumindest zweier SPAD-Dioden,
- wobei die Pulsfolge Pulse einer ersten Höhenklasse 601 und einer zweiten Höhenklasse 602 umfasst;
- Trennen der Pulse der ersten Höhenklasse 601 von den Pulsen der zweiten Höhenklasse 602 mittels eines Schneidepegels 603, 404.1;
- Erfassen 501 eines ersten Werts des zeitlichen Abstands zwischen einem ersten Puls der zweiten Höhenklasse 602 und einem zweiten Puls der zweiten Höhenklasse 602, der von dem ersten Puls verschieden ist;
- Erfassen 501 eines zweiten Werts des zeitlichen Abstands zwischen einem dritten Puls der zweiten Höhenklasse 602, der vom ersten Puls verschieden ist, und einem vierten Puls der zweiten Höhenklasse 602, der vom ersten Puls und vom zweiten Puls und vom dritten Puls verschieden ist,
- Vergleichen 502 des ersten Werts mit dem zweiten Wert und
- Ausgeben 503 eines ersten logischen Werts als ein Zufallsbit, wenn der erste Wert größer als der zweite Wert ist, und
- Ausgeben 503 eines zweiten logischen Werts, der vom ersten logischen Wert verschieden ist, als das Zufallsbit, wenn der erste Wert kleiner als der zweite Wert ist.

8. Verfahren 3700 zur Erzeugung einer Quantenzufallszahl QZ mit m Zufallsbits mit den Schritten
- Erzeugung 3710 eines zufälligen Einzelphotonenstroms 47, 48, 49, 401.2 aus Einzelphotonen mittels einer oder mehrerer erster SPAD-Dioden 401.1, 44;
- Übertragung 3720 des zufälligen Einzelphotonenstroms 47, 48, 49, 401.2 mittels eines vom Halbleitersubstrat 39, 38 verschiedenen Lichtwellenleiters 50, 401.2 an eine oder mehrere zweite SPAD-Dioden 401.3, 45;
- Wandlung 3730 des zufälligen Einzelphotonenstroms 47, 48, 49, 401.2 in ein Detektionssignal mittels der einen oder der mehreren zweiten SPAD-Dioden 401.3, 45;
- Aufbereiten 3740 des Detektionssignals in ein aufbereitetes Detektionssignal;
- Abtrennen 3750 der durch Kopplungen der Emissionen einer ersten SPAD-Diode 401.1 der einen oder der mehreren ersten SPAD-Dioden 401.1, 44 und einer zweiten SPAD-Diode 401.3, 45 der einen oder der mehreren zweiten SPAD-Dioden 401.3, 45 entstandenen Pulse des aufbereiteten Detektionssignals von den durch spontane Emission der zweiten SPAD-Diode 401.3, 45 entstandenen Pulsen des aufbereiteten Detektionssignals durch Vergleich des aufbereiteten Detektionssignals mit einem Schwellwert 404.1;
- Ermittlung 3760 eines ersten zeitlichen Abstands zwischen dem ersten Puls und dem zweiten Puls eines ersten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals und Ermittlung eines zweiten zeitlichen Abstands zwischen einem dritten Puls und einem vierten Puls eines zweiten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals;
- Ermittlung 3670 des Bitwerts eines Zufallsbits durch Vergleich des Werts des ersten zeitlichen Abstands und des Werts des zweiten zeitlichen Abstands;
- Sofern die Anzahl 3680 n der ermittelten Zufallsbits kleiner als die gewünschte Zahl m der Zufallsbits der zu erzeugenden Quantenzufallszahl QZ ist, Wiederholung der vorstehenden Schritte 3710 bis 3770 und Beenden des Prozesses zur Erzeugung einer Quantenzufallszahl sofern die Anzahl 3680 n der ermittelten Zufallsbits größer oder gleich der gewünschten Zahl m der Zufallsbits der zu erzeugenden Quantenzufallszahl QZ ist.

9. Eine Vorrichtung, die Folgendes umfasst:
- eine integrierte Schaltung, die ein Datenverarbeitungsmittel und ein nichtflüchtiges Speichermittel enthält, das mindestens einen Sicherheitscode speichert;
- ein erstes Mittel, das Daten speichert, wobei die Daten in einem ersten Format zumindest durch einen Authentifizierungscode kryptografisch geschützt sind; und
- einen Quantenzufallszahlengenerator 28 als Teil der integrierten Schaltung,
- wobei der Quantenzufallszahlengenerator eine erste SPAD-Diode 44 und eine zweite SPAD-Diode 45 umfasst, die über einen Lichtwellenleiter 50, der außerhalb des Halbleitersubstrats der integrierten Schaltung auf der Oberfläche der integrierten Schaltung gefertigt ist, miteinander gekoppelt sind oder gekoppelt werden können und
- wobei die Vorrichtung zumindest eine Zufallszahl des Quantenzufallszahlengenerators 28 für eine Verschlüsselung oder Entschlüsselung eines Datums oder des Authentifizierungscodes zumindest zeitweise nutzt.

10. Vorrichtung nach Anspruch 9,
- wobei die Vorrichtung eine zweite Einrichtung, insbesondere außerhalb des integrierten Schaltkreises, zur Speicherung von Daten aufweist und
- wobei die Vorrichtung Mittel zum Übertragen von Daten vom ersten Speicher über die integrierte Schaltung zum zweiten Speicher aufweist, damit der Datenprozessor vom zweiten Speicher aus darauf zugreifen kann, und
- wobei die Vorrichtung Mittel zur Validierung der aus dem ersten Speicher gelesenen Daten während der Übertragung unter Verwendung eines in dem nichtflüchtigen Speicher gespeicherten Sicherheitscodes aufweist und
- wobei die Vorrichtung Mittel zum Anwenden eines kryptografischen Schutzes, der mindestens einen Authentifizierungscode umfasst, auf die validierten Daten in einem zweiten Format unter Verwendung eines in dem nichtflüchtigen Speicher gespeicherten Sicherheitscodes, wenn die Daten validiert werden, aufweist und
- wobei die Vorrichtung Mittel zum Speichern der geschützten Daten im zweiten Speicher im zweiten Format ausweist.

11. Vorrichtung nach Anspruch 9 oder 10,
- wobei die Vorrichtung einen Quantenzufallszahlengenerator 400 umfasst und
- wobei der Quantenzufallszahlengenerator folgende Vorrichtungsteile umfasst:
- eine erste SPAD-Diode 404.1,
- eine zweite SPAD-Diode 404.3,
- einen Lichtwellenleiter 404.2, der die erste SPAD-Diode 404.1 und die zweite SPAD-Diode 404.3 optisch miteinander koppelt,
- einen Verstärker 403 und/oder Filter,
- einen Analog-zu-Digital-Wandler 403,
- einen Komparator 404.2,
- einen Zeit-zu-Digital-Wandler 404.3,
- eine Entropie-Extraktionsvorrichtung 404.4, die Ausgangswerte des Zeit-zu-Digital-Wandlers 403 in erste und zweite Werte wandelt und daraus Zufallsbits für die Zufallszahl erzeugt.

12. Vorrichtung nach Anspruch 11, wobei die Vorrichtung einen Watchdog 404.5 umfasst, der Vorrichtungsteile des Quantenzufallszahlengenerators 400 überwacht.

13. Vorrichtung nach Anspruch 11 und 12, wobei die Vorrichtung einen Spannungsmonitor 413 aufweist, der analoge Werte analoger Signale erfasst und überwacht.

14. Vorrichtung nach einem der Ansprüche 11 bis 13, wobei die Vorrichtung einen Zufallszahlengenerator oder einen Pseudozufallszahlengenerator 404.6, insbesondere in Form eines linear rückgekoppelten Schieberegisters 404.6, umfasst.

15. Vorrichtung nach einem der Ansprüche 11 bis 14, wobei die Vorrichtung einen Signalmultiplexer aufweist, der im Falle eines Fehlers von dem Signal des Ausgangs 411 der Entropie-Extraktionsvorrichtung auf ein Signal eines Ersatz-Zufallszahlengenerators oder eines Ersatzpseudozufallszahlengenerators 404.6 umschaltet.

16. Vorrichtung nach einem der Ansprüche 11 bis 15, wobei der Startwert des Pseudozufallszahlengenerators 404.6 im Fehlerfall von zuvor korrekt erzeugten Zufallsbits des Quantenzufallszahlengenerators 400 abhängt.

17. Verfahren 3700 zur Erzeugung einer Quantenzufallszahl QZ mit m Zufallsbits mit den Schritten;
- Erzeugung 3710 eines zufälligen Einzelphotonenstroms 47, 48, 49, 401.2 aus Einzelphotonen mittels einer oder mehrerer erster SPAD-Dioden 401.1, 54;
- Übertragung 3720 des zufälligen Einzelphotonenstroms 47, 48, 49, 401.2 mittels eines Lichtwellenleiters 50, 401.2 an eine oder mehrere zweite SPAD-Dioden 401.3, 45;
- Wandlung 3730 des zufälligen Einzelphotonenstroms 47, 48, 49, 401.2 in ein Detektionssignal mittels der einen oder der mehreren zweiten SPAD-Dioden 401.3, 45;
- Aufbereiten 3740 des Detektionssignals in ein aufbereitetes Detektionssignal;
- Abtrennen 3750 der durch Kopplungen der Emissionen einer ersten SPAD-Diode 401.1 der einen oder der mehreren ersten SPAD-Dioden 401.1, 44 und einer zweiten SPAD-Diode 401.3, 45 der einen oder der mehreren zweiten SPAD-Dioden 401.3, 45 entstandenen Pulse des aufbereiteten Detektionssignals von den durch spontane Emission der zweiten SPAD-Diode 401.3, 45 entstandenen Pulsen des aufbereiteten Detektionssignals durch Vergleich des aufbereiteten Detektionssignals mit einem Schwellwert 404.1;
- Ermittlung 3760 eines ersten zeitlichen Abstands zwischen dem ersten Puls und dem zweiten Puls eines ersten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals und Ermittlung eines zweiten zeitlichen Abstands zwischen einem dritten Puls und einem vierten Puls eines zweiten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals;
- Ermittlung 3670 des Bitwerts eines Zufallsbits durch Vergleich des Werts des ersten zeitlichen Abstands und des Werts des zweiten zeitlichen Abstands;
- Sofern die Anzahl 3680 n der ermittelten Zufallsbits kleiner als die gewünschte Zahl m der Zufallsbits der zu erzeugenden Quantenzufallszahl QZ ist, Wiederholung der vorstehenden Schritte 3710 bis 3770 und Beenden des Prozesses zur Erzeugung einer Quantenzufallszahl sofern die Anzahl 3680 n der ermittelten Zufallsbits größer oder gleich der gewünschten Zahl m der Zufallsbits der zu erzeugenden Quantenzufallszahl QZ ist.

18. Vorrichtung zur Erzeugung einer Quantenzufallszahl QZ,
- mit einer oder mehreren ersten SPAD-Dioden 401.1, 44, die einen optisch quantenprozessbasiert zufälligen Einzelphotonenstroms 47, 48, 49, 401.2 aus Einzelphotonen erzeugen 3710 und
- mit einer oder mehreren zweiten SPAD-Dioden 401.3, 45 und
- mit einem vom Halbleitersubstrat 39, 38 verschiedenen Lichtwellenleiter 50, 401.2, der den zufälligen Einzelphotonenstrom 47, 48, 49, 401.2 an eine oder mehrere zweite SPAD-Dioden 401.3, 45 überträgt 3720, und
- wobei die eine oder die mehreren zweiten SPAD-Dioden 401.3, 45 den zufälligen Einzelphotonenstrom 47, 48, 49, 401.2 in ein Detektionssignal wandeln 3730 und
- wobei eine Signalverarbeitungsvorrichtung, insbesondere ein Verstärker 402, das Detektionssignals in ein aufbereitetes Detektionssignal aufbereitet 3740 und
- wobei ein Komparator 404.02 oder eine funktionsäquivalente Vorrichtung die durch Kopplungen der Emissionen einer ersten SPAD-Diode 401.1 der einen oder der mehreren ersten SPAD-Dioden 401.1, 44 und einer zweiten SPAD-Diode 401.3, 45 der einen oder der mehreren zweiten SPAD-Dioden 401.3, 45 entstandenen Pulse des aufbereiteten Detektionssignals von den durch spontane Emission der zweiten SPAD-Diode 401.3, 45 entstandenen Pulsen des aufbereiteten Detektionssignals durch Vergleich des aufbereiteten Detektionssignals mit einem Schwellwert 404.1 abtrennt 3750 und
- wobei ein Zeit-zu-Digital-Konverter 404.3 einen ersten zeitlichen Abstand zwischen dem ersten Puls und dem zweiten Puls eines ersten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals ermittelt 3760 und einen zweiten zeitlichen Abstands zwischen einem dritten Puls und einem vierten Puls eines zweiten Paares aus zwei aufeinander folgenden, durch Kopplungen der Emissionen einer ersten SPAD-Diode 401.1, 44 und einer zweiten SPAD-Diode 401.3, 45 entstandenen Pulse des aufbereiteten Detektionssignals ermittelt und
- wobei eine Entropie-Extraktions-Vorrichtung 404.4 den Bitwerts eines Zufallsbits durch Vergleich des Werts des ersten zeitlichen Abstands und des Werts des zweiten zeitlichen Abstands ermittelt 3670 und
- wobei eine Finite-State-Machine 404.8 aus dem Bitdatenstrom der Zufallsbits 411 eine Quantenzufallszahl QZ 417 erzeugt.
